# EUROPEAN PATENT APPLICATION

(11) **EP 4 358 559 A1**
(43) Date of publication of application: **24.04.2024**
(21) Application number: 22848486.1
(22) Date of filing: 25.07.2022
(51) Int. Cl.: H04W 12/04, H04W 4/02

(54) **STEREO NETWORKING METHOD, AND ELECTRONIC DEVICE, AUDIO DEVICE AND STORAGE MEDIUM**

(30) Priority: 28.07.2021 CN 202110859206
(71) Applicant: Huawei Technologies Co., Ltd., Shenzhen, Guangdong 518129 (CN)
(72) Inventor: XUE, Jing, Shenzhen, Guangdong 518129 (CN); SHEN, Chuanjun, Shenzhen, Guangdong 518129 (CN); WANG, Jincheng, Shenzhen, Guangdong 518129 (CN); ZHANG, Jingjing, Shenzhen, Guangdong 518129 (CN)
(74) Representative: Gill Jennings & Every LLP
(86) International application number: PCT/CN2022/107641
(87) International publication number: WO 2023/005881

(57) **Abstract**

Embodiments of this application are applicable to the field of communication technologies, and provide a stereo networking method, an electronic device, an audio device, and a storage medium. In a system including the electronic device and the audio device, the audio device generates a Bluetooth broadcast message and sends to the electronic device, where the Bluetooth broadcast message indicates whether the audio device has established stereo and whether the audio device is allowed to establish stereo. When determining, based on the Bluetooth broadcast message, that a second audio device available for establishing stereo exists, the electronic device pops up a stereo establishment pop-up box, to ask a user whether to allow the electronic device to establish stereo or re-establish stereo. Based on short-range communication, the electronic device may directly and automatically discover an audio device available for establishing stereo, and establish stereo with the audio device based on a user requirement. This implements higher flexibility and efficiency of stereo networking and improves user experience.

## Description

This application claims priority to Chinese Patent Application No. 202110859206.X, filed with the China National Intellectual Property Administration on July 28, 2021 and entitled "STEREO NETWORKING METHOD, ELECTRONIC DEVICE, AUDIO DEVICE, AND STORAGE MEDIUM", which is incorporated herein by reference in its entirety.

### TECHNICAL FIELD

Embodiments of this application relate to the field of communication technologies, and in particular, to a stereo networking method, an electronic device, an audio device, and a storage medium.

### BACKGROUND

As a Wireless Fidelity (wireless fidelity, Wi-Fi) technology is widely applied, a Wi-Fi network access function is added to devices such as a smartphone, a speaker, and a television. Wi-Fi speakers are obtained by combining the Wi-Fi technology with conventional speakers.

Currently, an electronic device and a Wi-Fi speaker may establish stereo by using a Wi-Fi router, to implement different sound effects. When the electronic device and the Wi-Fi speaker establish stereo, the electronic device and the Wi-Fi speaker need to access a same wireless local area network established by the Wi-Fi router, the electronic device and the Wi-Fi speaker use a same user account, and the Wi-Fi router can forward packets between the electronic device and the Wi-Fi speaker. Conditions for the electronic device and the Wi-Fi speaker to establish stereo are harsh and do not facilitate establishment of the stereo.

### SUMMARY

Embodiments of this application provide a stereo networking method, an electronic device, an audio device, and a storage medium, to implement higher flexibility and efficiency of stereo networking and improve user experience.

According to a first aspect, a stereo networking method is provided. The method is applied to an electronic device. The method includes: receiving a Bluetooth broadcast message separately sent by at least one audio device, where the Bluetooth broadcast message indicates whether the audio device has established stereo and whether the audio device is allowed to establish stereo; and when determining, based on the at least one Bluetooth broadcast message, that a second audio device available for establishing stereo exists in the at least one audio device, displaying a stereo establishment pop-up box, where the stereo establishment pop-up box is used to ask a user whether to allow the electronic device to establish stereo or re-establish stereo.

According to the stereo networking method provided in the first aspect, the electronic device and the audio device may perform short-range communication. Based on short-range communication, the electronic device may directly and automatically discover an audio device available for establishing stereo, ask the user whether to establish stereo, and establish stereo with the audio device based on a user requirement. According to the stereo networking method provided in an embodiment of this application, it is not required that the electronic device and the audio device access a same local area network and have a same user account. In a configuration process of stereo networking, operations of configuring a network for the electronic device and the audio device in advance and configuring a combination of a plurality of audio devices are omitted. This simplifies a user configuration step, implements higher flexibility and efficiency of networking, and improves user experience.

In a possible implementation, the method further includes: receiving a stereo establishment instruction input by the user, where the stereo establishment instruction instructs the electronic device to establish stereo or re-establish stereo; determining a target networking mode, at least one target audio device, and a sound channel corresponding to each target audio device, where the target audio device is an audio device that is determined by the user in the second audio device and that establishes stereo with the electronic device, and the target networking mode is a networking mode in which the electronic device and the at least one target audio device establish stereo; and establishing a Wi-Fi connection to each target audio device.

In this implementation, when the user determines that the electronic device establishes stereo or re-establishes stereo, the target networking mode and the to-be-networked target audio device determined by the user are determined, and the Wi-Fi connection to the target audio device is established to establish stereo. Because the target audio device is determined by the user, the electronic device and the target audio device determined by the user establish the Wi-Fi connection in compliance with an intention and a requirement of the user. This avoids that a Wi-Fi connection to another audio device affects proper operation of the another audio device. This improves stereo networking accuracy.

In a possible implementation, the networking mode includes: a first networking mode, where in the first networking mode, the electronic device establishes stereo with one target audio device, and a sound channel of the one target audio device is a heavy bass sound channel; a second networking mode, where in the second networking mode, the electronic device establishes stereo with two target audio devices, and sound channels of the two target audio devices are a left sound channel and a right sound channel respectively; a third networking mode, where in the third networking mode, the electronic device establishes stereo with two target audio devices, and sound channels of the two target audio devices are a left surround sound channel and a right surround sound channel respectively; and a fourth networking mode, where in the fourth networking mode, the electronic device establishes stereo with four target audio devices, and sound channels of the four target audio devices are a left sound channel, a right sound channel, a left surround sound channel, and a right surround sound channel respectively.

In a possible implementation, the determining a target networking mode, at least one target audio device, and a sound channel corresponding to each target audio device includes: obtaining the target networking mode input by the user; determining a quantity of the target audio devices and a preset determining sequence of the at least one target audio device based on the target networking mode; sending to-be-networked notification information to the second audio device, where the to-be-networked notification information indicates the second audio device to detect whether the user performs a preset operation on a target button on the second audio device; displaying a first audio device identification screen, where the first audio device identification screen is used to guide the user to sequentially perform, according to the preset determining sequence, the preset operation on the target button on the at least one target audio device; receiving device identification information sequentially sent by the at least one second audio device according to the preset determining sequence, where the device identification information indicates that the second audio device is the target audio device; and determining the at least one target audio device based on the device identification information, and determining, according to the preset determining sequence, the sound channel corresponding to each target audio device.

In this implementation, the user inputs the target networking mode. The electronic device displays the first audio device identification screen, to guide the user to sequentially perform, according to the preset determining sequence, the preset operation on the target button on the at least one target audio device, to determine the target audio device networked with the electronic device. The user performs an operation on the audio device to determine that the audio device is the target audio device. This improves accuracy of determining the target audio device by the user, further improves accuracy of networking between the electronic device and the target audio device, and avoids incorrect networking. When the electronic device is networked with a plurality of target audio devices, the target audio devices are sequentially determined by the user according to the preset determining sequence. This is a simple implementation.

In a possible implementation, the preset determining sequence includes any one of the following: when there are two target audio devices, sequentially determining the target audio devices of the left sound channel and the right sound channel; when there are two target audio devices, sequentially determining the target audio devices of the left surround sound channel and the right surround sound channel; or when there are four target audio devices, sequentially determining the target audio devices of the left sound channel, the right sound channel, the left surround sound channel, and the right surround sound channel.

In a possible implementation, the method further includes: outputting first prompt information, where the first prompt information indicates that the electronic device successfully determines the at least one target audio device.

In a possible implementation, the determining at least one target audio device and a sound channel corresponding to each target audio device includes: sending to-be-networked notification information to the second audio device, where the to-be-networked notification information indicates the second audio device to detect whether the user performs a preset operation on a target button on the second audio device; displaying a second audio device identification screen, where the second audio device identification screen is used to guide the user to perform the preset operation on the target button on the second audio device; receiving device identification information separately sent by the at least one second audio device, where the device identification information indicates that the second audio device is the target audio device; and determining the at least one target audio device based on the device identification information, and determining the sound channel corresponding to each target audio device.

In this implementation, the user performs an operation on the audio device to determine that the audio device is the target audio device. However, a sequence of user operations on the audio device is not limited. The electronic device determines a location relationship between a plurality of target audio devices and the electronic device by using a positioning technology, and then determines the sound channel corresponding to the target audio device. This reduces a limitation on the sequence of the user operations, provides a flexible implementation, and improves user experience.

In a possible implementation, the determining a sound channel corresponding to each target audio device includes: if the quantity of the target audio devices is one, determining that the target audio device corresponds to a heavy bass sound channel; or if the quantity of the target audio devices is greater than one, determining the location relationship between each target audio device and the electronic device by using the positioning technology, and determining, based on the location relationship, the sound channel corresponding to each target audio device.

In a possible implementation, the determining the location relationship between each target audio device and the electronic device by using the positioning technology includes: sending ultrasonic detection information to the target audio device; receiving an ultrasonic signal sent by the target audio device; and determining the location relationship between the target audio device and the electronic device based on the ultrasonic signal.

In this implementation, the location relationship between each target audio device and the electronic device is determined by using an ultrasonic positioning technology.

In a possible implementation, after the determining the at least one target audio device based on the device identification information, the method further includes: outputting second prompt information, where the second prompt information indicates that the electronic device successfully determines the at least one target audio device.

In a possible implementation, the sending to-be-networked notification information to the second audio device includes: sending a BLE broadcast message to the second audio device, where the BLE broadcast message includes the to-be-networked notification information.

In this implementation, a BLE connection may not be established between the electronic device and the second audio device. This saves a message process.

In a possible implementation, the target button is any one of the following: a mute button, a play button, or a pause button.

In this implementation, the user may reuse an existing button on the audio device to determine that the audio device is the target audio device. This avoids modification of the audio device.

In a possible implementation, before the displaying a stereo establishment pop-up box, the method further includes: sending a first ultrasonic signal to the second audio device; and receiving a second ultrasonic signal sent by at least one third audio device in the second audio device.

In this implementation, before the electronic device asks the user whether to establish stereo, a second audio device that is discovered by the electronic device and not in a same room as the electronic device and that is in the second audio device available for establishing stereo may be filtered out by using a same-room detection mechanism. This further improves accuracy and rationality of establishing stereo by the electronic device and the audio device.

In a possible implementation, the method further includes: determining a location relationship between the third audio device and the electronic device based on the second ultrasonic signal.

In a possible implementation, the determining at least one target audio device and a sound channel corresponding to each target audio device includes: displaying a third audio device identification screen, where the third audio device identification screen includes the at least one third audio device, and the third audio device identification screen is used to guide the user to determine whether the third audio device is the target audio device; receiving a feedback instruction input by the user, where the feedback instruction is used to determine whether the third audio device is the target audio device; and determining the at least one target audio device according to the feedback instruction, and determining the sound channel corresponding to each target audio device.

In this implementation, the user does not need to perform an operation on the audio device to determine that the audio device is the target audio device. The electronic device displays the third audio device identification screen, and displays the third audio device located in a same space as the electronic device, to guide the user to determine whether the third audio device is the target audio device. This simplifies user operations and improves user experience.

In a possible implementation, the third audio device identification screen further indicates the location relationship between the at least one third audio device and the electronic device.

In this implementation, the location relationship between the third audio device and the electronic device may be displayed on the third audio device identification screen, and the user may visually and intuitively compare an actual environment with the third audio device identification screen. This helps the user determine whether the third audio device is the target audio device. This further improves user experience.

In a possible implementation, the determining a sound channel corresponding to each target audio device includes: if the quantity of the target audio devices is one, determining that the target audio device corresponds to a heavy bass sound channel; or if the quantity of the target audio devices is greater than one, obtaining a location relationship between each target audio device and the electronic device, and determining, based on the location relationship, the sound channel corresponding to each target audio device.

In a possible implementation, the determining a target networking mode includes: obtaining the target networking mode input by the user.

In a possible implementation, the determining a target networking mode includes: if the quantity of the target audio devices is one, determining that the target networking mode is the first networking mode, where in the first networking mode, the sound channel of the target audio device is the heavy bass sound channel; or if the quantity of the target audio devices is greater than one, determining the target networking mode based on the location relationship between each target audio device and the electronic device.

In a possible implementation, the method further includes: displaying a sound channel determining screen, where the sound channel determining screen is used to guide the user to determine whether the sound channel corresponding to the target audio device is correct; and receiving a sound channel determining instruction input by the user, where the sound channel determining instruction is used to determine whether the sound channel corresponding to the target audio device is correct.

In this implementation, the sound channel determining screen is displayed to the user, so that a location and the sound channel that are of the target audio device and that are determined by the electronic device by using the positioning technology are further determined by the user. This improves stereo establishment accuracy. This avoids a stereo establishment error caused by an error in positioning the audio device by the electronic device.

In a possible implementation, before the establishing a Wi-Fi connection to each target audio device, the method further includes: when determining that no WLAN is configured for the target audio device, configuring a target WLAN for the target audio device, where the target WLAN is a WLAN that has been configured for the electronic device.

In this implementation, if no WLAN is configured for the target audio device, the electronic device may configure a network for the target audio device, so that the target audio device and the electronic device access the same WLAN, to facilitate subsequent communication.

In a possible implementation, the configuring a target WLAN for the target audio device includes: displaying an audio device network configuration screen, where the audio device network configuration screen is used to configure the target WLAN for the target audio device; receiving a network connection operation of the user; and controlling, in response to the network connection operation, the target audio device to access the target WLAN.

In a possible implementation, the Bluetooth broadcast message includes networking identification information, networking indication information, and a product model of the audio device, the networking identification information indicates whether the audio device has established stereo, and the networking indication information indicates whether the audio device is allowed to establish stereo.

In a possible implementation, the determining, based on the at least one Bluetooth broadcast message, that a second audio device available for establishing stereo exists in the at least one audio device includes: if the networking indication information in the Bluetooth broadcast message indicates that the audio device is allowed to establish stereo, determining that the second audio device exists.

In a possible implementation, before the determining that the second audio device exists, the method further includes: determining that a signal strength of the Bluetooth broadcast message is greater than a preset threshold.

In this implementation, if the signal strength of the Bluetooth broadcast message is greater than the preset threshold, it indicates that the audio device and the electronic device are in a short distance and can establish stereo. The signal strength of the Bluetooth broadcast message is determined, so that accuracy of discovering the second electronic device by the electronic device can be improved. This helps properly and successfully establish stereo.

In a possible implementation, before the determining that the second audio device exists, the method further includes: determining that the electronic device does not currently perform a projection service.

In a possible implementation, the Bluetooth broadcast message further includes network configuration information, and the network configuration information indicates whether a WLAN has been configured for the audio device.

According to a second aspect, a stereo networking method is provided. The method is applied to an audio device. The method includes: generating a Bluetooth broadcast message, where the Bluetooth broadcast message indicates whether the audio device has established stereo and whether the audio device is allowed to establish stereo; and sending the Bluetooth broadcast message to an electronic device.

According to the stereo networking method provided in the second aspect, the electronic device and the audio device may perform short-range communication, and the audio device sends the Bluetooth broadcast message to the electronic device. Therefore, based on short-range communication, the electronic device may directly and automatically discover, based on the Bluetooth broadcast message, an audio device available for establishing stereo, and ask the user whether to establish stereo. According to the stereo networking method provided in an embodiment of this application, it is not required that the electronic device and the audio device access a same local area network and have a same user account. This implements higher flexibility and efficiency of networking and improves user experience.

In a possible implementation, the method further includes: establishing a Wi-Fi connection to the electronic device.

In a possible implementation, before the establishing a Wi-Fi connection to the electronic device, the method further includes: receiving to-be-networked notification information sent by the electronic device, where the to-be-networked notification information indicates to detect whether a user performs a preset operation on a target button; and if detecting that the user performs the preset operation on the target button, sending device identification information to the electronic device, where the device identification information indicates that the audio device is a target audio device that establishes stereo with the electronic device.

In a possible implementation, the receiving to-be-networked notification information sent by the electronic device includes: receiving a BLE broadcast message sent by the electronic device, where the BLE broadcast message includes the to-be-networked notification information.

In a possible implementation, the target button is any one of the following: a mute button, a play button, or a pause button.

In a possible implementation, before the establishing a Wi-Fi connection to the electronic device, the method further includes: receiving ultrasonic detection information sent by the electronic device; and sending an ultrasonic signal to the electronic device.

In a possible implementation, before the establishing a Wi-Fi connection to the electronic device, the method further includes: receiving a first ultrasonic signal sent by the electronic device; and sending a second ultrasonic signal to the electronic device.

In a possible implementation, the Bluetooth broadcast message includes networking identification information, networking indication information, and a product model of the audio device, the networking identification information indicates whether the audio device has established stereo, and the networking indication information indicates whether the audio device is allowed to establish stereo.

In a possible implementation, the Bluetooth broadcast message further includes network configuration information, and the network configuration information indicates whether a WLAN has been configured for the audio device.

According to a third aspect, an apparatus is provided. The apparatus includes: a first receiving module, configured to receive a Bluetooth broadcast message separately sent by at least one audio device, where the Bluetooth broadcast message indicates whether the audio device has established stereo and whether the audio device is allowed to establish stereo; and a processing module, configured to: when determining, based on the at least one Bluetooth broadcast message, that a second audio device available for establishing stereo exists in the at least one audio device, display a stereo establishment pop-up box, where the stereo establishment pop-up box is used to ask a user whether to allow the electronic device to establish stereo or re-establish stereo.

In a possible implementation, the apparatus further includes a second receiving module. The second receiving module is configured to receive a stereo establishment instruction input by the user, where the stereo establishment instruction instructs the electronic device to establish stereo or re-establish stereo. The processing module is further configured to determine a target networking mode, at least one target audio device, and a sound channel corresponding to each target audio device, where the target audio device is an audio device that is determined by the user in the second audio device and that establishes stereo with the electronic device, and the target networking mode is a networking mode in which the electronic device and the at least one target audio device establish stereo. The processing module is further configured to establish a Wi-Fi connection to each target audio device.

In a possible implementation, the networking mode includes: a first networking mode, where in the first networking mode, the electronic device establishes stereo with one target audio device, and a sound channel of the one target audio device is a heavy bass sound channel; a second networking mode, where in the second networking mode, the electronic device establishes stereo with two target audio devices, and sound channels of the two target audio devices are a left sound channel and a right sound channel respectively; a third networking mode, where in the third networking mode, the electronic device establishes stereo with two target audio devices, and sound channels of the two target audio devices are a left surround sound channel and a right surround sound channel respectively; and a fourth networking mode, where in the fourth networking mode, the electronic device establishes stereo with four target audio devices, and sound channels of the four target audio devices are a left sound channel, a right sound channel, a left surround sound channel, and a right surround sound channel respectively.

In a possible implementation, the processing module is configured to: obtain the target networking mode input by the user; determine a quantity of the target audio devices and a preset determining sequence of the at least one target audio device based on the target networking mode; send to-be-networked notification information to the second audio device, where the to-be-networked notification information indicates the second audio device to detect whether the user performs a preset operation on a target button on the second audio device; display a first audio device identification screen, where the first audio device identification screen is used to guide the user to sequentially perform, according to the preset determining sequence, the preset operation on the target button on the at least one target audio device; receive device identification information sequentially sent by the at least one second audio device according to the preset determining sequence, where the device identification information indicates that the second audio device is the target audio device; and determine the at least one target audio device based on the device identification information, and determine, according to the preset determining sequence, the sound channel corresponding to each target audio device.

In a possible implementation, the preset determining sequence includes any one of the following: when there are two target audio devices, sequentially determining the target audio devices of the left sound channel and the right sound channel; when there are two target audio devices, sequentially determining the target audio devices of the left surround sound channel and the right surround sound channel; or when there are four target audio devices, sequentially determining the target audio devices of the left sound channel, the right sound channel, the left surround sound channel, and the right surround sound channel.

In a possible implementation, the processing module is further configured to: output first prompt information, where the first prompt information indicates that the electronic device successfully determines the at least one target audio device.

In a possible implementation, the processing module is configured to: send to-be-networked notification information to the second audio device, where the to-be-networked notification information indicates the second audio device to detect whether the user performs a preset operation on a target button on the second audio device; display a second audio device identification screen, where the second audio device identification screen is used to guide the user to perform the preset operation on the target button on the second audio device; receive device identification information separately sent by the at least one second audio device, where the device identification information indicates that the second audio device is the target audio device; and determine the at least one target audio device based on the device identification information, and determine the sound channel corresponding to each target audio device.

In a possible implementation, the processing module is configured to: if the quantity of the target audio devices is one, determine that the target audio device corresponds to a heavy bass sound channel; or if the quantity of the target audio devices is greater than one, determine a location relationship between each target audio device and the electronic device by using a positioning technology, and determine, based on the location relationship, the sound channel corresponding to each target audio device.

In a possible implementation, the processing module is configured to: send ultrasonic detection information to the target audio device; receive an ultrasonic signal sent by the target audio device; and determine the location relationship between the target audio device and the electronic device based on the ultrasonic signal.

In a possible implementation, after the determining the at least one target audio device based on the device identification information, the processing module is further configured to: output second prompt information, where the second prompt information indicates that the electronic device successfully determines the at least one target audio device.

In a possible implementation, the apparatus further includes a sending module. The sending module is configured to: send a BLE broadcast message to the second audio device, where the BLE broadcast message includes the to-be-networked notification information.

In a possible implementation, the target button is any one of the following: a mute button, a play button, or a pause button.

In a possible implementation, the apparatus further includes a sending module. The sending module is configured to: before the displaying a stereo establishment pop-up box, send a first ultrasonic signal to the second audio device. The first receiving module is further configured to receive a second ultrasonic signal sent by at least one third audio device in the second audio device.

In a possible implementation, the processing module is further configured to: determine a location relationship between the third audio device and the electronic device based on the second ultrasonic signal.

In a possible implementation, the processing module is configured to: display a third audio device identification screen, where the third audio device identification screen includes the at least one third audio device, and the third audio device identification screen is used to guide the user to determine whether the third audio device is the target audio device; receive a feedback instruction input by the user, where the feedback instruction is used to determine whether the third audio device is the target audio device; and determine the at least one target audio device according to the feedback instruction, and determine the sound channel corresponding to each target audio device.

In a possible implementation, the third audio device identification screen further indicates the location relationship between the at least one third audio device and the electronic device.

In a possible implementation, the processing module is configured to: if the quantity of the target audio devices is one, determine that the target audio device corresponds to a heavy bass sound channel; or if the quantity of the target audio devices is greater than one, obtain a location relationship between each target audio device and the electronic device, and determine, based on the location relationship, the sound channel corresponding to each target audio device.

In a possible implementation, the processing module is configured to: obtain the target networking mode input by the user.

In a possible implementation, the processing module is configured to: if the quantity of the target audio devices is one, determine that the target networking mode is the first networking mode, where in the first networking mode, the sound channel of the target audio device is the heavy bass sound channel; or if the quantity of the target audio devices is greater than one, determine the target networking mode based on the location relationship between each target audio device and the electronic device.

In a possible implementation, the processing module is further configured to display a sound channel determining screen, where the sound channel determining screen is used to guide the user to determine whether the sound channel corresponding to the target audio device is correct. The second receiving module is further configured to receive a sound channel determining instruction input by the user, where the sound channel determining instruction is used to determine whether the sound channel corresponding to the target audio device is correct.

In a possible implementation, the processing module is further configured to: before the establishing a Wi-Fi connection to each target audio device, when determining that no WLAN is configured for the target audio device, configure a target WLAN for the target audio device, where the target WLAN is a WLAN that has been configured for the electronic device.

In a possible implementation, the processing module is configured to: display an audio device network configuration screen, where the audio device network configuration screen is used to configure the target WLAN for the target audio device; receive a network connection operation of the user; and control, in response to the network connection operation, the target audio device to access the target WLAN.

In a possible implementation, the Bluetooth broadcast message includes networking identification information, networking indication information, and a product model of the audio device, the networking identification information indicates whether the audio device has established stereo, and the networking indication information indicates whether the audio device is allowed to establish stereo.

In a possible implementation, the processing module is configured to: if the networking indication information in the Bluetooth broadcast message indicates that the audio device is allowed to establish stereo, determine that the second audio device exists.

In a possible implementation, the processing module is further configured to: before the determining that the second audio device exists, determine that a signal strength of the Bluetooth broadcast message is greater than a preset threshold.

In a possible implementation, the processing module is further configured to: before the determining that the second audio device exists, determine that the electronic device does not currently perform a projection service.

In a possible implementation, the Bluetooth broadcast message further includes network configuration information, and the network configuration information indicates whether a WLAN has been configured for the audio device.

According to a fourth aspect, an apparatus is provided. The apparatus includes: a processing module, configured to generate a Bluetooth broadcast message, where the Bluetooth broadcast message indicates whether an audio device has established stereo and whether the audio device is allowed to establish stereo; and a sending module, configured to send the Bluetooth broadcast message to an electronic device.

In a possible implementation, the processing module is further configured to: establish a Wi-Fi connection to the electronic device.

In a possible implementation, the apparatus further includes a receiving module. The receiving module is configured to: before the establishing a Wi-Fi connection to an electronic device, receive to-be-networked notification information sent by the electronic device, where the to-be-networked notification information indicates to detect whether a user performs a preset operation on a target button. The sending module is further configured to: if detecting that the user performs the preset operation on the target button, send device identification information to the electronic device, where the device identification information indicates that the audio device is a target audio device that establishes stereo with the electronic device.

In a possible implementation, the sending module is configured to: receive a BLE broadcast message sent by the electronic device, where the BLE broadcast message includes the to-be-networked notification information.

In a possible implementation, the target button is any one of the following: a mute button, a play button, or a pause button.

In a possible implementation, the apparatus further includes a receiving module. The receiving module is configured to: before the establishing a Wi-Fi connection to an electronic device, receive ultrasonic detection information sent by the electronic device. The sending module is further configured to send an ultrasonic signal to the electronic device.

In a possible implementation, the apparatus further includes a receiving module. The receiving module is configured to: before the establishing a Wi-Fi connection to an electronic device, receive a first ultrasonic signal sent by the electronic device. The sending module is further configured to send a second ultrasonic signal to the electronic device.

In a possible implementation, the Bluetooth broadcast message includes networking identification information, networking indication information, and a product model of the audio device, the networking identification information indicates whether the audio device has established stereo, and the networking indication information indicates whether the audio device is allowed to establish stereo.

In a possible implementation, the Bluetooth broadcast message further includes network configuration information, and the network configuration information indicates whether a WLAN has been configured for the audio device.

According to a fifth aspect, an electronic device is provided. The electronic device includes a processor. The processor is configured to: couple to a memory, read instructions in the memory, and enable, according to the instructions, the electronic device to perform the method provided in the first aspect.

According to a sixth aspect, an audio device is provided. The audio device includes a processor. The processor is configured to: couple to a memory, read instructions in the memory, and enable, according to the instructions, the audio device to perform the method provided in the second aspect.

According to a seventh aspect, a program is provided. When being executed by a processor, the program is used to perform the method provided in any one of the foregoing aspects.

According to an eighth aspect, a computer-readable storage medium is provided. The computer-readable storage medium stores instructions. When the instructions are run on a computer or a processor, the method provided in any one of the foregoing aspects is implemented.

According to a ninth aspect, a program product is provided. The program product includes a computer program. The computer program is stored in a readable storage medium. At least one processor of a device may read the computer program from the readable storage medium. The at least one processor executes the computer program to enable the device to implement the method according to any of the foregoing aspects.

### BRIEF DESCRIPTION OF DRAWINGS

FIG. 1 is a diagram of a system architecture of stereo networking;
FIG. 2 is a schematic flowchart of configuration in which a smart screen Y establishes stereo with a speaker b and a speaker c in FIG. 1;
FIG. 3 is a diagram of a system architecture of stereo networking according to an embodiment of this application;
FIG. 4 to FIG. 13 are schematic diagrams of a group of application scenarios according to an embodiment of this application;
FIG. 14A to FIG. 14H are schematic diagrams of a group of screens for setting stereo networking in an electronic device according to an embodiment of this application;
FIG. 15 is a flowchart of a stereo networking method according to an embodiment of this application;
FIG. 16 is another flowchart of a stereo networking method according to an embodiment of this application;
FIG. 17A to FIG. 17I are schematic diagrams of a group of screens of a stereo establishment pop-up box according to an embodiment of this application;
FIG. 18 is a schematic diagram of an audio device network configuration screen according to an embodiment of this application;
FIG. 19 is still another flowchart of a stereo networking method according to an embodiment of this application;
FIG. 20A to FIG. 20E are schematic diagrams of a group of audio device identification screens according to an embodiment of this application;
FIG. 21 is still another flowchart of a stereo networking method according to an embodiment of this application;
FIG. 22A to FIG. 22D are schematic diagrams of another group of audio device identification screens according to an embodiment of this application;
FIG. 23A and FIG. 23B are schematic diagrams of a group of sound channel determining screens according to an embodiment of this application;
FIG. 24 is still another flowchart of a stereo networking method according to an embodiment of this application;
FIG. 25 is still another flowchart of a stereo networking method according to an embodiment of this application;
FIG. 26A to FIG. 26D are schematic diagrams of still another group of audio device identification screens according to an embodiment of this application;
FIG. 27A and FIG. 27B are schematic diagrams of still another group of audio device identification screens according to an embodiment of this application;
FIG. 28 is a schematic diagram of a structure of an apparatus according to an embodiment of this application; and
FIG. 29 is a schematic diagram of another structure of an apparatus according to an embodiment of this application; and
FIG. 30 is a schematic diagram of a structure of a device according to an embodiment of this application.

### DESCRIPTION OF EMBODIMENTS

The following describes embodiments of this application with reference to accompanying drawings.

A stereo networking method provided in embodiments of this application is applicable to a scenario in which an electronic device and an audio device perform stereo networking. Names and types of the electronic device and the audio device are not limited in embodiments of this application. For example, examples of some electronic devices are: a smart screen, a television, a projection device, and the like. Examples of some audio devices are: a speaker, a wireless headset, and the like.

For ease of description, in embodiments of this application, an example in which the electronic device is a smart screen and the audio device is a speaker is used.

First, concepts in embodiments of this application are described.

### 1. Stereo networking

Stereo networking is also referred to as networking or stereo establishment, and means that the electronic device uses the audio device to play a sound, or uses the audio device and a local horn of the electronic device to play a sound together, to implement different sound playing effects.

### 2. Stereo networking mode

The stereo networking mode is also referred to as a networking mode. The networking mode varies with a quantity and/or locations of audio devices in stereo networking. The following describes examples of four types of networking modes, but does not limit the networking mode. A name of each networking mode is not limited in embodiments of this application.

### (1) Networking mode 1

This networking mode is also referred to as a single speaker networking mode or a subwoofer networking mode.

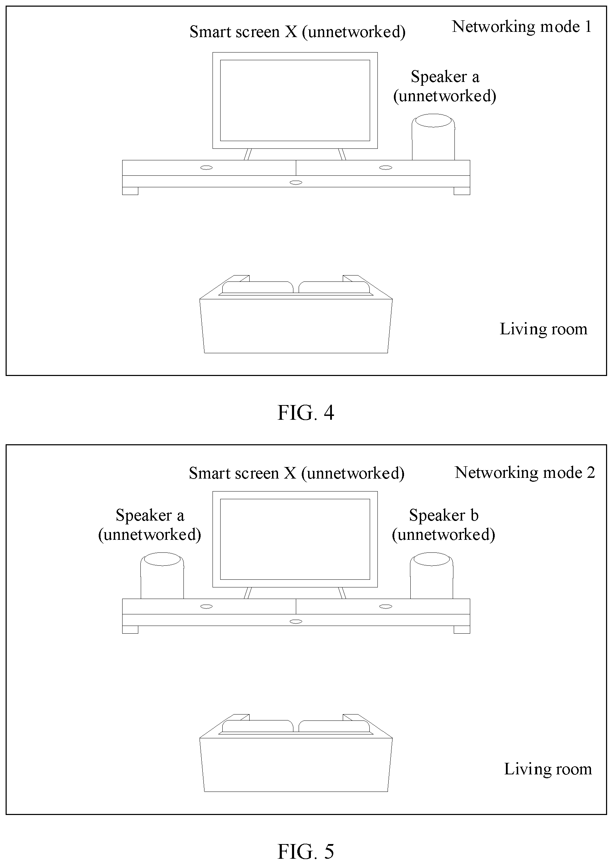

In this mode, the electronic device establishes stereo with one audio device, and the audio device enhances a bass band to improve sound playback effect of heavy bass. A sound channel corresponding to the audio device may be referred to as a heavy bass sound channel. For example, refer to FIG. 4.

### (2) Networking mode 2

This networking mode is also referred to as a front dual-speaker networking mode, a front mode, or a left and right sound channel networking mode.

In this mode, the electronic device establishes stereo with two audio devices. Sound channels corresponding to the two audio devices are referred to as a left sound channel and a right sound channel respectively. Sounds in left and right directions are used to create stereo effect.

Optionally, the two audio devices are located on left and right sides of the electronic device respectively. For example, refer to FIG. 5.

Optionally, models of the two audio devices are the same.

### (3) Networking mode 3

This networking mode is also referred to as a rear dual-speaker networking mode, a rear mode, or a left and right surround sound channel networking mode.

In this mode, the electronic device establishes stereo with two audio devices. The two audio devices are located near a seat of a listener. Corresponding sound channels are referred to as a left surround sound channel and a right surround sound channel respectively. The listener feels surrounded by sounds in left and right directions.

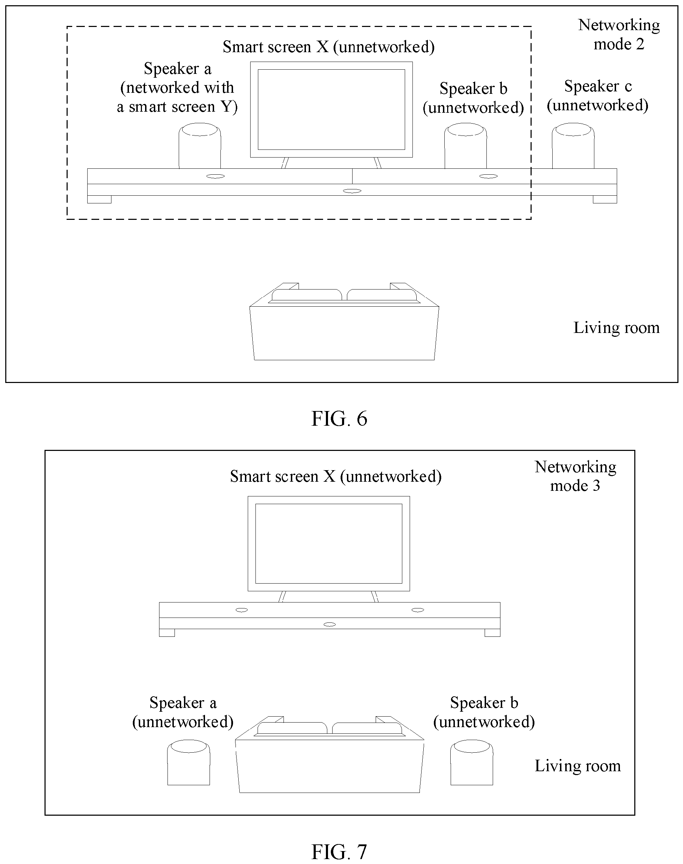

Optionally, the two audio devices are located on left and right sides of the seat of the listener respectively. For example, refer to FIG. 7.

Optionally, models of the two audio devices are the same.

### (4) Networking mode 4

This networking mode is also referred to as a four-speaker networking mode.

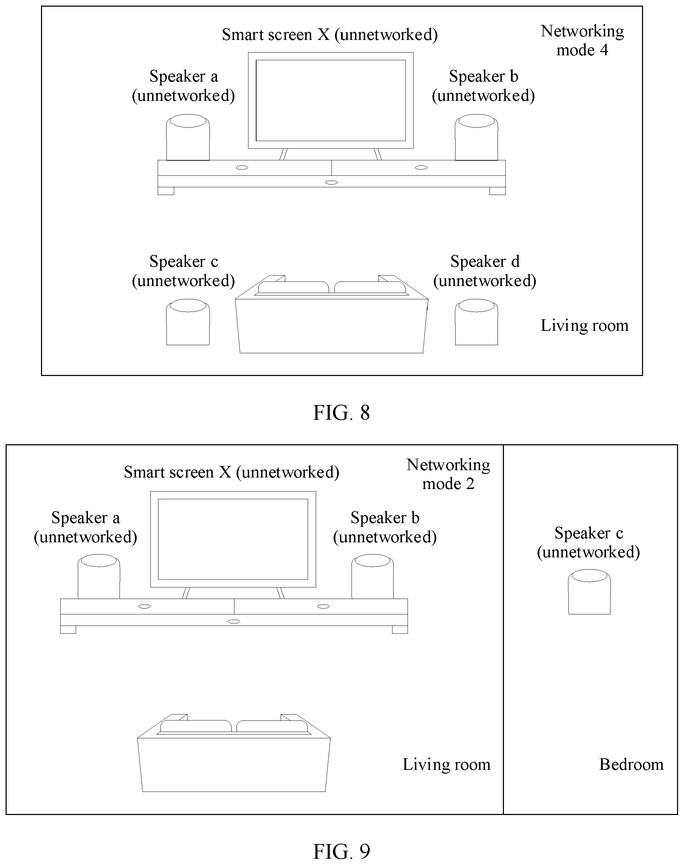

In this mode, the electronic device establishes stereo with four audio devices. Two audio devices are configured as a left sound channel and a right sound channel respectively, and the other two audio devices are configured as a left surround sound channel and a right surround sound channel respectively. For example, refer to FIG. 8.

Optionally, models of the two audio devices configured as the left and right sound channels are the same, and models of the two audio devices configured as the left and right surround sound channels are the same.

Optionally, models of the four audio devices are the same.

### 3. Networking

Networking includes networking of the electronic device and networking of the audio device. Networking of the electronic device means that an account and a password of a wireless local area network (wireless local area network, WLAN) are configured for the electronic device, so that the electronic device can access the WLAN. Similarly, networking of the audio device means that an account and a password of a WLAN are configured for the audio device, so that the audio device can access the WLAN.

Optionally, in embodiments of this application, the electronic device may configure the WLAN for the audio device, so that the audio device can be connected to a router, and the electronic device and the audio device can access a same WLAN, to facilitate communication. Optionally, after the audio device cuts off a Wi-Fi connection to the electronic device, the audio device may be connected to the router.

### 4. Reconnection, first networking record, and second networking record

After the electronic device and the audio device successfully establish stereo, the electronic device and the audio device locally store stereo networking records that are also referred to as networking records. Content of the networking records separately stored by the electronic device and the audio device is not limited in embodiments of this application. When the electronic device is powered on again, the electronic device may attempt to establish stereo with the audio device based on the locally stored networking record. This process is referred to as reconnection. Similarly, when the audio device is powered on again, the audio device may attempt to reconnect to the electronic device based on the locally stored networking record. For example, a smart screen X establishes stereo with a speaker a and a speaker b. When the smart screen X, the speaker a, and the speaker b are powered on again, the smart screen X, the speaker a, and the speaker b attempt to reconnect.

For ease of description, the networking record in the electronic device may be referred to as the first networking record, and the networking record in the audio device may be referred to as the second network record.

### 5. Self-networking function and self-networking process

The self-networking function is a function in which the electronic device can automatically discover an audio device available for establishing stereo and establish stereo with the audio device. For example, when the electronic device establishes stereo with the audio device for the first time, or when another audio device available for establishing stereo is discovered after the electronic device and the audio device fail in reconnection, or when another audio device available for establishing stereo is discovered after the electronic device and the audio device successfully establish stereo, the electronic device may perform a self-networking process to implement the self-networking function.

A name of the self-networking function is not limited in embodiments of this application. For example, the self-networking function is also referred to as an automatic stereo establishment function.

Optionally, a function switch may be disposed on the electronic device, to set whether to enable or support the self-networking function in the electronic device. The function switch is set, so that a user is provided with a choice possibility, and flexibility of stereo networking is improved.

### 6. First audio device, second audio device, third audio device, and target audio device

In embodiments of this application, for ease of description, an audio device that is discovered by the electronic device and that can be used for performing reconnection is referred to as the first audio device. An audio device that is discovered by the electronic device and that can be used for establishing stereo is referred to as the second audio device. An audio device that is discovered by the electronic device and located in a same room as the electronic device and that can be used for establishing stereo is referred to as the third audio device. An audio device that is determined by the user and that establishes stereo sound with the electronic device is referred to as the target audio device.

### 7. Historical networking mode and target networking mode

In embodiments of this application, for ease of description, a networking mode in the first networking record stored in the electronic device is referred to as the historical networking mode, and a networking mode used when the electronic device performs the self-networking process is referred to as the target networking mode.

The following describes an implementation in which an electronic device and an audio device perform stereo networking.

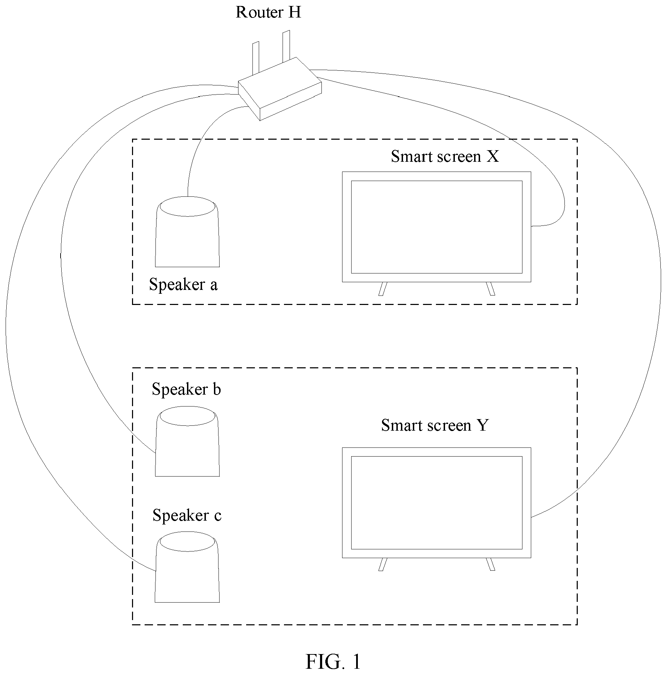

For example, FIG. 1 is a diagram of a system architecture of stereo networking. As shown in FIG. 1, a system includes a routing device, an electronic device, and an audio device. A type and a quantity of devices in the system are not limited. In FIG. 1, the routing device includes a router H. There are two electronic devices, including a smart screen X and a smart screen Y There are three audio devices, including a speaker a, a speaker b, and a speaker c. The smart screen X establishes stereo with the speaker a, and the smart screen Y establishes stereo with the speaker b and the speaker c, as shown in dashed boxes in FIG. 1. The router H establishes a WLAN. The smart screen X, the smart screen Y, the speaker a, the speaker b, and the speaker c all establish WLAN connections to the router H, and access the WLAN.

The speaker a is used as an example. The speaker a may access a server on the internet (internet) by using the router H, and obtain audio data from the server and play the audio data. Alternatively, the speaker a obtains audio data from the smart screen X by using the router H, and plays the audio data. Alternatively, after establishing stereo with the smart screen X, the speaker a obtains audio data from the smart screen X and plays the audio data.

The smart screen Y is used as an example. The smart screen Y may send audio data to the speaker b and the speaker c by using the router H. Alternatively, the smart screen Y establishes stereo with the speaker b and the speaker c, and then sends audio data to the speaker b and the speaker c.

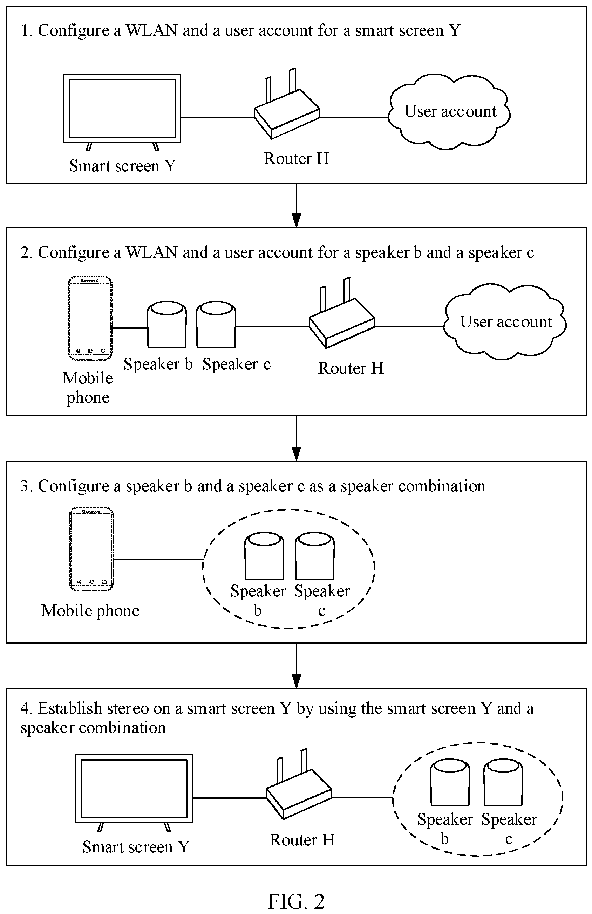

For example, a configuration process of a user is described by using an example in which the smart screen Y initially establishes stereo with the speaker b and the speaker c in FIG. 1. FIG. 2 is a schematic flowchart of configuration in which the smart screen Y establishes stereo with the speaker b and the speaker c in FIG. 1. As shown in FIG. 2, the configuration process includes the following steps.

### Step 1: Configure a WLAN and a user account for the smart screen Y

The user may configure an account and a password of the WLAN on a related screen displayed on the smart screen Y, so that the smart screen Y accesses the WLAN established by the router H.

The user can configure the user account on the related screen displayed on the smart screen Y The user account is also referred to as a login account. After the user uses the user account to log in to the smart screen Y, the smart screen Y can obtain permission of related functions or services and provide related functions for the user. Different users may use a same user account to log in to the smart screen Y, or different users may use respective user accounts to log in to the smart screen Y

### Step 2: Configure WLANs and user accounts for the speaker b and the speaker c.

The user may configure accounts and passwords of the WLANs of the speaker b and the speaker c on a related screen displayed by a related device, so that the speaker b and the speaker c access the WLAN established by the router H. The speaker b and the speaker c may perform short-range communication with the related device, for example, Bluetooth communication or Wi-Fi communication. An application (application, APP) for managing the audio devices may be installed on the related device. Examples of some related devices may be: a mobile phone, a tablet computer, and the like. For example, FIG. 2 is described by using the related device as a mobile phone.

The user may configure the user accounts of the speaker b and the speaker c on the related screen displayed on the mobile phone. Different users may use a same user account to log in to a speaker, or different users may use respective user accounts to log in to a speaker.

### Step 3: Configure the speaker b and the speaker c as a speaker combination.

The two speakers that have the same user account and access the same local area network are configured by the user as the speaker combination on the related screen of the APP displayed on the mobile phone. For example, in this example, the speaker b and the speaker c are configured as the speaker combination, and left and right sound channels in the speaker combination are set.

A sequence of configuring the WLANs of the speakers in step 2 and configuring the speaker combination in step 3 is not limited.

Optionally, in an implementation, after the user configures a network for the speaker b on the mobile phone, and after the mobile phone discovers the speaker c, the APP first asks the user whether to establish stereo by using the newly discovered speaker c and the existing speaker b. After the user determines to establish stereo, the APP asks the user to determine configurations of the left and right sound channels. Then, the mobile phone configures a network for the speaker c.

Optionally, in another implementation, after configuring respective networks for the speaker b and the speaker c, the user may select the speaker b and the speaker c in the APP to establish stereo.

### Step 4: Establish stereo on the smart screen Y by using the smart screen Y and the speaker combination.

When the smart screen Y, the speaker b, and the speaker c have a same user account, and all access the WLAN established by the router H, that is, when the smart screen Y, the speaker b, and the speaker c have a same user account and access a same local area network, the router H can forward a packet between the smart screen and the speakers. Based on a discovery mechanism in a local area network, the smart screen Y can discover a speaker or a speaker combination that has a same user account and accesses a same local area network. The discovered speaker or the discovered speaker combination is displayed on the related screen of the smart screen Y For example, in this example, the speaker combination including the speaker b and the speaker c is displayed on the related screen of the smart screen Y Correspondingly, the user performs an operation on the related screen displayed on the smart screen Y, and establishes stereo by using the smart screen Y and the speaker combination. The smart screen Y establishes a terminal-to-terminal (peer-to-peer, P2P) connection to the speaker b and the speaker c. Subsequently, audio data or control information or both between the smart screen and the speakers are carried on the P2P connection, and do not need to be transferred by using the router H.

The smart screen Y and the related screen displayed by the mobile phone are not limited.

It may be learned that, in the system shown in FIG. 1, when the speakers and the smart screen establish stereo, it is required that the speakers and the smart screen access a same local area network and have a same user account, and the router H can forward a packet between the smart screen and the speakers. In this way, the smart screen can discover the speakers or the speaker combination based on the discovery mechanism in the local area network. During configuration, the user first separately configures the networks for the smart screen and the speakers, and then establishes stereo by using the smart screen and the speakers on the related screen displayed on the smart screen (as described in step 4 in FIG. 2). If the two speakers and the smart screen establish stereo, the two speakers need to be further configured in advance as the speaker combination on the mobile phone (as described in step 3 in FIG. 2). The user performs many configuration steps and the process is complex.

An embodiment of this application provides a stereo networking method. The electronic device and the audio device may perform short-range communication. Based on short-range communication, the electronic device may directly and automatically discover an audio device available for establishing stereo or performing reconnection, and the electronic device may ask the user whether to establish stereo, and establish stereo with the audio device based on a user requirement. According to the stereo networking method provided in this embodiment of this application, it is not required that the electronic device and the audio device access a same local area network and have a same user account. In a configuration process of stereo networking, operations of configuring a network for the electronic device and the audio device in advance and configuring a combination of a plurality of audio devices are omitted. This simplifies a user configuration step, implements higher flexibility and efficiency of networking, and improves user experience.

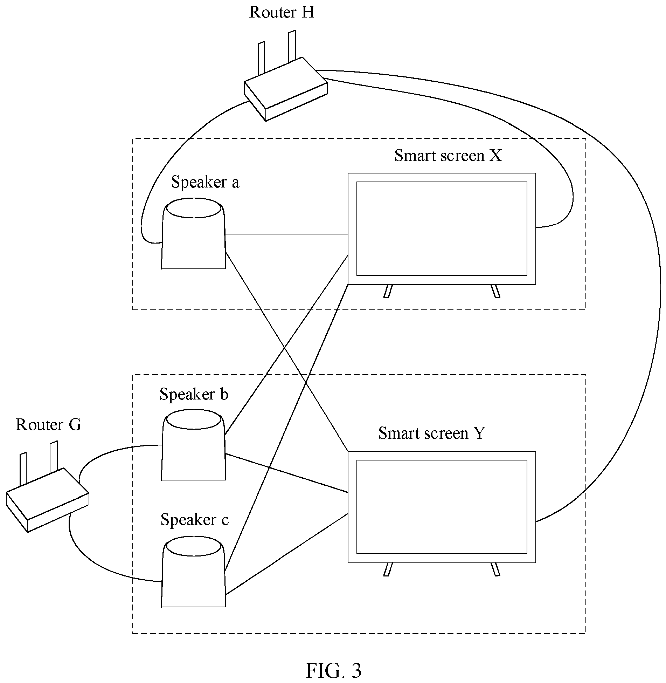

For example, FIG. 3 is a diagram of a system architecture of stereo networking according to an embodiment of this application. A system includes an electronic device and an audio device. Optionally, the system further includes a routing device. In FIG. 3, the electronic device includes a smart screen X and a smart screen Y The audio device includes a speaker a, a speaker b, and a speaker c. The routing device includes a router H and a router G. A difference between FIG. 3 and FIG. 1 lies in that in FIG. 1, the electronic device discovers, based on the discovery mechanism in the local area network, an audio device or a combination of audio devices available for establishing stereo. Therefore, it is required that the electronic device and the audio device access the same local area network and have the same user account, and that the routing device can forward the packet between the electronic device and the audio device. However, in FIG. 3, the electronic device and the audio device may perform short-range communication, and the electronic device discovers, based on short-range communication, the audio device available for establishing stereo or performing reconnection. Therefore, it is not required that the electronic device and the audio device access the same local area network or have the same user account, or that the routing device needs to exist and the routing device can forward a packet between the electronic device and the audio device. A type of short-range communication, for example, Bluetooth communication, is not limited in embodiments of this application. For example, in FIG. 3, the smart screen X may perform Bluetooth communication with the speaker a, the speaker b, and the speaker c, and the smart screen Y may perform Bluetooth communication with the speaker a, the speaker b, and the speaker c.

Optionally, the electronic device and the audio device may access a WLAN established by the routing device. The electronic device and the audio device may access a same WLAN, or may access different WLANs. For example, in FIG. 3, the smart screen X, the smart screen Y, and the speaker a communicate with the router H, and the speaker b and the speaker c communicate with the router G.

Optionally, the electronic device and the audio device may have a same user account or different user accounts.

It should be noted that FIG. 3 is merely an example, and does not limit quantities and types of electronic devices, audio devices, and routing devices in the system.

The following describes application scenarios and networking modes in which an electronic device and an audio device establish stereo.

An initial state of the electronic device after delivery is an unnetworked state, and the electronic device has not established stereo with the audio device. Then, in different application scenarios, the electronic device establishes stereo with the audio device for the first time, and the electronic device stores a first networking record. Similarly, an initial state of the audio device after delivery is an unnetworked state. Then, in different application scenarios, the audio device may establish stereo with the electronic device for the first time, and the audio device stores a second networking record. Optionally, after successfully establishing stereo, the electronic device or the audio device may attempt to reconnect when being powered on again. If reconnection succeeds, the electronic device and the audio device operate based on a historical networking mode. If reconnection fails, the electronic device and the audio device may re-establish stereo according to an actual situation of the application scenario, and update a local networking record when reestablishment succeeds.

For example, description is made with reference to FIG. 4 to FIG. 13, but application scenarios and networking modes of stereo networking are not limited. For ease of description, models of speakers in FIG. 4 to FIG. 13 are the same.

Optionally, in a scenario, refer to FIG. 4. A smart screen X and a speaker a are both in an unnetworked state in a living room. The smart screen X may discover the speaker a and establish stereo with the speaker a for the first time. A networking mode is the networking mode 1.

Optionally, in another scenario, refer to FIG. 5. A smart screen X, a speaker a, and a speaker b are all in an unnetworked state in a living room. The speaker a and the speaker b are located on two sides of the smart screen X respectively. The smart screen X may discover the speaker a and the speaker b, and establish stereo with the speaker a and the speaker b for the first time. A networking mode is the networking mode 2.

Optionally, in still another scenario, refer to FIG. 6. A smart screen X and a speaker a to a speaker c are in a living room. The smart screen X, the speaker b, and the speaker c are all in an unnetworked state, and the speaker a has historically been networked with the smart screen Y The speaker a fails in reconnection after being powered on. The smart screen X may discover the speaker a to the speaker c. The smart screen X may establish stereo with the speaker a and the speaker b. A networking mode is the networking mode 2. A difference between FIG. 6 and FIG. 5 lies in that a quantity and historical networking states of the speakers in the scenario are different.

Optionally, in still another scenario, refer to FIG. 7. A smart screen X, a speaker a, and a speaker b are all in an unnetworked state in a living room. The speaker a and the speaker b are located on two sides of a sofa respectively. The smart screen X may discover the speaker a and the speaker b, and establish stereo with the speaker a and the speaker b for the first time. A networking mode is the networking mode 3.

Optionally, in still another scenario, refer to FIG. 8. A smart screen X and a speaker a to a speaker d are all in an unnetworked state in a living room. The speaker a and the speaker b are located on two sides of the smart screen X respectively. The speaker c and the speaker d are located on two sides of a sofa respectively. The smart screen X may discover the speaker a to the speaker d, and establish stereo with the speaker a to the speaker d for the first time. A networking mode is the networking mode 4.

Optionally, in still another scenario, refer to FIG. 9. This scenario is related to a same-room detection mechanism used before the electronic device and the audio device establish stereo. A smart screen X, a speaker a, and a speaker b are all in an unnetworked state in a living room. A speaker c is in an unnetworked state in the living room. Through the same-room detection mechanism, the smart screen X may discover the speaker a, the speaker b, and the speaker c, and determine that the speaker c is in a different space. The smart screen X may establish stereo with the speaker a and the speaker b for the first time. A networking mode is the networking mode 2.

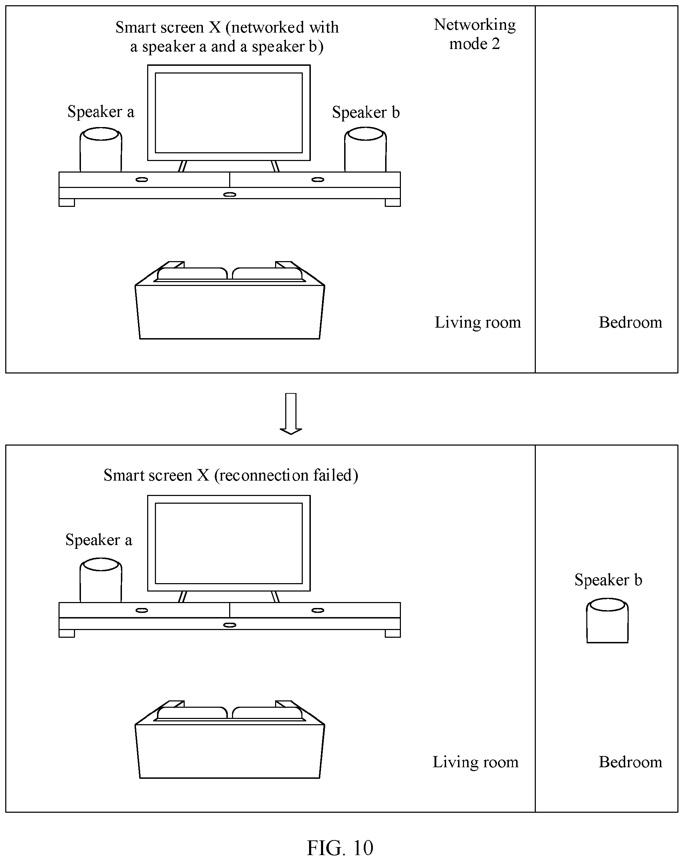

Optionally, in still another scenario, refer to FIG. 10. A smart screen X, a speaker a, and a speaker b are in a living room. The smart screen X has historically been networked with the speaker a and the speaker b. A networking mode is the networking mode 2. After that, a user moves the speaker b to a bedroom, but the smart screen X may perform Bluetooth communication with the speaker b. Optionally, in an implementation, after the smart screen X, the speaker a, and the speaker b are powered on, the smart screen X discovers the speaker a and the speaker b that are capable of performing reconnection, succeeds in reconnection, and operates in the networking mode 2. In this case, the speaker b plays a sound in the bedroom. Optionally, in another implementation, this scenario is related to a same-room detection mechanism used in a reconnection process of the electronic device and the audio device. After the smart screen X, the speaker a, and the speaker b are powered on, the smart screen X may discover the speaker a and the speaker b. However, through the same-room detection mechanism, the smart screen X determines that the speaker b is in a different space and cannot perform reconnection. That is, the smart screen X, the speaker a, and the speaker b fail in reconnection. Optionally, the smart screen X may perform a self-networking process, and ask a user whether to allow the smart screen X to re-establish stereo. In this case, the smart screen X may re-establish stereo with the speaker a in the networking mode 1.

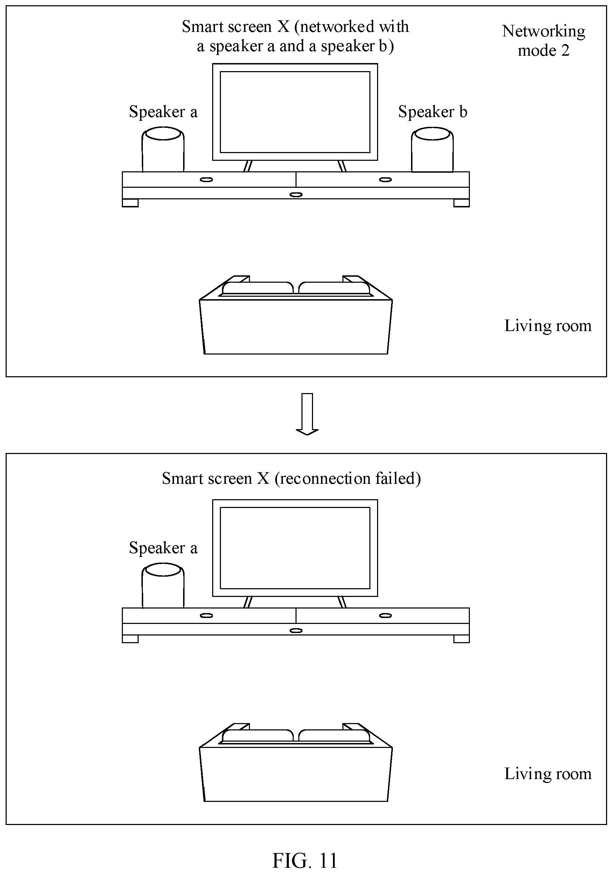

Optionally, in still another scenario, refer to FIG. 11. A difference between FIG. 11 and FIG. 10 lies in that in FIG. 10, the user moves the speaker b to the bedroom, the smart screen X may perform Bluetooth communication with the speaker b, and the smart screen X may discover the speaker b. However, in FIG. 11, a user moves away a speaker b, and a smart screen X discovers only a speaker a. In this scenario, the smart screen X, the speaker a, and the speaker b fail in reconnection. Optionally, the smart screen X may perform a self-networking process, and ask the user whether to allow the smart screen X to re-establish stereo. In this case, the smart screen X may re-establish stereo with the speaker a in the networking mode 1.

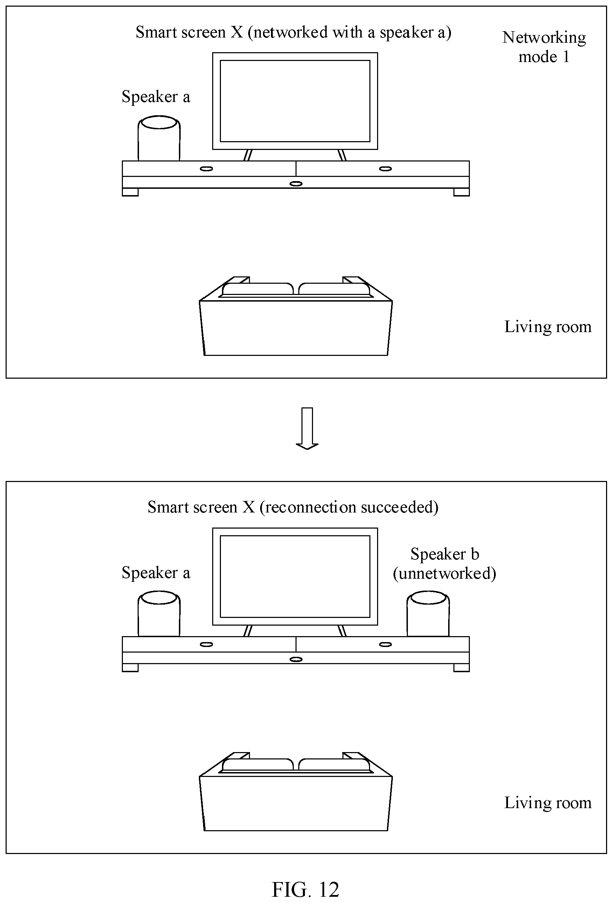

Optionally, in still another scenario, refer to FIG. 12. A smart screen X and a speaker a are in a living room. The smart screen X has historically been networked with the speaker a. A networking mode is the networking mode 1. Then, a user adds a speaker b in an unnetworked state in the living room. After the smart screen X, the speaker a, and the speaker b are powered on, the smart screen X discovers the speaker a capable of performing reconnection and succeeds in reconnection to the speaker a. A networking mode is the networking mode 1. The smart screen X also discovers the speaker b available for establishing stereo. Optionally, the smart screen X may perform a self-networking process, and ask the user whether to allow the smart screen X to re-establish stereo. In this case, the smart screen X may re-establish stereo with the speaker a and the speaker b in the networking mode 2.

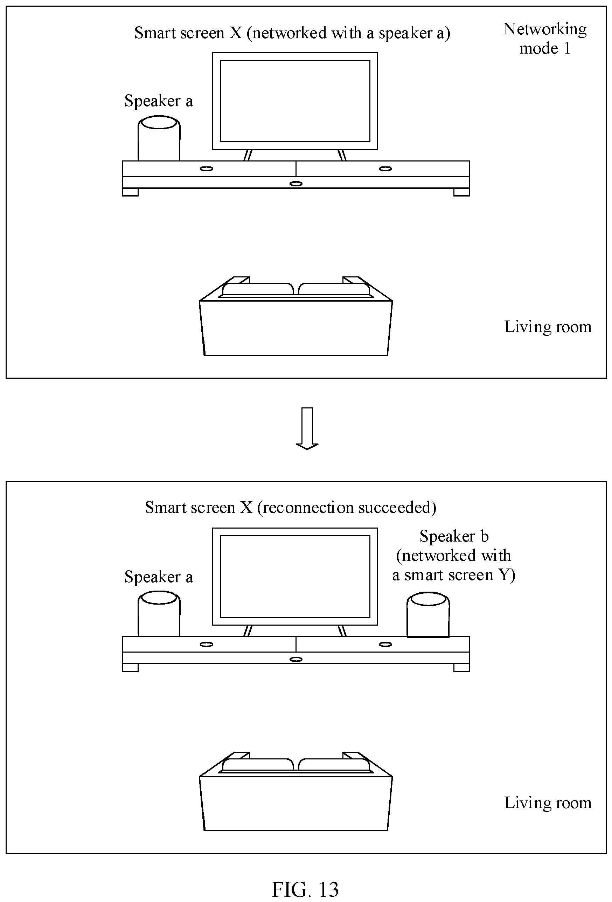

Optionally, in still another scenario, refer to FIG. 13. A difference between FIG. 13 and FIG. 12 lies in that in FIG. 12, the added speaker b is in an unnetworked state. However, in FIG. 13, an added speaker b is in a networked state, but the speaker b fails in reconnection after being powered on. After the speaker b fails in reconnection, the smart screen X discovers the speaker b that can be used for networking. After the smart screen X and the speaker a succeed in reconnection, the smart screen X may perform a self-networking process, and ask a user whether to allow the smart screen X to re-establish stereo. In this case, the smart screen X may re-establish stereo with the speaker a and the speaker b in the networking mode 2.

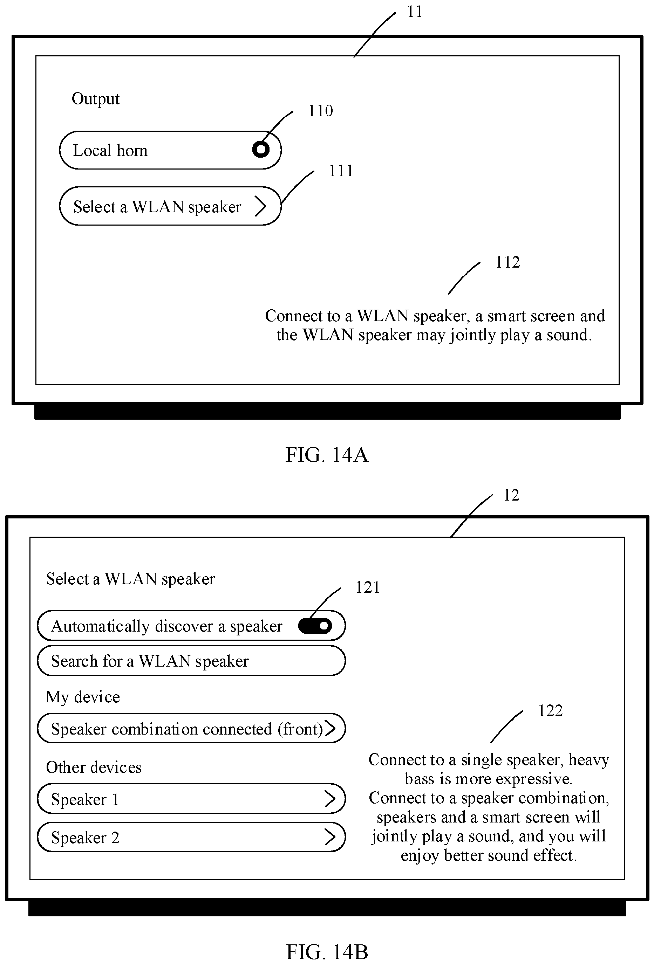

The following briefly describes, by using FIG. 14A to FIG. 14H, screens for setting stereo networking in an electronic device in an embodiment of this application. However, FIG. 14A to FIG. 14H do not limit a related setting screen.

As shown in FIG. 14A, a smart screen displays an "Output" screen 11 that is configured to set a sound output manner of the smart screen. A process of jumping to the screen 11 through a user operation is not limited in embodiments of this application. The screen 11 includes two function options: a local horn and select a WLAN speaker (referred to as a tab 111). Optionally, the user may perform an operation on a control 110, and indicate, by using a display status of the control 110, whether the smart screen is allowed to use the local horn. Optionally, the user may perform an operation on the tab 111, to set whether the smart screen establishes stereo with an audio device. Optionally, the screen 11 further includes guide information 112 that assists the user in performing selection. For example, the guide information 112 is "Connect to a WLAN speaker, a smart screen and the WLAN speaker may jointly play a sound".

When the user performs a selection operation on the tab 111, the smart screen displays the "Select a WLAN speaker" screen 12 in response to the operation of the user, as shown in FIG. 14B. The screen 12 may include the following function options: automatically discover a speaker and search for a WLAN speaker. Optionally, the user may perform an operation on a control 121, and indicate, by using a display status of the control 121, whether a self-networking function is enabled or supported.

Optionally, the screen 12 may further include a "My device" function option that indicates one of the following: a speaker or a speaker combination currently connected to the smart screen, or a speaker or a speaker combination most recently connected to the smart screen before a current time point. If the smart screen currently establishes no stereo or has no stereo networking record, the screen 12 may not display the "My device" function option, or may display the "My device" function option that includes no record. If the smart screen currently establishes a stereo or has a stereo networking record, the "My device" function option includes one record. Optionally, a current networking mode or a historical networking mode may be further indicated. For example, in FIG. 14B, "My device" includes a record "Speaker combination connected (front)", indicating that the smart screen currently establishes stereo with the speaker combination, and a current networking mode is the networking mode 2.

Optionally, the screen 12 may further include an "Other devices" function option that indicates another audio device discovered by the electronic device based on a discovery mechanism in a local area network. If the electronic device does not discover another audio device, the screen 12 may not display the "Other devices" function option, or may display the "Other devices" function option that includes no record. If the electronic device discovers another audio device, the "Other devices" function option includes at least one record.

Optionally, the screen 12 may further include guide information 122 that assists the user in performing selection. For example, the guide information 122 is "Connect to a single speaker, heavy bass is more expressive. Connect to a speaker combination, speakers and a smart screen will jointly play a sound, and you will enjoy better sound effect".

It should be noted that the speaker combination in this embodiment of this application has different meanings from the speaker combination shown in FIG. 2. In FIG. 2, the user needs to configure the speaker combination on the mobile phone in advance. The speakers in the speaker combination access the same local area network and have the same user account. Therefore, the electronic device may discover the speaker combination that accesses the same local area network and has the same user account. Subsequently, when the speaker combination and the electronic device fail in networking due to an application scenario change, a device fault, or other reasons, the speaker combination is not automatically removed, and needs to be manually removed on the mobile phone. However, in this embodiment of this application, the user does not need to configure the speaker combination on the mobile phone in advance. The electronic device establishes stereo based on a user requirement in the speakers that can be used for networking, to form the speaker combination. Subsequently, when the speaker combination and the electronic device fail in reconnection, the speaker combination may be automatically removed. Certainly, the speaker combination may not be removed. If the electronic device establishes stereo with another audio device, the speaker combination is automatically removed, and another networking record covers an existing networking record.

In this embodiment of this application, the user may perform an operation to implement any one of the following: manually deleting the audio device networked with the electronic device, manually disconnecting the audio device networked with the electronic device, or manually connecting the audio device networked with the electronic device. Deleting the audio device networked with the electronic device means that a networking relationship between the electronic device and the audio device is removed, and the electronic device may be networked with another audio device. Disconnecting the audio device networked with the electronic device means that a communication connection between the electronic device and the audio device is cut off, but the networking relationship is not removed, and subsequently, the electronic device and the audio device may be reconnected.

Optionally, in a scenario, as shown in FIG. 14B, the smart screen is currently connected to the speaker combination.

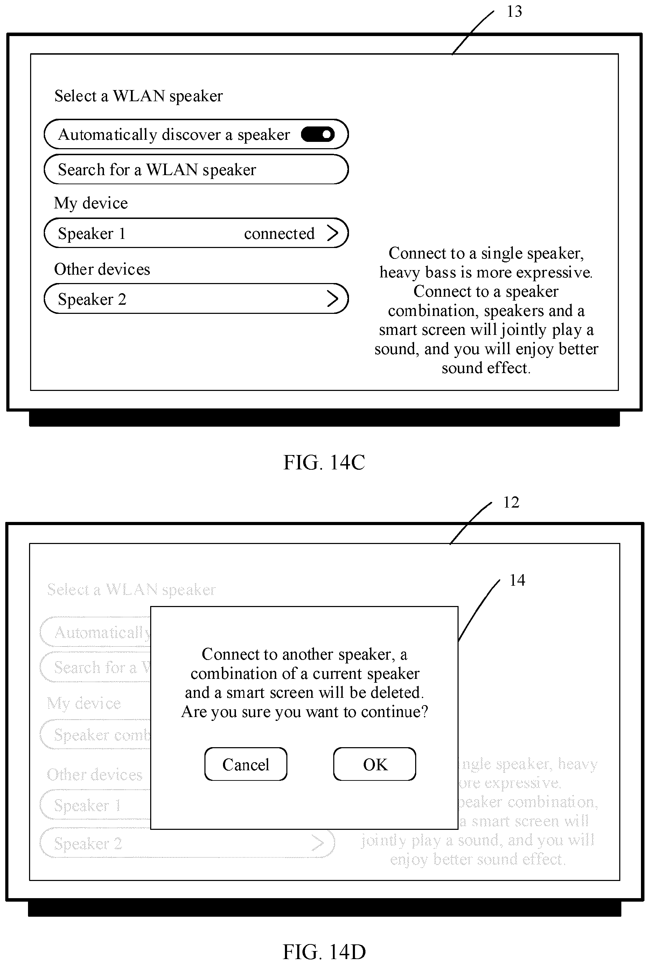

Optionally, in an implementation, the user may select a speaker in "Other devices" in FIG. 14B, for example, a speaker 1, to manually delete a networking relationship between a smart screen and a speaker combination, and perform stereo networking on the smart screen and the speaker 1. Correspondingly, in response to the operation of the user, the smart screen updates the screen 12 to a screen 13, as shown in FIG. 14C. Specifically, "My device" includes one record, and is changed to "Speaker 1 connected", indicating that the smart screen is currently networked with the speaker 1, and a networking mode is the networking mode 1. "Other devices" includes one record, specifically a speaker 2.

Optionally, before the smart screen displays the screen 13, the smart screen may further display a pop-up box in the screen 12, to prompt the user to make a selection. For example, as shown in FIG. 14D, a pop-up box 14 is displayed in the screen 12. The pop-up box 14 includes guide information, a "Cancel" button, and an "OK" button. For example, the guide information includes: "Connect to another speaker, a combination of a current speaker and a smart screen will be deleted. Are you sure you want to continue?" Optionally, the user may select the "OK" button. Correspondingly, in response to the operation of the user, the smart screen deletes the networking relationship with the speaker combination, and performs stereo networking with the speaker 1.

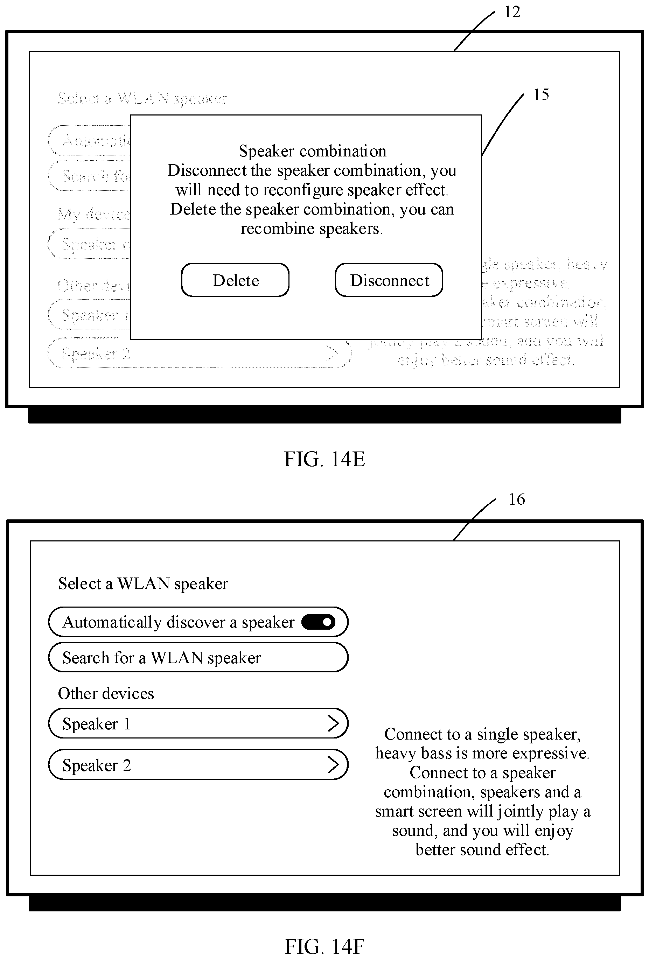

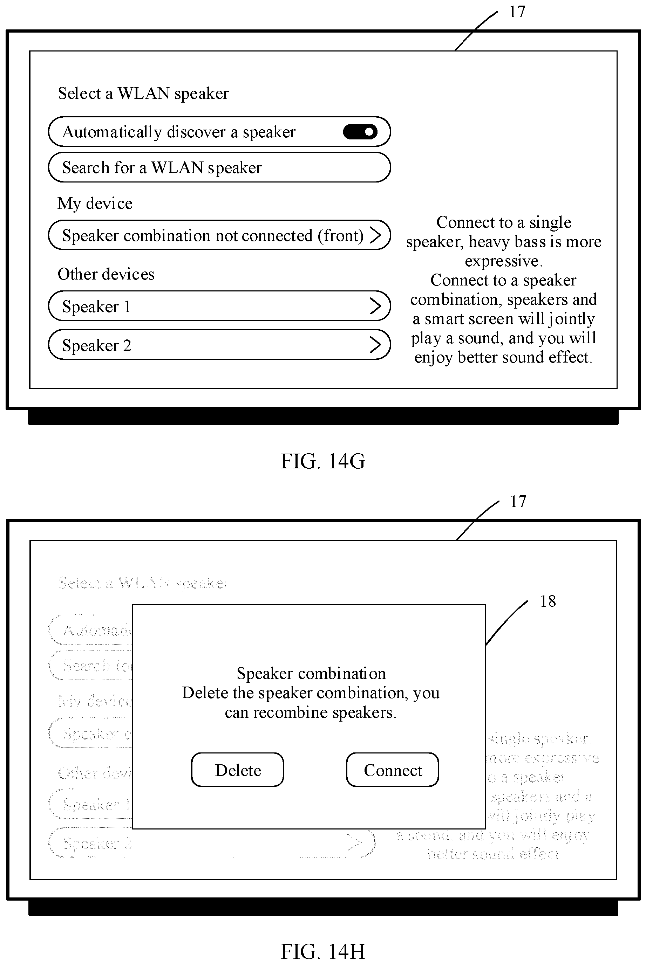

Optionally, in another implementation, the user may perform an operation on the speaker combination in "My device" in FIG. 14B, to manually delete the networking relationship of the smart screen and the speaker combination, or manually disconnect the smart screen from the speaker combination. Correspondingly, in response to the operation of the user, the smart screen displays a pop-up box 15 on the screen 12, as shown in FIG. 14E. The pop-up box 15 includes guide information, a "Delete" button, and a "Disconnect" button. For example, the guide information includes: "Disconnect the speaker combination, you will need to reconfigure speaker effect. Delete the speaker combination, you can recombine speakers". Optionally, the user may select the "Delete" button. Correspondingly, in response to the operation of the user, the smart screen deletes the networking relationship between the smart screen and the speaker combination, and updates the screen 12 to a screen 16, as shown in FIG. 14F. Specifically, the screen 16 does not include "My device", indicating that the smart screen currently has no first networking record. "Other devices" on the screen 16 includes two records: the speaker 1 and the speaker 2. Optionally, the user may select the "Disconnect" button. Correspondingly, in response to the operation of the user, the smart screen is disconnected from the speaker combination, and updates the screen 12 to a screen 17, as shown in FIG. 14G. Specifically, "My device" on the screen 17 includes one record: "Speaker combination not connected (front)", indicating that the smart screen has the first networking record but currently establishes no stereo, and the latest stereo is established with the speaker combination. A historical networking mode is the networking mode 2.

Optionally, in another scenario, as shown in FIG. 14G, the smart screen currently establishes no stereo, and the smart screen locally stores a networking record.

Optionally, in an implementation, the user may select a speaker in "Other devices" on the screen 17, to manually delete a locally stored historical networking relationship of the smart screen, and perform stereo networking on the smart screen and the selected speaker. Refer to the related descriptions in FIG. 14C and FIG. 14D. Principles are similar, and details are not described herein again.

Optionally, in another implementation, the user may perform an operation on the speaker combination in "My device" on the screen 17, to manually delete the networking relationship of the smart screen and the speaker combination, or manually connect the smart screen to the speaker combination. Correspondingly, in response to the operation of the user, the smart screen displays a pop-up box 18 on the screen 17, as shown in FIG. 14H. The pop-up box 18 includes guide information, a "Delete" button, and a "Connect" button. For example, the guide information includes: "Speaker combination" and "Delete the speaker combination, another speaker can be combined". Optionally, the user may select the "Delete" button. Refer to the related descriptions in FIG. 14E. Principles are similar, and details are not described herein again. Optionally, the user may select the "Connect" button. Correspondingly, in response to the operation of the user, the smart screen is connected to the speaker combination, and updates the screen 17 to the screen 12, as shown in FIG. 14B.

Specific embodiments are used below to describe in detail the technical solutions of this application. The following embodiments may be combined with each other, and a same or similar concept or process may not be described repeatedly in some embodiments.

The terms "first", "second", "third", "fourth", and the like (if any) in embodiments of this application are intended to distinguish between similar objects but do not necessarily indicate a specific order or sequence.

In the descriptions of embodiments of this application, unless otherwise stated, "/" means "or", for example, A/B may represent A or B. The term "and/or" in this specification describes only an association relationship between associated objects, and indicates that three relationships may exist. For example, A and/or B may represent three cases: Only A exists, both A and B exist, and only B exists.

In the descriptions of embodiments of this application, unless otherwise stated, "a plurality of" means two or more than two.

It should be noted that, in embodiments of this application, operations performed by a user on a related screen displayed by an electronic device include but are not limited to at least one of the following: a touch operation performed by the user on a display of the electronic device, an operation performed by the user on the related screen by using an intermediate control device like a remote control, and an operation performed by the user on the related screen through voice control.

It should be noted that, in embodiments of this application, the related screen may include guide information, prompt information, reminder information, or the like, to assist in and guide the user operation, notify the user of a current progress, and improve user experience. A form and content of the guide information, the prompt information, or the reminder information are not limited in embodiments of this application. For example, the guide information, the prompt information, or the reminder information includes but is not limited to at least one of the following: text, a picture, or an animation.

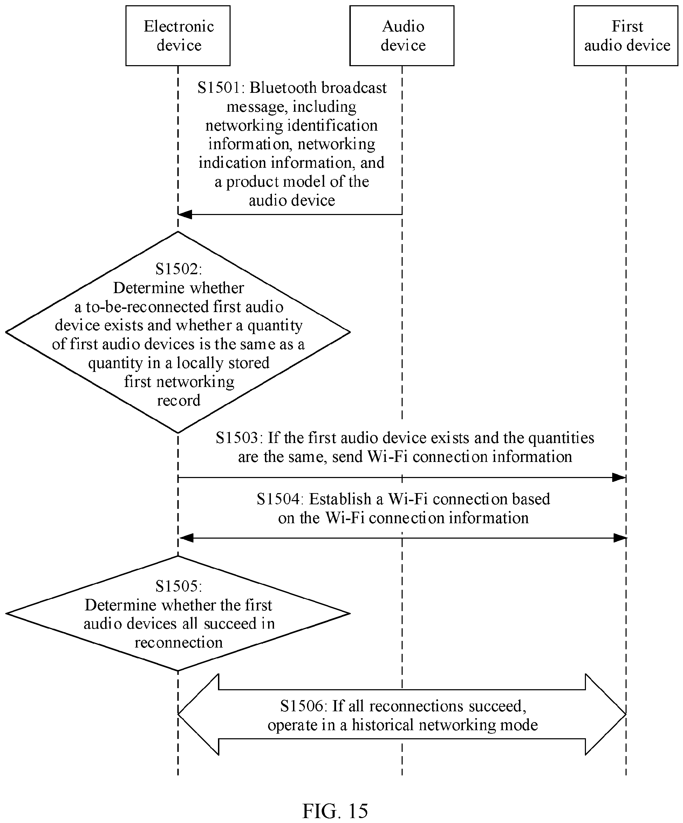

FIG. 15 is a flowchart of a stereo networking method according to an embodiment of this application. The stereo networking method provided in this embodiment is performed by an electronic device and an audio device, is applicable to the system shown in FIG. 3, and is related to a reconnection process of the electronic device and the audio device. A quantity of electronic devices and audio devices in the system is not limited in this embodiment. Each electronic device in the system may perform an operation of the electronic device in this embodiment, and each audio device in the system may perform an operation of the audio device in this embodiment. As shown in FIG. 15, the stereo networking method provided in this embodiment may include the following steps.

S1501: The audio device sends a Bluetooth broadcast message, where the Bluetooth broadcast message includes networking identification information, networking indication information, and a product model of the audio device.

Correspondingly, the electronic device receives the Bluetooth broadcast message separately sent by the at least one audio device in the system.

The networking identification information may indicate whether the audio device has historically established stereo. Optionally, a value of the networking identification information is within a preset range. This is not limited in this embodiment. For example, the preset range is from 0 to 65535. An invalid value may be preset within the preset range. For example, the value is 0. Each value in the preset range other than the invalid value may uniquely distinguish a networking relationship between the audio device and the electronic device.

Optionally, in an implementation, if the audio device has never established stereo, the networking identification information is the preset invalid value. If the audio device has established stereo, the value of the networking identification information is a value of networking identification information corresponding to latest stereo established by the audio device.

Optionally, in another implementation, if the audio device has never established stereo, or the networking relationship between the audio device and the electronic device is terminated after the audio device establishes stereo last time, for example, in the delete operation shown in FIG. 14E or FIG. 14H, the networking identification information is the preset invalid value. If the networking relationship between the audio device and the electronic device is not terminated after the audio device establishes stereo last time, the value of the networking identification information is a value of networking identification information corresponding to latest stereo established by the audio device.

The networking indication information indicates whether the audio device and the electronic device are allowed to establish stereo. Generally, if a speaker locally stores a second network record, the speaker attempts to reconnect after being powered on. Before reconnection of the speaker timed out or before the speaker succeeds in reconnection, the speaker is not allowed to establish stereo with another electronic device. In this case, the value of the networking indication information indicates that the audio device and the electronic device are not allowed to establish stereo. If the speaker fails in reconnection, the speaker is allowed to establish stereo with the another electronic device. In this case, a value of the networking indication information indicates that the audio device and the electronic device are allowed to establish stereo. If a speaker does not locally have a second network record, or a speaker has never been networked, the speaker is allowed to establish stereo with another electronic device.

The Bluetooth broadcast message carries the product model of the audio device, and is used by the electronic device to determine whether the audio device supports establishing stereo. Optionally, in a scenario in which a plurality of audio devices exist, the Bluetooth broadcast message is further used by the electronic device to determine whether the electronic device is allowed to establish stereo with the plurality of audio devices.

With reference to FIG. 6, the following uses an example to describe the networking identification information and the networking indication information.

In FIG. 6, the speaker a has historically been networked with the smart screen Y It is assumed that the value of the networking identification information is 100, and is used to uniquely identify networking between the speaker a and the smart screen Y In a time period in which the speaker a attempts to reconnect to the smart screen Y after being powered on, in a Bluetooth broadcast message sent by the speaker a, the networking identification information is 100, indicating that the speaker a has historically established stereo. The value of the networking indication information may be 0, indicating that currently the speaker a and the electronic device are not allowed to establish stereo. After reconnection of the speaker a timed out and a reconnection failure is determined, in the Bluetooth broadcast message sent by the speaker a, the value of the networking identification information remains unchanged, and the value of the networking indication information may be 1, indicating that the speaker a and the electronic device are allowed to establish stereo.

In FIG. 6, the speaker b and the speaker c have never been networked. In a Bluetooth broadcast message sent by the speaker b or the speaker c, the networking identification information is 0, indicating that the speaker b or the speaker c has not historically established stereo. The value of the networking indication information may be 1, indicating that the speaker b or the speaker c may establish stereo.

Optionally, the Bluetooth broadcast message may further include at least one of the following: network configuration information or audio device button information.

The network configuration information indicates whether a WLAN has been configured for the audio device. According to the network configuration information, the audio device may notify the electronic device whether the WLAN has been configured, so that the electronic device subsequently determines whether a network needs to be configured for the audio device. For details, refer to the related descriptions in S 1606.

The audio device button information may include identification information of each button of the audio device, and the identification information is used to uniquely distinguish different buttons. The audio device button information is sent to the electronic device, so that the electronic device subsequently implements a specific function by using the button of the audio device.

It should be noted that a type of the Bluetooth broadcast message and a compliant Bluetooth protocol version are not limited in this embodiment. For example, the Bluetooth broadcast message is a Bluetooth low energy (Bluetooth low energy, BLE) broadcast message.

S 1502: The electronic device determines, based on the received Bluetooth broadcast message separately sent by the at least one audio device, whether a to-be-reconnected first audio device exists, and whether a quantity of first audio devices is the same as a quantity in a locally stored first networking record.

Optionally, the first networking record includes networking identification information and a historical networking mode. For the networking identification information, refer to the related descriptions in S1501. Details are not described herein again. A different historical networking mode indicates a different quantity of first audio devices. For example, in the networking mode 1, there is one first audio device. In the networking mode 2 or the networking mode 3, there are two first audio devices. In the networking mode 4, there are four first audio devices.

The electronic device may determine, based on whether the locally stored networking identification information is the same as the networking identification information carried in the Bluetooth broadcast message sent by the audio device, whether the audio device is the first audio device.

If it is determined that the first audio device exists and the quantity of first audio devices is the same as the quantity in the first networking record, it indicates that the electronic device has discovered all the to-be-reconnected first audio devices. In this case, S1503 and S1504 are performed.

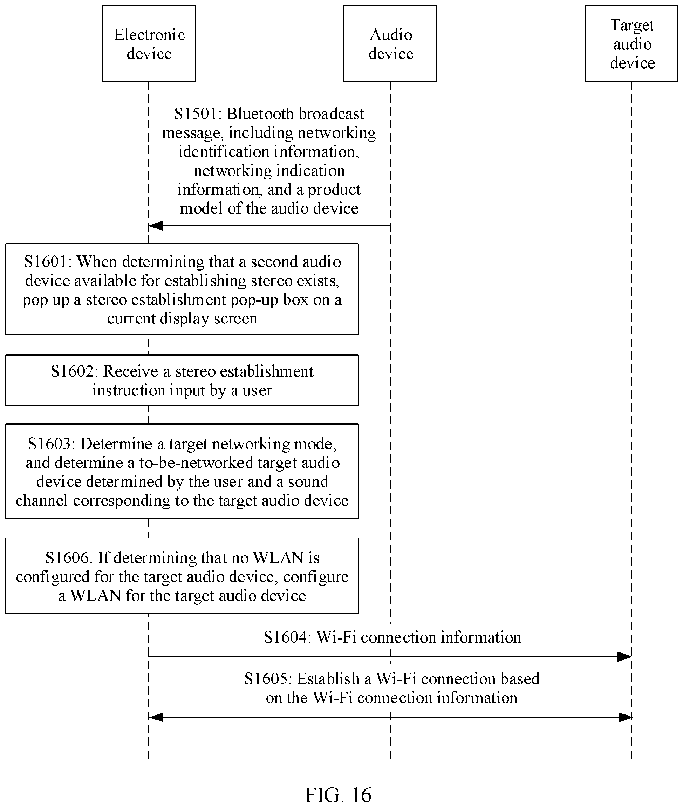

If it is determined that the first audio device does not exist, or if the first audio device exists but the quantity of first audio devices is different from the quantity in the first networking record, it indicates that the electronic device does not discover all the to-be-reconnected first audio devices. In this case, reconnection is not performed, and a reconnection process ends. Optionally, if the electronic device enables a self-networking function, a self-networking process may be performed. Refer to the embodiment shown in FIG. 16.

For example, the scenarios shown in FIG. 11 and FIG. 12 are used for description.

In FIG. 11, the speaker a and the speaker b have historically been networked with the smart screen X. It is assumed that the value of the network identification information is 300, and is used to uniquely identify networking of the speaker a, the speaker b, and the smart screen X. The first networking record locally stored by the smart screen X includes the networking identification information and the historical networking mode. The value of the networking identification information is 300, and the historical networking mode is the networking mode 2. The speaker b is moved away. The smart screen X and the speaker a both attempt to reconnect after being powered on again. In the Bluetooth broadcast message sent by the speaker a, the networking identification information is 300, and the value of the networking indication information is 0, indicating that currently the speaker a is not allowed to be networked with the electronic device. The smart screen X receives the Bluetooth broadcast message sent by the speaker a, and determines that the value of the networking identification information in the Bluetooth broadcast message is 300. The smart screen X determines that the speaker a is a to-be-networked first audio device. However, the quantity (1) of first audio devices is different from the quantity (2) in the first networking record. The smart screen X determines that reconnection fails.

In FIG. 12, the speaker a has historically been networked with the smart screen X. It is assumed that the value of the networking identification information is 400, and is used to uniquely identify networking between the speaker a and the smart screen X. The first networking record locally stored by the smart screen X includes the networking identification information and the historical networking mode. The value of the networking identification information is 400, and the historical networking mode is the networking mode 1. The smart screen X and the speaker a both attempt to reconnect after being powered on again. In the Bluetooth broadcast message sent by the speaker a, the networking identification information is 400, and the value of the networking indication information is 0, indicating that currently the speaker a is not allowed to be networked with the electronic device. The smart screen X receives the Bluetooth broadcast message sent by the speaker a, and determines that the value of the networking identification information in the Bluetooth broadcast message is 400. The smart screen X determines that the speaker a is a to-be-networked first audio device. In addition, the quantity (1) of first audio devices is the same as the quantity (1) in the first networking record. The reconnection process may be continued.

S1503: The electronic device sends Wi-Fi connection information to the first audio device.

Correspondingly, the first audio device receives the Wi-Fi connection information sent by the electronic device.

The Wi-Fi connection information may include one or more of the following: a service set identifier (service set identifier, SSID), a network name, a network password, a Wi-Fi access frequency band, and the like.

Optionally, in an implementation, the electronic device sends the BLE broadcast message to the first audio device, where the BLE broadcast message includes the Wi-Fi connection information. In this implementation, a BLE connection may not be established between the electronic device and the audio device. This saves a message process.

Optionally, in another implementation, if the electronic device has established a BLE connection to the first audio device, the electronic device may send the Wi-Fi connection information to the first audio device through the BLE connection.

Optionally, in still another implementation, if the electronic device does not establish a BLE connection to the first audio device, the electronic device may establish the BLE connection to the first audio device, and send the Wi-Fi connection information to the first audio device through the BLE connection.

Optionally, in still another implementation, both the electronic device and the first audio device are connected to a same wireless local area network established by a routing device. For example, the electronic device may determine based on the network configuration information in the Bluetooth broadcast message. The electronic device may forward the Wi-Fi connection information to the first audio device through the routing device. Correspondingly, after receiving, through the routing device, the Wi-Fi connection information sent by the electronic device, the first audio device may cut off a Wi-Fi connection to the routing device, and establish a Wi-Fi connection to the electronic device based on the Wi-Fi connection information. In this implementation, the electronic device may establish the Wi-Fi connection to the first audio device without using a BLE technology.

S1504: The electronic device establishes the Wi-Fi connection to the first audio device based on the Wi-Fi connection information.

Optionally, if the first audio device does not currently establish the Wi-Fi connection, the first audio device establishes the Wi-Fi connection to the electronic device based on the Wi-Fi connection information.

Optionally, if the first audio device has currently established a Wi-Fi connection to another device (for example, the routing device), the first audio device may cut off the Wi-Fi connection to the another device after receiving the Wi-Fi connection information, and then establish the Wi-Fi connection to the electronic device based on the Wi-Fi connection information.

It may be learned that, according to the stereo networking method provided in this embodiment, the audio device sends the Bluetooth broadcast message, and after receiving the Bluetooth broadcast message sent by the audio device, the electronic device may directly and automatically discover, based on the Bluetooth broadcast message, the to-be-reconnected audio device, to establish stereo with the to-be-reconnected audio device. It is not required that the electronic device and the audio device access a same local area network and have a same user account. This implements higher flexibility and efficiency of networking and improves user experience.

Optionally, the stereo networking method provided in this embodiment may further include:

S1505: The electronic device determines whether all the first audio devices succeed in reconnection.

If all the first audio devices establish Wi-Fi connections to the electronic device, it indicates that all the first audio devices succeed in reconnection. In this case, S1506 is performed. For example, in the scenario shown in FIG. 12 or FIG. 13, the speaker a and the smart screen X use the networking mode 1. When the speaker a establishes a Wi-Fi connection to the smart screen X, it indicates that reconnection succeeds.

If some or all of the first audio devices fail in reconnection, optionally, if the electronic device enables the self-networking function, the self-networking process may be performed. Refer to the embodiment shown in FIG. 16,

S1506: The electronic device and the first audio device operate in the historical networking mode.

FIG. 16 is another flowchart of a stereo networking method according to an embodiment of this application. The stereo networking method provided in this embodiment is performed by an electronic device and an audio device, is applicable to the system shown in FIG. 3, and is related to a self-networking process of the electronic device and the audio device. The electronic device enables a self-networking function. A quantity of electronic devices and audio devices in the system is not limited in this embodiment. Each electronic device in the system may perform an operation of the electronic device in this embodiment, and each audio device in the system may perform an operation of the audio device in this embodiment. As shown in FIG. 16, after S1501 in FIG. 15, the stereo networking method provided in this embodiment may further include the following steps.

S1601: When determining, based on a received Bluetooth broadcast message separately sent by at least one audio device, that a second audio device available for establishing stereo exists, the electronic device pops up a stereo establishment pop-up box on a current display screen, where the stereo establishment pop-up box is used to ask a user whether to establish stereo or re-establish stereo.

Specifically, the Bluetooth broadcast message includes networking identification information, networking indication information, and a product model of the audio device. The electronic device may determine, based on the networking indication information and the product model of the audio device, whether the audio device can establish stereo, to directly and automatically discover the second audio device.

Optionally, the electronic device may further determine whether the audio device is the second audio device based on whether a signal strength of the Bluetooth broadcast message is greater than a preset threshold. Optionally, the signal strength may be a received signal strength indication (received signal strength indication, RSSI).

Generally, the audio device for establishing stereo is located near the electronic device. A longer distance between the audio device and the electronic device indicates a lower signal strength of the Bluetooth broadcast message. Conversely, a shorter distance between the audio device and the electronic device indicates a higher signal strength of the Bluetooth broadcast message. If the signal strength of the Bluetooth broadcast message is greater than the preset threshold, it indicates that the audio device and the electronic device are in a short distance and can establish stereo. The signal strength of the Bluetooth broadcast message is determined, so that accuracy of discovering the second electronic device by the electronic device can be improved. This helps properly and successfully establish stereo.

A value of the preset threshold is not limited in this embodiment.

Optionally, before the stereo establishment pop-up box is popped up on the current display screen, the electronic device determines that no screen projection service is currently performed. The screen projection service includes but is not limited to: displaying, by the electronic device as a projection device, to-be-displayed data on another device; or displaying, by the electronic device as a display device, to-be-displayed data of another device.

This embodiment does not limit the current display screen, and does not limit page content and page layout of the stereo establishment pop-up box. It may be understood that, when a current networking status of the electronic device and a quantity, a model, a location, or the like of the second audio devices are different, the stereo establishment pop-up box may be different.

The current networking status of the electronic device includes: unnetworked and networked. The unnetworked includes but is not limited to the following cases: The electronic device has never been networked or has no first networking record, for example, in the scenarios shown in FIG. 4 to FIG. 9. Alternatively, the electronic device fails in reconnection, for example, in the scenarios shown in FIG. 10 and FIG. 11. When the electronic device is not currently networked, the stereo establishment pop-up box is used to ask the user whether to establish stereo. When the electronic device is currently networked, for example, in the scenarios shown in FIG. 12 and FIG. 13, and the electronic device discovers the second audio device, the stereo establishment pop-up box is used to ask the user whether to re-establish stereo.

With reference to the scenarios shown in FIG. 4 to FIG. 13, the following describes an example of the stereo establishment pop-up box. The current display screen of the smart screen X is identified as a screen 20, and the stereo establishment pop-up box is identified as a pop-up box 21.

Optionally, in a first implementation, the electronic device is not currently networked, and is applicable to the scenarios shown in FIG. 2 to FIG. 11.

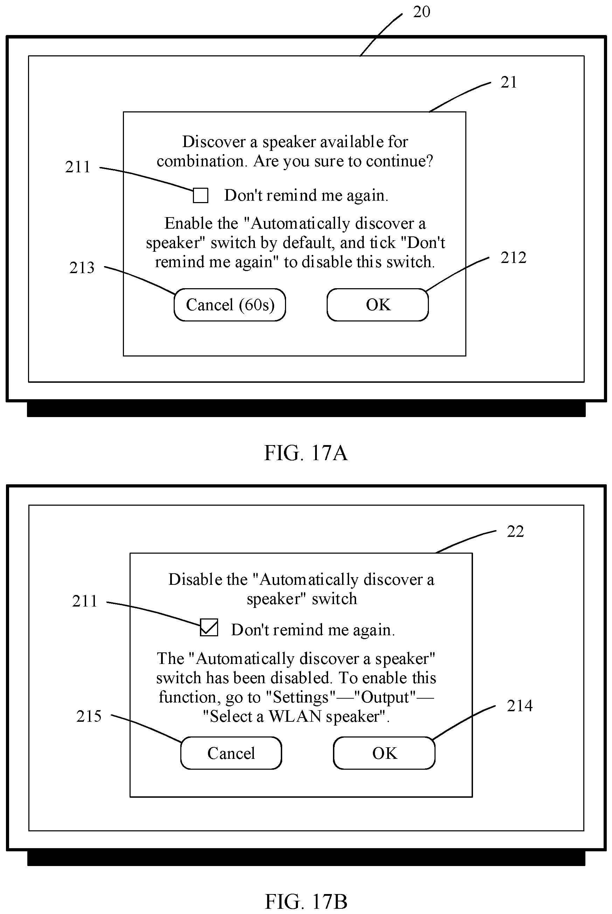

As shown in FIG. 17A, the pop-up box 21 includes a control 211, a confirm button 212, and guide information. For example, the guide information includes: "Discover a speaker available for combination. Are you sure to continue?" and "Enable the 'Automatically discover a speaker' switch by default, and tick 'Don't remind me again' to disable this switch", to guide the user to perform an operation.

Optionally, the user may perform an operation on the confirm button 212 to input a stereo establishment instruction. Correspondingly, the smart screen X determines, in response to the stereo establishment instruction, that the user establishes stereo or re-establishes stereo, and performs a subsequent step of the self-networking process.

Optionally, the user may perform an operation on the control 211, and indicate, by using a display status of the control 211, whether to disable the self-networking function. For example, when the user performs a selection operation on the control 211, in response to the operation of the user, the smart screen X updates the pop-up box 21 to a pop-up box 22, as shown in FIG. 17B. Changed guide information in the pop-up box 22 guides the user to enable the self-networking function later. For example, the text above the control 211 is changed to "Disable the 'Automatically discover a speaker' switch", and the text below the control 211 is changed to "The 'Automatically discover a speaker' switch has been disabled. To enable this function, go to "Settings"-"Output"-"Select a WLAN speaker"". For example, for the "Select a WLAN speaker" screen, refer to FIG. 14B. In FIG. 17B, the pop-up box 22 further includes a confirm button 214 and a cancel button 215. Optionally, the user may perform an operation on the confirm button 214 to input a stereo establishment disabling instruction. Correspondingly, the smart screen X disables the self-networking function in response to the stereo establishment disabling instruction, and closes the pop-up box 22. Optionally, the user may perform an operation on the cancel button 215 to cancel disabling of the self-networking function.

Optionally, the pop-up box 21 further includes a cancel button 213. The user may perform an operation on the cancel button 213 to input a stereo establishment cancel instruction. Correspondingly, the smart screen X cancels, in response to the stereo establishment cancel instruction, stereo establishment of the smart screen X and a speaker in a current screen-on process of the smart screen X. That is, in the current screen-on process of the smart screen X, the electronic device no longer uses a pop-up box to ask the user whether to establish stereo or re-establish stereo. It may be understood that after the smart screen X is turned off and then on, or after the smart screen X is powered off and then powered on again, the self-networking process may be performed again, and the stereo establishment pop-up box is popped up to ask the user. Optionally, countdown time, for example, 60s, is displayed on the cancel button 213. If the user does not perform any operation within the countdown time, and the smart screen X does not receive any instruction before timeout, stereo establishment of the smart screen X and the speaker is canceled, and the pop-up box 21 is closed.

In this implementation, the stereo establishment pop-up box has high universality, and the stereo establishment pop-up box is applicable to different quantities of second audio devices. Subsequently, a quantity of second audio devices required by the user to establish stereo and a networking mode may be further determined by using a man-machine interaction process between the electronic device and the user.

Optionally, in a second implementation, the electronic device is not currently networked. When quantities of second audio devices discovered by the electronic device are different, the stereo establishment pop-up box may reflect the quantity of second audio devices. In this implementation, the electronic device provides a more precise selection for the user. The user may directly determine, in the stereo establishment pop-up box, a quantity of audio devices for establishing stereo and/or a target networking mode. The user makes a clearer selection. This facilitates the operation of the user.

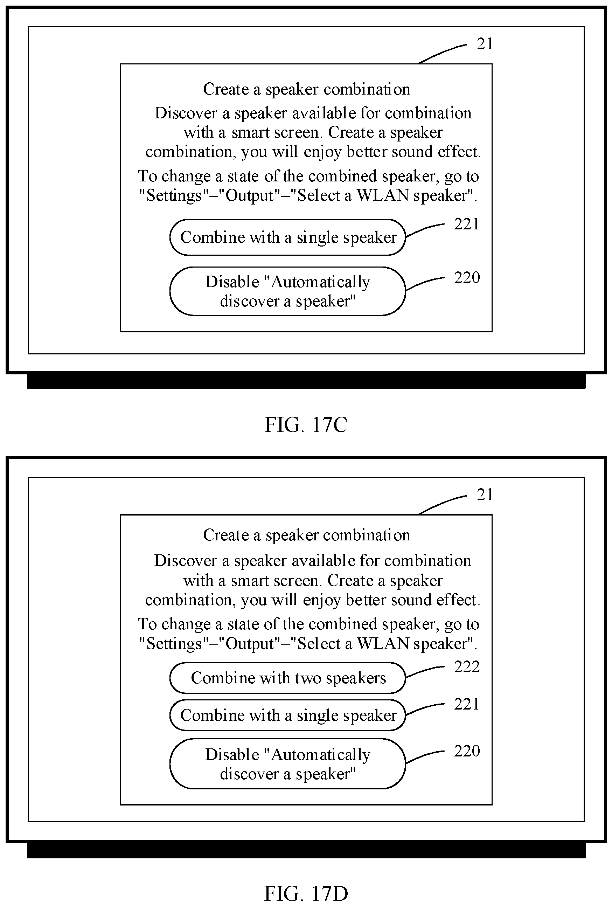

Optionally, a quantity of second audio devices discovered by the electronic device is one, for example, in the scenario shown in FIG. 4. As shown in FIG. 17C, the pop-up box 21 may include a button 220, a button 221, and guide information. For example, the guide information includes: "Create a speaker combination", "Discover a speaker available for combination with a smart screen. Create a speaker combination, you will enjoy better sound effect", and "To change a state of the combined speaker, go to "Settings"-"Output"-"Select a WLAN speaker"". Optionally, the user may perform an operation on the button 220 to input a stereo establishment disabling instruction. Correspondingly, the smart screen X disables the self-networking function in response to the stereo establishment disabling instruction, and closes the pop-up box 21. Optionally, the user may perform an operation on the button 221 to input a stereo establishment instruction. Correspondingly, the smart screen X determines, in response to the stereo establishment instruction, to establish stereo, and determines to establish stereo with a single speaker. In this case, the target networking mode is the networking mode 1.

Optionally, the electronic device discovers more than one and less than four second audio devices, for example, in the scenarios shown in FIG. 5 to FIG. 7 or the scenario shown in FIG. 9.

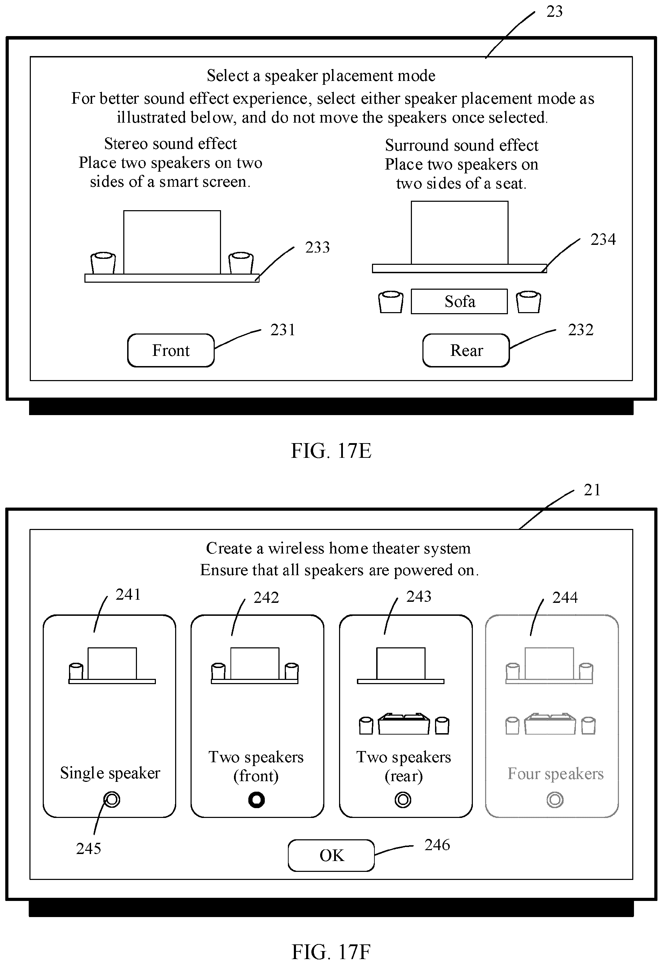

Optionally, in an implementation, as shown in FIG. 17D, the pop-up box 21 may include a button 220, a button 221, a button 222, and guide information. The guide information is consistent with the guide information in FIG. 17C, and details are not described again. Compared with FIG. 17C, FIG. 17D has the button 222 added to the pop-up box 21. The user may perform an operation on the button 222 to input a stereo establishment instruction. Correspondingly, the smart screen X determines, in response to the stereo establishment instruction, to establish stereo, and determines to establish stereo with two speakers. In this case, the target networking mode is the networking mode 2 or the networking mode 3. Subsequently, a networking mode may be further determined by using a man-machine interaction process between the user and the electronic device. For example, the user selects the button 222 to combine two speakers. Correspondingly, in response to the operation of the user, the smart screen X closes the pop-up box 21 and displays a screen 23, as shown in FIG. 17E. The screen 23 includes a front button 231, a rear button 232, and guide information. For example, the guide information includes: "Select a speaker placement mode", "For better sound effect experience, select either speaker placement mode as illustrated below, and do not move the speakers once selected", "Stereo sound effect. Place two speakers on two sides of a smart screen", "Surround sound effect. Place two speakers on two sides of a seat", a picture 233, and a picture 234. Optionally, the user may perform an operation on the front button 231 to set the target networking mode to the networking mode 2. Optionally, the user may perform an operation on the rear button 234 to set the target networking mode to the networking mode 3.

Optionally, in another implementation, as shown in FIG. 17F, the pop-up box 21 may include option boxes 241 to 244, a confirm button 246, and guide information. For example, the guide information includes: "Create a wireless home theater system" and "Ensure that all speakers are powered on". The option boxes 241 to 244 indicate the networking mode 1 to the networking mode 4 respectively. Each option box includes a control 245. The user may perform an operation on the control 245, and indicate, by using a display status of the control 245, whether to select a corresponding networking mode. For example, in FIG. 17F, the user selects the networking mode 2 corresponding to the option box 242. After selecting the networking mode, the user may tap the confirm button 246 to input a stereo establishment instruction. Correspondingly, the smart screen X determines, in response to the stereo establishment instruction, to establish stereo, and obtains the networking mode. The option box 244 is gray, indicating an unselectable state and indicating that the smart screen currently discovers a maximum of three speakers. In this implementation, the user may directly determine the networking mode in the pop-up box 21.

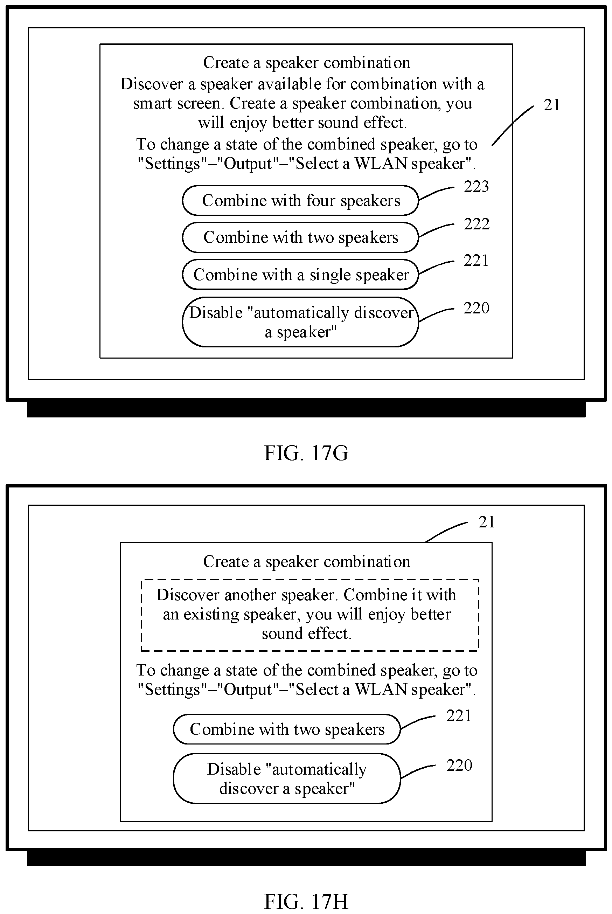

Optionally, a quantity of second audio devices discovered by the electronic device is greater than or equal to four, for example, in the scenario shown in FIG. 8. As shown in FIG. 17G, the pop-up box 21 may include a button 220, a button 221, a button 222, a button 223, and guide information. The guide information is consistent with the guide information in FIG. 17C and FIG. 17D, and details are not described again. Compared with FIG. 17D, FIG. 17G has the button 223 added to the pop-up box 21. The user may perform an operation on the button 223 to input a stereo establishment instruction. Correspondingly, the smart screen X determines, in response to the stereo establishment instruction, to establish stereo, and determines to establish stereo with four speakers. In this case, the target networking mode is the networking mode 4.

Optionally, in a third implementation, the electronic device is currently networked. The stereo establishment pop-up box may reflect whether a current networking mode can be changed and whether to re-establish stereo, to effectively guide the user to perform an operation. The stereo establishment pop-up box may be adjusted based on the foregoing first implementation and the foregoing second implementation. For example, FIG. 17H is applicable to the scenarios shown in FIG. 12 and FIG. 13, and is based on the second implementation. The pop-up box 21 may include a button 220, a button 221, and guide information. A difference between FIG. 17H and FIG. 17C lies in that the guide information is different. In FIG. 17H, a changed portion of the guide information is shown in a dashed box: "Discover another speaker. Combine it with an existing speaker, you will enjoy better sound effect". The different guide information is used to ask the user whether to change the current networking mode and re-establish stereo.

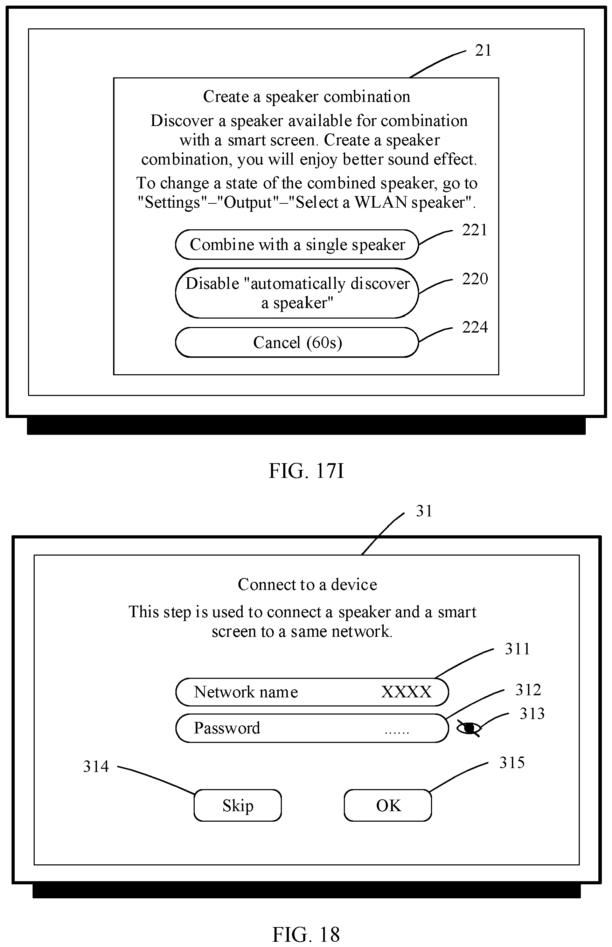

Optionally, in FIG. 17C, FIG. 17D, FIG. 17G, and FIG. 17H, the pop-up box 21 may further include a cancel button. For example, FIG. 17C is used as an example. For the pop-up box 21 including the cancel button 224, refer to FIG. 17I. For the cancel button 224, refer to the cancel button 213 in FIG. 17A. Principles are similar, and details are not described herein again.

Optionally, for the stereo establishment pop-up box, the user may perform a return operation by using an intermediate control device like a remote control or through voice control, to cancel stereo establishment. Correspondingly, in response to the operation of the user, the electronic device ends a stereo establishment process and closes the stereo establishment pop-up box. Optionally, before closing the stereo establishment pop-up box, the electronic device may display reminder information, where the reminder information is used to notify the user that the stereo establishment process is to end. The reminder information is displayed, so that the user further determines whether to end the stereo establishment process. This improves operation accuracy and avoids a misoperation.

It should be noted that FIG. 17A to FIG. 17I are merely examples, and constitute no limitation on the stereo establishment pop-up box and the related screen.

S1602: The electronic device receives the stereo establishment instruction input by the user, where the stereo establishment instruction instructs the electronic device to establish stereo or re-establish stereo.

S 1603 : The electronic device determines the target networking mode, and determines a to-be-networked target audio device determined by the user and a sound channel corresponding to the target audio device.

For ease of description, an audio device that is determined by the user and that is networked with the electronic device is referred to as the target audio device. Because the target audio device is determined by the user, the electronic device establishes stereo in compliance with an intention and a requirement of the user. This improves stereo establishment accuracy.

Optionally, the electronic device may determine the target networking mode based on the operation of the user or the instruction input by the user. For example, refer to the related descriptions in FIG. 17A to FIG. 17I. Details are not described herein again.

Optionally, the electronic device may locate the target audio device, and determine the target networking mode based on a quantity of target audio devices and a location relationship between the target audio devices and the electronic device.

Optionally, if the target networking mode is the networking mode 1, S1604 is performed.

Optionally, if the target networking mode is the networking mode 2 or the networking mode 3, there are two target audio devices. The method further includes: The electronic device determines whether product models of the two target audio devices are the same. If the product models of the two target audio devices are the same, S1604 is performed. If the product models of the two target audio devices are different, the self-networking process ends. Optionally, the electronic device outputs reminder information, where the reminder information indicates that the models of the audio devices for establishing stereo are different.

Optionally, if the target networking mode is the networking mode 4, there are four target audio devices. The method further includes: The electronic device determines whether models of two target audio devices configured as left and right sound channels are the same, and determines whether models of two target audio devices configured as left and right surround sound channels are the same. If the models of the two target audio devices configured as the left and right sound channels are the same, and the models of the two target audio devices configured as the left and right surround sound channels are the same, S1604 is performed. If the models of the two target audio devices configured as the left and right sound channels are different, or the models of the two target audio devices configured as the left and right surround sound channels are different, the self-networking process ends. Optionally, the electronic device outputs reminder information, where the reminder information indicates that the models of the audio devices for establishing stereo are different.

S1604: The electronic device sends Wi-Fi connection information to the target audio device.

Correspondingly, the target audio device receives the Wi-Fi connection information sent by the electronic device.

For the Wi-Fi connection information and a transmission manner of the Wi-Fi connection information, refer to S1503. Principles are similar, and details are not described herein again.

S1605: The electronic device establishes a Wi-Fi connection to the target audio device based on the Wi-Fi connection information.

Optionally, if the target audio device does not currently establish the Wi-Fi connection, the target audio device establishes the Wi-Fi connection to the electronic device based on the Wi-Fi connection information.

Optionally, if the target audio device has currently established a Wi-Fi connection to another device (for example, a routing device), the target audio device may cut off the Wi-Fi connection to the another device after receiving the Wi-Fi connection information, and then establish the Wi-Fi connection to the electronic device based on the Wi-Fi connection information.

After establishing the Wi-Fi connection to the target audio device, the electronic device may perform stereo-related configuration. This process is not limited in this embodiment. For example, the electronic device configures the sound channel for the target audio device. After the electronic device and the target audio device establish stereo, the electronic device outputs prompt information, where the prompt information indicates that stereo establishment succeeds. The electronic device and the target audio device play test audio, so that the user can feel stereo sound effect. The electronic device synchronizes configuration information to ensure that a setting menu of the electronic device is consistent with an actual networking state. For example, on the screen 12 shown in FIG. 14B, the "My device" function option displays an audio device that is actually networked.

It may be learned that, according to the stereo networking method provided in this embodiment, the audio device sends the Bluetooth broadcast message, and after receiving the Bluetooth broadcast message sent by the audio device, the electronic device may directly and automatically discover, based on the Bluetooth broadcast message, the audio device available for establishing stereo, and pop up to ask the user whether to establish stereo or change the current networking mode to re-establish stereo. After the user determines to establish stereo, the target networking mode and the to-be-networked target audio device determined by the user are determined, and the Wi-Fi connection to the target audio device is established to establish stereo. In this embodiment, because the target audio device is determined by the user, the electronic device and the target audio device determined by the user establish the Wi-Fi connection in compliance with an intention and a requirement of the user. This avoids that a Wi-Fi connection to another audio device affects proper operation of the another audio device. This improves stereo networking accuracy. According to the stereo networking method provided in this embodiment, it is not required that the electronic device and the audio device access a same local area network and have a same user account. This implements higher flexibility and efficiency of networking. In addition, user operations of configuring a network for the electronic device and the audio device in advance and configuring a combination of a plurality of audio devices are omitted, a user configuration step is simplified, and user experience is improved.

Optionally, before S1604, the stereo networking method provided in this embodiment may further include the following step.

S1606: If determining that no WLAN is configured for the target audio device, the electronic device configures a WLAN for the target audio device.

Specifically, the Bluetooth broadcast message may include network configuration information. The electronic device may determine, based on the network configuration information, whether a WLAN has been configured for the target audio device. If no WLAN is configured for the target audio device, the electronic device may configure a network for the target audio device, so that the target audio device and the electronic device access the same WLAN, to facilitate subsequent communication.

Optionally, that the electronic device configures a WLAN for the target audio device may include:

The electronic device displays an audio device network configuration screen, where the audio device network configuration screen is used to configure the WLAN for the target audio device.

The electronic device receives a network connection operation of the user.

The electronic device controls, in response to the network connection operation, the target audio device to access the WLAN.

Specific content and layout of the audio device network configuration screen are not limited in this embodiment.

For example, FIG. 18 is a schematic diagram of an audio device network configuration screen according to an embodiment of this application. As shown in FIG. 18, an audio device network configuration screen 31 includes a network name input box 311, a password input box 312, a control 313, a skip button 314, a confirm button 315, and guide information. For example, the guide information includes: "Connect to a device" and "This step is used to connect a speaker and a smart screen to a same network".

Optionally, in an implementation, the electronic device may obtain a name and a password of the WLAN, and pre-fill the name and the password in the network name input box 311 and the password input box 312. In this manner, the user does not need to manually fill in the information, and user experience is improved.

Optionally, in another implementation, the user may input a name and a password of the WLAN in the network name input box 311 and the password input box 312 respectively. In this manner, the user needs to manually input the information, to further determine that the target audio device and the electronic device access the same WLAN.

Optionally, the user may tap the control 313 to display or hide the password.

Optionally, the user may perform an operation on the skip button 314 to input a network configuration cancel instruction. Correspondingly, the electronic device ends, in response to the network configuration cancel instruction, the process of setting the WLAN for the target audio device.

Optionally, the user may perform an operation on the confirm button 315 to input a network connection instruction. Correspondingly, the electronic device controls, in response to the network connection instruction, the target audio device to access the WLAN.

It may be understood that, in a process in which the electronic device controls the target audio device to access the WLAN, information interaction may exist between the electronic device and the target audio device. Therefore, the target audio device may obtain the name and the password of the WLAN, and access the WLAN.

Optionally, if there are a plurality of target audio devices that require network configuration, the audio device network configuration screen 31 may include icons of the plurality of target audio devices and prompt information. The prompt information may indicate a network configuration progress and a network configuration result of each target audio device. A sequence in which the electronic device controls the plurality of target audio devices to access the WLAN is not limited in embodiments of this application.

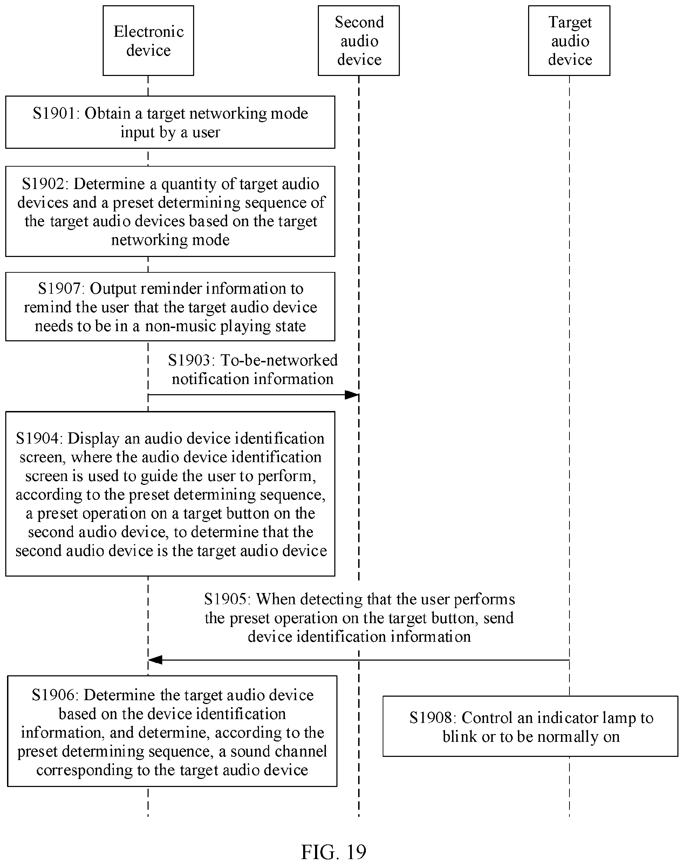

Based on the embodiment shown in FIG. 16, FIG. 19 is still another flowchart of a stereo networking method according to an embodiment of this application. This embodiment provides an implementation in S1603: The electronic device determines the target networking mode, and determines a to-be-networked target audio device determined by the user and a sound channel corresponding to the target audio device. In this embodiment, the user presses a button on the audio device to determine that the audio device is the target audio device. This improves accuracy of determining the target audio device by the user, further improves accuracy of networking between the electronic device and the target audio device, and avoids incorrect networking. When the electronic device is networked with the plurality of target audio devices, the electronic device may guide the user to sequentially determine the target audio devices according to a preset determining sequence. This is a simple implementation.

As shown in FIG. 19, in S1603, that the electronic device determines the target networking mode may include the following step.

S1901: The electronic device obtains the target networking mode input by the user.

For example, refer to the related descriptions in FIG. 17A to FIG. 17I. Details are not described herein again.

In S1603, that the electronic device determines a to-be-networked target audio device determined by the user and a sound channel corresponding to the target audio device may include the following steps.

S1902: The electronic device determines a quantity of target audio devices and a preset determining sequence of the target audio devices based on the target networking mode.

If the target networking mode is the networking mode 1, there is one target audio device, and the preset determining sequence of the target audio devices is: determining the one target audio device.

If there are a plurality of target audio devices, the preset determining sequence is not limited in this embodiment.

Optionally, if the target networking mode is the networking mode 2, there are two target audio devices, and the preset determining sequence may be: determining a target audio device of a left sound channel, and then determining a target audio device of a right sound channel.

Optionally, if the target networking mode is the networking mode 3, there are two target audio devices, and the preset determining sequence may be: determining a target audio device of a left surround sound channel, and then determining a target audio device of a right surround sound channel.

Optionally, if the target networking mode is the networking mode 4, there are four target audio devices, and the preset determining sequence may be: determining a target audio device of a left sound channel, determining a target audio device of a right sound channel, determining a target audio device of a left surround sound channel, and finally determining a target audio device of a right surround sound channel.

S 1903 : The electronic device sends to-be-networked notification information to the second audio device. Correspondingly, the second audio device receives the to-be-networked notification information sent by the electronic device.

The to-be-networked notification information indicates the second audio device to detect whether the user performs a preset operation on a target button on the second audio device, to determine that the second audio device is the target audio device.

Optionally, in an implementation, the electronic device and the audio device agree on the target button and the preset operation in advance. In this way, the to-be-networked notification information serves as notification. This reduces an information size of the to-be-networked notification information, and reduces an amount of data transmitted over an air interface.

Optionally, in another implementation, the to-be-networked notification information may include identification information and button operation information of the target button, and the button operation information is used to describe the preset operation performed by the user on the target button. In this implementation, the target button and the preset operation are more flexible.

It should be noted that the target button and the preset operation are not limited in this embodiment. Optionally, the target button may be a newly added button on the audio device. Optionally, to reduce modification of the audio device, the target button may be an existing button on the audio device. For example, the target button is a mute button or a play button. In this case, the to-be-networked notification information indicates the second audio device to modify the meaning of the target button for preset duration, so that the user performs the preset operation on the target button. A unit and a value of the preset duration are not limited in this embodiment. For example, the unit of the preset duration is second.

For a manner of sending the to-be-networked notification information, optionally, in an implementation, the electronic device sends a BLE broadcast message to the second audio device, where the BLE broadcast message includes the to-be-networked notification information. In this implementation, a BLE connection may not be established between the electronic device and the second audio device. This saves a message process.

Optionally, in another implementation, if the electronic device has established a BLE connection to the second audio device, the electronic device may send the to-be-networked notification information to the second audio device through the BLE connection.

Optionally, in still another implementation, if the electronic device does not establish a BLE connection to the second audio device, the electronic device may establish the BLE connection to the second audio device, and send the to-be-networked notification information to the second audio device through the BLE connection.

Optionally, in still another implementation, both the electronic device and the second audio device are connected to a same wireless local area network established by the routing device. For example, the electronic device may determine based on the network configuration information in the Bluetooth broadcast message. The electronic device may forward the to-be-networked notification information to the second audio device through the routing device. Correspondingly, the second audio device receives, through the routing device, the to-be-networked notification information sent by the electronic device.

S 1904: The electronic device displays an audio device identification screen. The audio device identification screen is used to guide the user to perform, according to the preset determining sequence, the preset operation on the target button on the second audio device, to determine that the second audio device is the target audio device.

Generally, a quantity of buttons on the audio device is limited, and all buttons have preset functions, for example, a play button, a pause button, a previous button, a next button, and the like. The existing button is reused, so that the user can determine to establish stereo with the electronic device by pressing the button on the audio device. This avoids adding a new button to the audio device, and implementation is simple.

Different target networking modes indicate different quantities of target audio devices and different implementations of the audio device identification screen. The following uses an example for description.

Optionally, if the target networking mode is the networking mode 1, there is one target audio device, and the audio device identification screen is used to guide the user to determine the one target audio device.

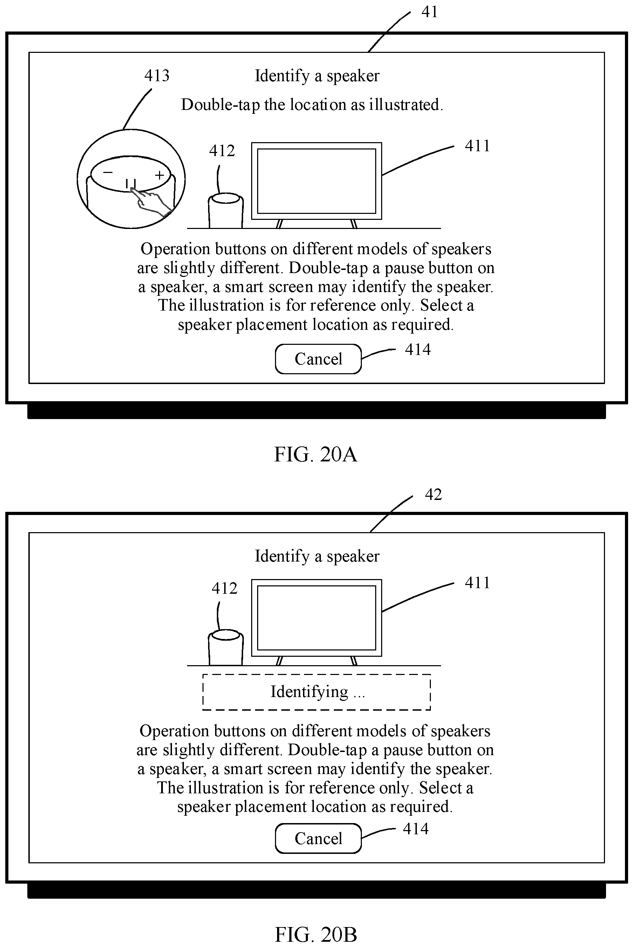

For example, as shown in FIG. 20A, the audio device identification screen is applicable to the scenario shown in FIG. 4, FIG. 10, or FIG. 11.

As shown in FIG. 20A, an audio device identification screen 41 includes a smart screen pattern 411, a speaker pattern 412, a button pattern 413, a cancel button 414, and guide information. For example, the guide information includes: "Identify a speaker", "Double-tap the location as illustrated", and "Operation buttons on different models of speakers are slightly different. Double-tap a pause button on a speaker, a smart screen may identify the speaker. The illustration is for reference only. Select a speaker placement location as required". The button pattern 413 and the guide information may be used to guide the user to double-tap a pause button on a speaker, to determine that the speaker establishes stereo with the electronic device.

Optionally, in a process in which the user presses a button to determine the target audio device, the user may perform an operation on the cancel button 414 to input a device identification cancel instruction. Correspondingly, the smart screen ends the self-networking process in response to the device identification cancel instruction.

Optionally, if the target networking mode is the networking mode 2, the preset determining sequence is: determining the target audio device of the left sound channel, and then determining the target audio device of the right sound channel.

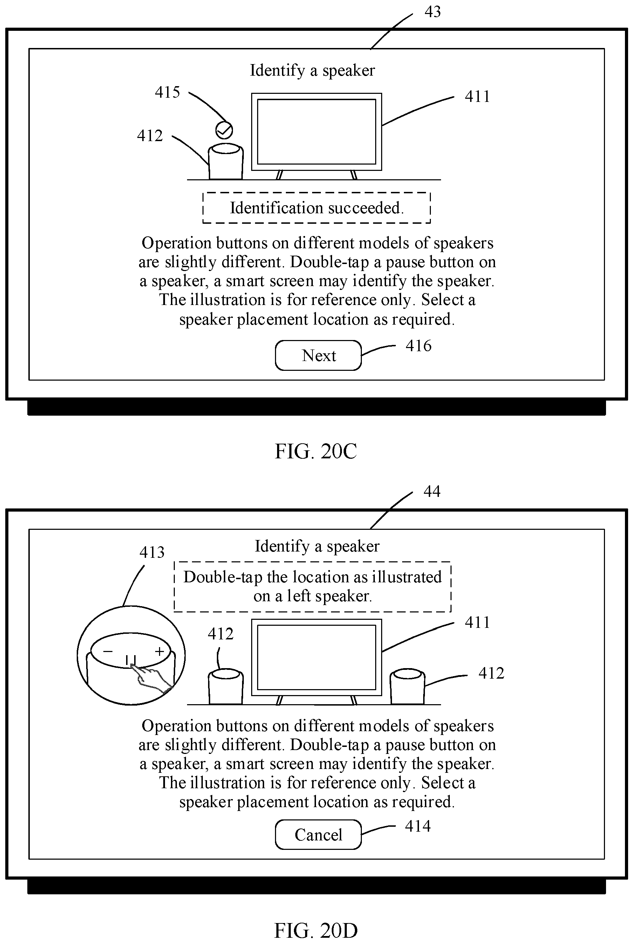

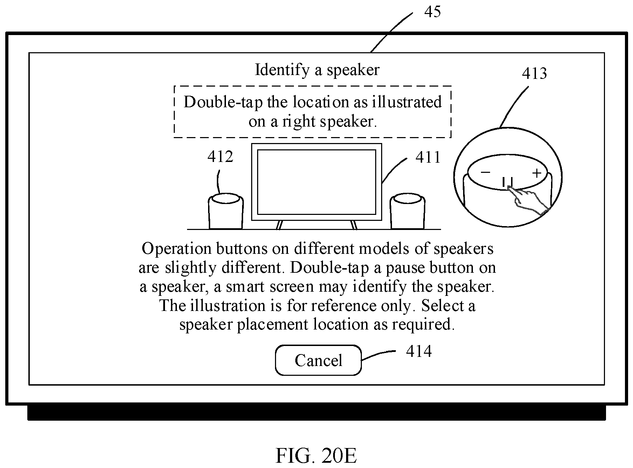

For example, FIG. 20D and FIG. 20E are applicable to the scenario shown in FIG. 5, FIG. 6, FIG. 9, FIG. 12, or FIG. 13.

The electronic device first displays an audio device identification screen 44 shown in FIG. 20D, to guide the user to determine the target audio device of the left sound channel. The audio device identification screen 44 includes a smart screen pattern 411, two speaker patterns 412, a button pattern 413, a cancel button 414, and guide information. A difference between FIG. 20D and FIG. 20A lies in that there is one more speaker pattern 412, and the guide information above the smart screen pattern 411 is changed from "Double-tap the location as illustrated" to "Double-tap the location as illustrated on a left speaker", as shown in a dashed box in FIG. 20D.

After the user double-taps a pause button on the target audio device on the left side, the electronic device determines the target audio device of the left sound channel. The electronic device displays an audio device identification screen 45 shown in FIG. 20E, and continues to guide the user to determine the target audio device of the right sound channel. A difference between FIG. 20E and FIG. 20D lies in that the button pattern 413 is moved from the left to the right, and the guide information above the smart screen pattern 411 is changed from "Double-tap the location as illustrated on a left speaker" to "Double-tap the location as illustrated on a right speaker", as shown in a dashed box in FIG. 20E.

S1905: When detecting that the user performs the preset operation on the target button, the second audio device (the target audio device) sends device identification information to the electronic device, where the device identification information indicates that the second audio device is the target audio device.

Specifically, after receiving the to-be-networked notification information, the second audio device detects whether the user performs the preset operation on the target button. When detecting that the user performs the preset operation on the target button, the second audio device is determined as the target audio device, needs to be networked with the electronic device, and sends the device identification information to the electronic device.

Optionally, in an implementation, the second audio device sends the BLE broadcast message to the electronic device, where the BLE broadcast message includes the device identification information. In this implementation, a BLE connection may not be established between the electronic device and the second audio device. This saves a message process. Optionally, the device identification information may be a specific bit in the BLE broadcast message, and a value of the specific bit is modified to indicate that the second audio device is the target audio device.

Optionally, in another implementation, if the electronic device has established a BLE connection to the second audio device, the second audio device may send the device identification information to the electronic device through the BLE connection.

Optionally, in still another implementation, both the electronic device and the second audio device are connected to a same wireless local area network established by the routing device. For example, the second audio device receives, through the routing device, the to-be-networked notification information sent by the electronic device. The second audio device may forward the device identification information to the electronic device through the routing device.

Optionally, the second audio device may further send to the electronic device at least one of the following items: the identification information or the button operation information of the target button.

S1906: The electronic device determines the target audio device based on the device identification information, and determines, according to the preset determining sequence, the sound channel corresponding to the target audio device.

Specifically, because the electronic device guides, according to the preset determining sequence, the user to sequentially press the button on the target audio device, sound channels corresponding to different target audio devices may be determined according to a sequence of receiving the device identification information and the preset determining sequence. For example, in the networking mode 2, a target audio device corresponding to first received device identification information is determined as a left sound channel audio device, and a target audio device corresponding to later received device identification information is determined as a right sound channel audio device.

It may be learned that, according to the stereo networking method provided in this embodiment, the user presses the button on the audio device to determine that the audio device is networked with the electronic device. This improves accuracy of determining a to-be-networked audio device. When there are a plurality of target audio devices, the electronic device guides, according to the preset determining sequence, the user to sequentially press the button on each target audio device. Accuracy of determining the target audio device is high. This is a simple implementation.

Optionally, after S1906, the stereo networking method provided in this embodiment may further include:
The electronic device outputs prompt information, where the prompt information indicates that the electronic device successfully determines the target audio device.

For example, the prompt information is described by using the networking mode 1 as an example. The smart screen displays the audio device identification screen 41 shown in FIG. 20A. After the smart screen determines a speaker on which the user presses a button, the audio device identification screen 41 is changed to an audio device identification screen 43, as shown in FIG. 20C. On the audio device identification screen 43, the prompt information may include: "Identification succeeded", as shown in a dashed box in the figure, to notify the user that the smart screen successfully determines a target speaker, and may perform a subsequent self-networking process.

Optionally, the prompt information may further include a pattern 415, to notify the user that the smart screen successfully determines the target speaker.

Optionally, the audio device identification screen 43 further includes a next button 416. The user may perform an operation on the next button 416 to continue the self-networking process.

Optionally, before S1906, the stereo networking method provided in this embodiment may further include:
The electronic device outputs prompt information, where the prompt information indicates that the electronic device is determining the target audio device.

The prompt information may be used to explicitly notify the user that the electronic device is currently determining the target audio device, and prompt the user to wait. This improves user experience.

For example, the prompt information is described by using the networking mode 1 as an example. Still refer to FIG. 20A. The audio device identification screen 41 may be changed to an audio device identification screen 42, as shown in FIG. 20B. On the audio device identification screen 42, the prompt information may include: "Identifying ...", as shown in a dashed box in the figure, to notify the user that the electronic device is currently processing, and prompt the user to wait.

Optionally, before S1903, the stereo networking method provided in this embodiment may further include the following step.

S 1907: The electronic device outputs reminder information, where the reminder information is used to remind the user that the target audio device needs to be in a non-music playing state.

The reminder information is output, to ensure that the target audio device is in the non-music playing state and information can be transmitted between the target audio device and the electronic device. This improves accuracy of determining the target audio device by the user.

Optionally, after the second audio device detects that the user performs the preset operation on the target button in S 1905, the stereo networking method provided in this embodiment may further include the following step.

S 1908: The second audio device controls an indicator to blink or to be normally on.

Optionally, the second audio device may control the indicator to blink for a preset quantity of times or for preset duration, or control the indicator to be normally on for preset duration.

The second audio device can visually prompt, by controlling the indicator to blink or to be normally on, the user that the preset operation on the target button takes effect, and determine to be networked with the electronic device. This improves user experience.

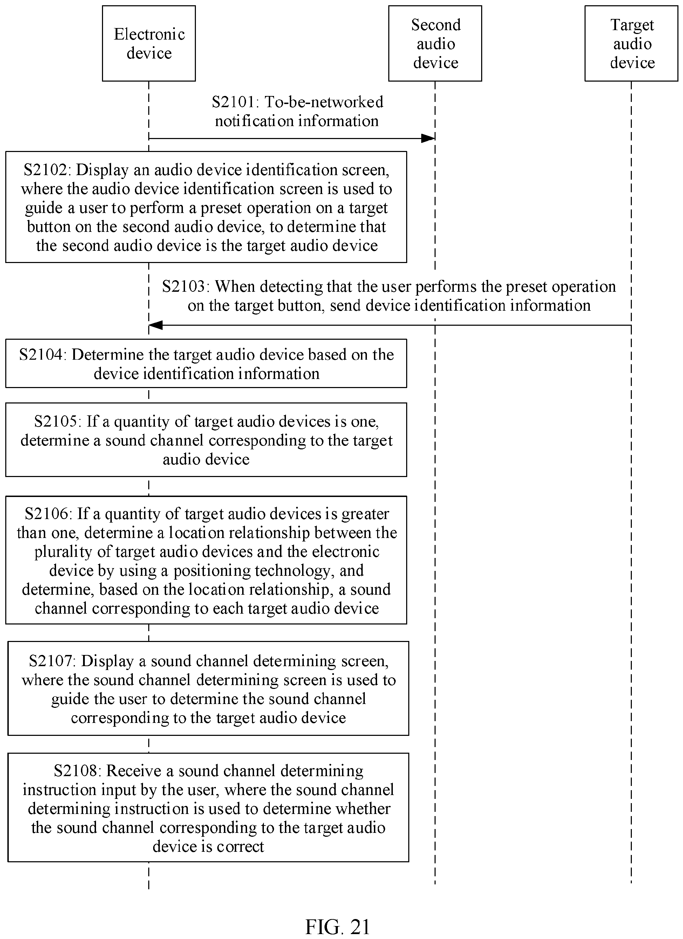

Based on the embodiment shown in FIG. 16, FIG. 21 is still another flowchart of a stereo networking method according to an embodiment of this application. This embodiment provides an implementation in S1603: The electronic device determines the target networking mode, and determines a to-be-networked target audio device determined by the user and a sound channel corresponding to the target audio device. In this embodiment, the user presses a button on the audio device to determine that the audio device is the target audio device. This improves accuracy of determining the target audio device by the user, further improves accuracy of networking between the electronic device and the target audio device, and avoids incorrect networking. When the electronic device is networked with a plurality of target audio devices, a sequence of buttons pressed by the user on the audio device is not limited. The electronic device determines a location relationship between a plurality of target audio devices and the electronic device by using a positioning technology, and then determines the sound channel corresponding to the target audio device. This reduces a limitation on the sequence of the user operations, provides a flexible implementation, and improves user experience.

As shown in FIG. 21, in S1603, that the electronic device determines a to-be-networked target audio device determined by the user and a sound channel corresponding to the target audio device may include the following steps.

S2101: The electronic device sends to-be-networked notification information to the second audio device. Correspondingly, the second audio device receives the to-be-networked notification information sent by the electronic device.

Refer to S1903. Principles are similar, and details are not described herein again.

S2102: The electronic device displays an audio device identification screen, where the audio device identification screen is used to guide the user to perform a preset operation on a target button on the second audio device, to determine that the second audio device is the target audio device.

A quantity of target audio devices and a sequence in which the user presses buttons to determine the target audio devices are not limited in this embodiment.

Content and layout of the audio device identification screen are not limited in this embodiment.

Optionally, if the electronic device obtains the target networking mode, the quantity of target audio devices may be determined based on the target networking mode, and the audio device identification screen may be related to the quantity of target audio devices. The following uses an example for description.

Optionally, if the target networking mode is the networking mode 1, there is one target audio device, and the audio device identification screen is used to guide the user to determine the one target audio device. For the audio device identification screen, refer to FIG. 20A.

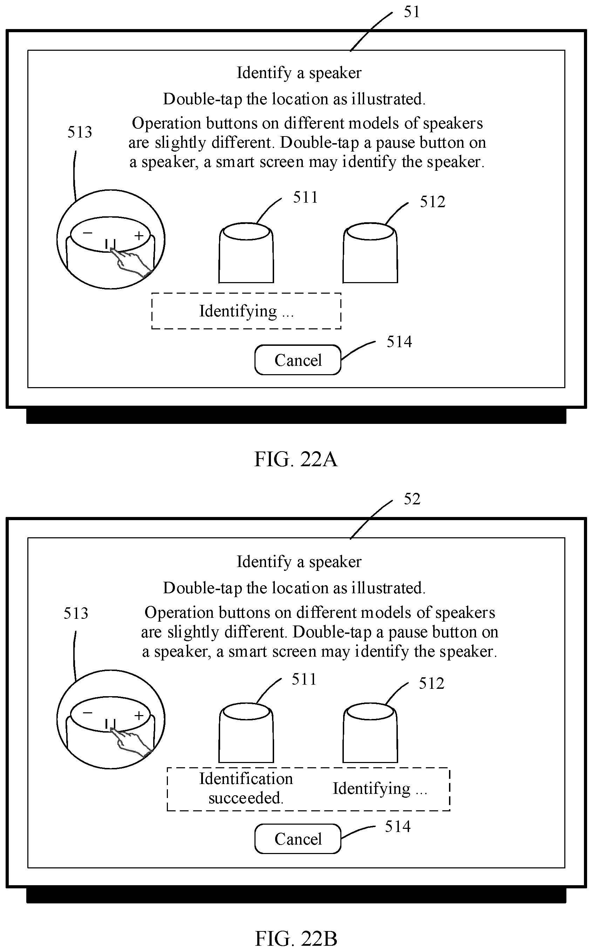

Optionally, if the target networking mode is the networking mode 2, there are two target audio devices, and the audio device identification screen is used to guide the user to determine the two target audio devices. For example, for the audio device identification screen, refer to FIG. 22A.

As shown in FIG. 22A, an audio device identification screen 51 includes a speaker pattern 511, a speaker pattern 512, a button pattern 513, a cancel button 514, and guide information. For example, the guide information includes: "Identify a speaker", "Double-tap the location as illustrated", and "Operation buttons on different models of speakers are slightly different. Double-tap a pause button on a speaker, a smart screen may identify the speaker". The button pattern 513 and the guide information may be used to guide the user to double-tap a pause button on a speaker, to determine the target audio device.

Optionally, the user may perform an operation on the cancel button 514 to input a device identification cancel instruction. Correspondingly, the smart screen ends the self-networking process in response to the device identification cancel instruction.

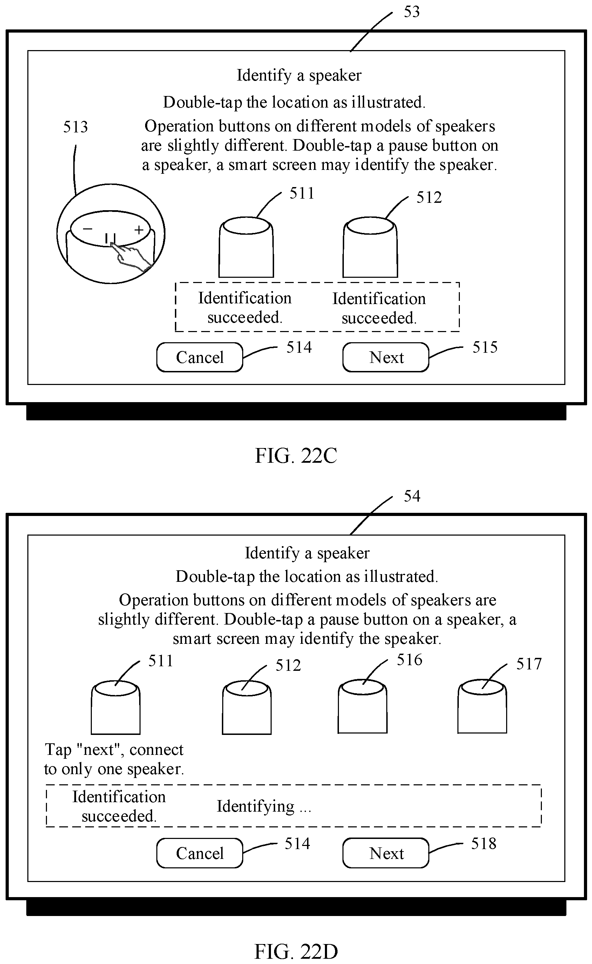

After the user double-taps a pause button on a 1^{st} speaker, the electronic device determines a 1^{st} target audio device. The audio device identification screen 51 is changed to an audio device identification screen 52, as shown in FIG. 22B. The user continues to be guided to determine a 2^{nd} target audio device. After the user double-taps a pause button on a 2^{nd} speaker, the electronic device determines the 2^{nd} target audio device. The audio device identification screen 52 is changed to an audio device identification screen 53, as shown in FIG. 22C. Optionally, the audio device identification screen 53 further includes a next button 515. The user may perform an operation on the next button 515 to continue the self-networking process.

Optionally, if the electronic device does not obtain the target networking mode or does not determine the quantity of target audio devices, the audio device identification screen is applicable to all different quantities of target audio devices. For example, for the audio device identification screen, refer to FIG. 22D.

As shown in FIG. 22D, an audio device identification screen 54 includes a speaker pattern 511, a speaker pattern 512, a speaker pattern 516, a speaker pattern 517, a cancel button 514, a next button 518, and guide information. For example, the guide information includes: "Identify a speaker", "Double-tap the location as illustrated", and "Operation buttons on different models of speakers are slightly different. Double-tap a pause button on a speaker, a smart screen may identify the speaker". The audio device identification screen 54 may be used to guide the user to press buttons to determine a maximum of four speakers.

Optionally, in a process in which the user presses a button to determine the target audio device, the user may perform an operation on the cancel button 514 to input a device identification cancel instruction. Correspondingly, the smart screen ends the self-networking process in response to the device identification cancel instruction.

Optionally, in a process in which the user presses a button to determine the target audio device, the user may perform an operation on the next button 518 to input a device identification determining instruction. Correspondingly, the smart screen determines the quantity of target audio devices in response to the device identification determining instruction, and continues the self-networking process. For example, the user uses the smart screen and one speaker to establish stereo. After the user presses a button on a speaker, the smart screen determines one speaker. In this case, as shown in FIG. 22D, the text "Tap "next", connect to only one speaker" may be displayed below the speaker pattern 511, to guide the user to tap the next button 518 to continue the self-networking process.

Optionally, after the smart screen receives the device identification determining instruction input by the user, or does not receive the device identification information sent by the second audio device within preset duration, the smart screen may display prompt information to notify the user of a current quantity of determined target audio devices, and ask whether to continue to establish stereo.

S2103 : When detecting that the user performs the preset operation on the target button, the second audio device (the target audio device) sends device identification information to the electronic device, where the device identification information indicates that the second audio device is the target audio device.

Refer to S1905. Principles are similar, and details are not described herein again.

S2104: The electronic device determines the target audio device based on the device identification information.

Then, S2105 or S2106 is performed.

S2105: If a quantity of target audio devices is one, the electronic device determines the sound channel corresponding to the target audio device.

S2106: If a quantity of target audio devices is greater than one, the electronic device determines a location relationship between the plurality of target audio devices and the electronic device by using a positioning technology, and determines, based on the location relationship, a sound channel corresponding to each target audio device.

Optionally, the location relationship includes but is not limited to a distance or an angle between the target audio device and the electronic device.

Generally, when location of the target audio device relative to the electronic device are different, corresponding sound channels are different. Refer to the foregoing descriptions of the networking modes. In this embodiment, the electronic device determines the location relationship between the plurality of target audio devices and the electronic device by using the positioning technology, and then determines the sound channel corresponding to each target audio device. This avoids that the user presses buttons on the target audio device in a specific order, and improves user experience.

Optionally, when there are two target audio devices, in an implementation, the positioning technology may be used for one target audio device to determine a location relationship between the target audio device and the electronic device.

In this implementation, there are two target audio devices, and the two target audio devices usually use the networking mode 2 or the networking mode 3. Therefore, when a location of one target audio device is determined, a location of the other target audio device is determined by default. This reduces a calculation amount. For example, if one electronic device is located on a left side of the electronic device, the other target audio device is located on a right side of the electronic device by default, and the two target audio devices use the networking mode 2.

Optionally, when there are two target audio devices, in an implementation, the positioning technology may be used for the two target audio device to determine a location relationship between the target audio devices and the electronic device. In this implementation, the location relationship is determined more accurately.

The positioning technology is not limited in this embodiment, for example, an ultra wide band (Ultra Wide Band, UWB) positioning technology, a Bluetooth positioning technology, an ultrasonic positioning technology, or the like.

The ultrasonic positioning technology is described below. That the electronic device determines a location relationship between the plurality of target audio devices and the electronic device by using the ultrasonic positioning technology may include:

The electronic device establishes a BLE connection to the target audio device.

The electronic device sends ultrasonic detection information to the target audio device through the BLE connection. Correspondingly, the target audio device receives the ultrasonic detection information sent by the electronic device. The ultrasonic detection information is a related parameter in ultrasonic positioning detection, and specific content is not limited in this embodiment.

The target audio device simultaneously sends ultrasonic signals by using a plurality of horns on the target audio device. Correspondingly, the electronic device receives the ultrasonic signals simultaneously sent by the target audio device by using the plurality of horns.

The electronic device determines the location relationship between the target audio device and the electronic device based on the plurality of received ultrasonic signals.

Specifically, there are the plurality of horns on the target audio device, and locations and/or directions of the plurality of horns are different. The plurality of horns simultaneously send the ultrasonic signals. Correspondingly, the electronic device performs ranging and/or angle measurement based on the plurality of received ultrasonic signals, to determine the location relationship between the target audio device and the electronic device. For example, it is determined that the target audio device is located on the left side or the right side of the electronic device, or it is determined that the target audio device is located in front of or on a side of the electronic device.

It may be learned that, according to the stereo networking method provided in this embodiment, the user presses the button on the audio device to determine that the audio device is networked with the electronic device. This improves accuracy of determining a to-be-networked audio device. When there are a plurality of target audio devices, a sequence of buttons pressed by the user is not limited, and the electronic device determines locations of the plurality of target audio devices, and then determines the sound channel corresponding to each target audio device. The implementation is more flexible, and user experience is improved.

Optionally, after S2106, the stereo networking method provided in this embodiment may further include the following steps.

S2107: The electronic device displays a sound channel determining screen, where the sound channel determining screen is used to guide the user to determine the sound channel corresponding to the target audio device.

S2108: The electronic device receives a sound channel determining instruction input by the user, where the sound channel determining instruction is used to determine whether the sound channel corresponding to the target audio device is correct.

The sound channel determining screen is displayed to the user, so that a location and the sound channel that are of the target audio device and that are determined by the electronic device by using the positioning technology are further determined by the user. This improves stereo establishment accuracy. This avoids a stereo establishment error caused by an error in positioning the audio device by the electronic device.

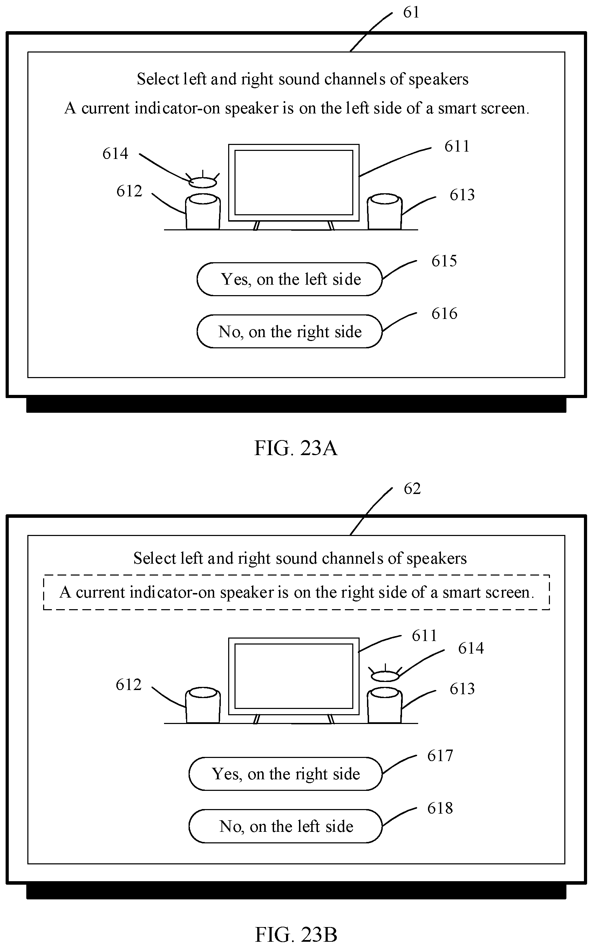

The following uses the networking mode 2 as an example to describe the sound channel determining screen with reference to FIG. 23A and FIG. 23B, but this is not limited. In the networking mode 2, there are two target audio devices corresponding to a left sound channel and a right sound channel respectively.

As shown in FIG. 23A, a sound channel determining screen 61 includes a smart screen pattern 611, a speaker pattern 612, a speaker pattern 613, a pattern 614, a button 615, a button 616, and guide information. For example, the guide information includes: "Select left and right sound channels of speakers" and "A current indicator-on speaker is on the left side of a smart screen". The pattern 614 indicates that the speaker located on the left side of the smart screen is currently lit on. The pattern 614 and the guide information may be used to guide the user to determine a left sound channel speaker.

In an actual environment, if the speaker located on the left side of the smart screen is currently lit on, the user may tap the button 615 to input a sound channel determining instruction, and determine that the left sound channel corresponding to the left speaker is correct. In an actual environment, if the speaker located on the right side of the smart screen is currently lit on, the user may tap the button 616 to input a sound channel determining instruction, and determine that the right speaker corresponds to the left sound channel, so that the electronic device performs sound channel adjustment.

Optionally, if there are two target audio devices, in an implementation, the electronic device may determine, by using the sound channel determining screen, a sound channel corresponding to one target audio device, and further determine, by default, a sound channel corresponding to the other target audio device.

In another implementation, the electronic device may determine, by using the sound channel determining screen, sound channels corresponding to the two target audio devices. This improves accuracy. For example, as shown in FIG. 23B, a sound channel determining screen 62 is used by the user to determine the right sound channel. A difference between the sound channel determining screen 62 and the sound channel determining screen 61 lies in that the pattern 614 is moved from the left to the right, and the text above the smart screen pattern 611 is changed from "A current indicator-on speaker is on the left side of a smart screen" to "A current indicator-on speaker is on the right side of a smart screen". For details, refer to a dashed box in the figure. In addition, the button 617 is used by the user to determine that the right speaker corresponds to the right sound channel, and the button 618 is used by the user to determine that the left speaker corresponds to the right sound channel.

It may be understood that, in a process in which the electronic device displays the sound channel determining screen to guide the user to determine the sound channel corresponding to the target audio device, information interaction exists between the electronic device and the target audio device, so that the electronic device can control the audio device to perform a corresponding action, for example, an indicator-on operation shown in FIG. 23A or FIG. 23B. Interaction information transmitted between the electronic device and the target audio device, a transmission manner of the interaction information, and an action executed by the controlled target audio device in the process are not limited in this embodiment. For example, information may be transmitted by using the Bluetooth broadcast message, the BLE connection, or the routing device. For example, the target audio device may be controlled to play a sound.

Optionally, after S2104, the stereo networking method provided in this embodiment may further include:
The electronic device outputs prompt information, where the prompt information indicates that the electronic device successfully determines the target audio device.

For example, for the prompt information, refer to the text "Identification succeeded" in dashed boxes in FIG. 22B to FIG. 22D.

Optionally, before S2104, the stereo networking method provided in this embodiment may further include:
The electronic device outputs prompt information, where the prompt information indicates that the electronic device is determining the target audio device.

For example, for the prompt information, refer to the text "Identifying ..." in dashed boxes in FIG. 22A to FIG. 22D.

Optionally, before S2101, the stereo networking method provided in this embodiment may further include:
The electronic device outputs reminder information, where the reminder information is used to remind the user that the target audio device needs to be in a non-music playing state.

Refer to S1907. Principles are similar, and details are not described herein again.

Optionally, after the second audio device detects that the user performs the preset operation on the target button in S2103, the stereo networking method provided in this embodiment may further include:
The second audio device controls an indicator to blink or to be normally on.

Refer to S1908. Principles are similar, and details are not described herein again.

The following describes an implementation in which the electronic device determines the target networking mode in S1603.

Optionally, in an implementation, that the electronic device determines the target networking mode may include:
The electronic device obtains the target networking mode input by the user.

For example, refer to the related descriptions in FIG. 17A to FIG. 17I. Details are not described herein again.

In this implementation, a sequence of performing this step and S2101 to S2108 is not limited.

Optionally, in another implementation, that the electronic device determines the target networking mode is performed after S2106. That the electronic device determines the target networking mode includes:
If the quantity of target audio devices is one, the electronic device determines that the target networking mode is the networking mode 1.

If the quantity of target audio devices is greater than one, after S2106, the electronic device determines the target networking mode based on the location relationship. In this implementation, the electronic device determines the locations of the plurality of target audio devices by using the positioning technology, and the locations of the target audio devices are different in different networking modes. Refer to the foregoing descriptions of the networking modes. Therefore, the electronic device may determine the target networking mode based on the quantity of target audio devices and a distance and/or an angle between the target audio device and the electronic device.

Optionally, based on the foregoing embodiment, in still another embodiment of this application, a co-room detection mechanism is provided. The same-room detection mechanism is used to determine whether the electronic device and the audio device are in a same room. This improves rationality and accuracy of establishing stereo by the electronic device and the audio device, and avoids incorrect networking. In a scenario in which the electronic device and the audio device are reconnected, a first audio device that is discovered by the electronic device and not in a same room as the electronic device and that is in the to-be-reconnected first audio device may be filtered out by using the same-room detection mechanism. Similarly, in the self-networking process, a second audio device that is discovered by the electronic device and not in a same room as the electronic device and that is in a second audio device available for establishing stereo may be filtered out by using the same-room detection mechanism.

In the same-room detection mechanism, propagation characteristics of different types of signals for different obstacles may be considered, and whether the electronic device and the audio device are in a same room may be determined based on a sent or received signal. For example, different rooms are usually separated by walls, and wall-penetrating capabilities of different types of signals can be considered. A type of a signal is not limited in this embodiment, for example, an ultrasonic signal, a Bluetooth signal, or a UWB signal.

That the same-room detection mechanism is implemented by using the ultrasonic signal is described below.

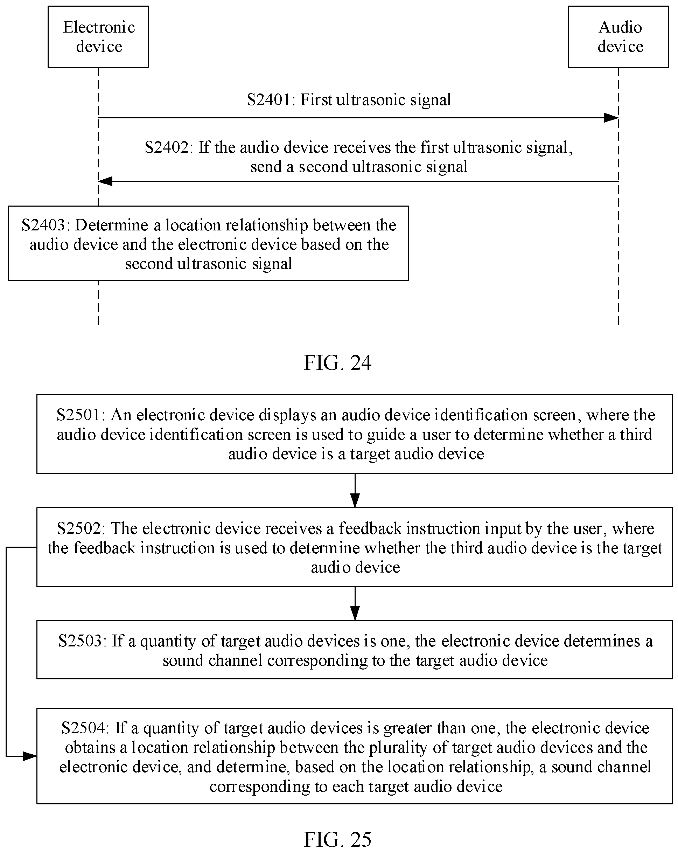

Optionally, in the reconnection scenario shown in FIG. 15, for example, in the scenario shown in FIG. 10, the same-room detection mechanism may be performed before S1503. Alternatively, in the self-networking process shown in FIG. 16, FIG. 19, or FIG. 21, for example, in the scenario shown in FIG. 9, the same-room detection mechanism may be performed before the stereo establishment pop-up box is displayed on the current display screen in S 1601. As shown in FIG. 24, the stereo networking method provided in this embodiment may further include the following steps.

S2401: The electronic device sends a first ultrasonic signal to the audio device. Correspondingly, the audio device receives the first ultrasonic signal sent by the electronic device.

Specifically, in the reconnection scenario, the audio device is the first audio device. In the self-networking process, the audio device is the second audio device.

S2402: If the audio device receives the first ultrasonic signal sent by the electronic device, send a second ultrasonic signal to the electronic device.

Correspondingly, the electronic device receives the second ultrasonic signal sent by the audio device.

Optionally, the method may further include the following step.

S2403: The electronic device determines a location relationship between the audio device and the electronic device based on the received second ultrasonic signal.

Specifically, a wall-penetrating capability of the ultrasonic signal is weak. When the electronic device and the audio device are located in a same room, the audio device may receive the first ultrasonic signal sent by the electronic device, and the electronic device may receive the second ultrasonic signal sent by the audio device. When the electronic device and the audio device are not in a same room, the audio device usually cannot receive the first ultrasonic signal sent by the electronic device. Certainly, the audio device does not perform S2402. Therefore, based on propagation characteristics of the ultrasonic signal, the electronic device may determine, based on whether the second ultrasonic signal is received, whether the electronic device and the audio device are in a same room. In addition, when the audio device transmits the ultrasonic signal, a current playing action is stopped, for example, a currently played song is stopped. The electronic device first sends the first ultrasonic signal, and the audio device replies with the second ultrasonic signal. This avoids disturbance to the audio device located in a different room. Further, after receiving the second ultrasonic signal which the audio device replies with, the electronic device may determine the location relationship between the audio device and the electronic device based on the second ultrasonic signal.

A manner of sending the ultrasonic signal by the electronic device or the audio device is not limited in this embodiment. For example, the signal may be sent by using one horn, or may be simultaneously sent by using a plurality of horns.

Optionally, in another implementation in which the same-room detection mechanism is implemented by using the ultrasonic signal, the electronic device may send interaction information to the audio device, to instruct the audio device to send the ultrasonic signal. If the electronic device receives the ultrasonic signal sent by the audio device, it is determined that the electronic device and the audio device are located in a same room. If the electronic device does not receive the ultrasonic signal sent by the audio device, it is determined that the electronic device and the audio device are not in a same room. Content and a transmission manner of the interaction information are not limited in this implementation. For example, the information may be transmitted by using the Bluetooth broadcast message or the routing device.

Optionally, based on the foregoing same-room detection mechanism, another embodiment of this application provides an implementation in S 1603 : The electronic device determines the target networking mode, and determines a to-be-networked target audio device determined by the user and a sound channel corresponding to the target audio device. In this embodiment, the electronic device may determine, by using the same-room detection mechanism, a second audio device that is in a same room as the electronic device and that can be used for establishing stereo. For ease of description, the second audio device that is in a same room as the electronic device and that can be used for establishing stereo is referred to as a third audio device. The electronic device displays the third audio device by using the man-machine interaction process with the user, to guide the user to determine whether the third audio device is the target audio device. The user does not need to press a button on the audio device. This simplifies user operations and improves user experience. When the electronic device is networked with a plurality of target audio devices, the electronic device automatically determines the sound channel corresponding to the target audio device based on the location relationship between the plurality of target audio devices and the electronic device. This provides a flexible implementation and improves user experience.

As shown in FIG. 25, in S1603, that the electronic device determines a to-be-networked target audio device determined by the user and a sound channel corresponding to the target audio device may include the following steps.

S2501: The electronic device displays an audio device identification screen, where the audio device identification screen includes at least one third audio device, and the audio device identification screen is used to guide the user to determine whether the third audio device is the target audio device.

Content and layout of the audio device identification screen are not limited in this embodiment. Optionally, if a quantity or locations of the third audio devices are different, manners of determining whether the third audio device is the target audio device are different, and audio device identification screens may be different.

S2502: The electronic device receives a feedback instruction input by the user, where the feedback instruction is used to determine whether the third audio device is the target audio device.

With reference to the scenario shown in FIG. 6, an example in which there are three third audio devices is used in the following to describe the audio device identification screen, but this is not limited. In FIG. 6, the three third audio devices include the speaker a, the speaker b, and the speaker c.

Optionally, in an example, the at least one third audio device on the audio device identification screen is sequentially lit, and the user sequentially determines whether the indicator-on third audio device is the target audio device.

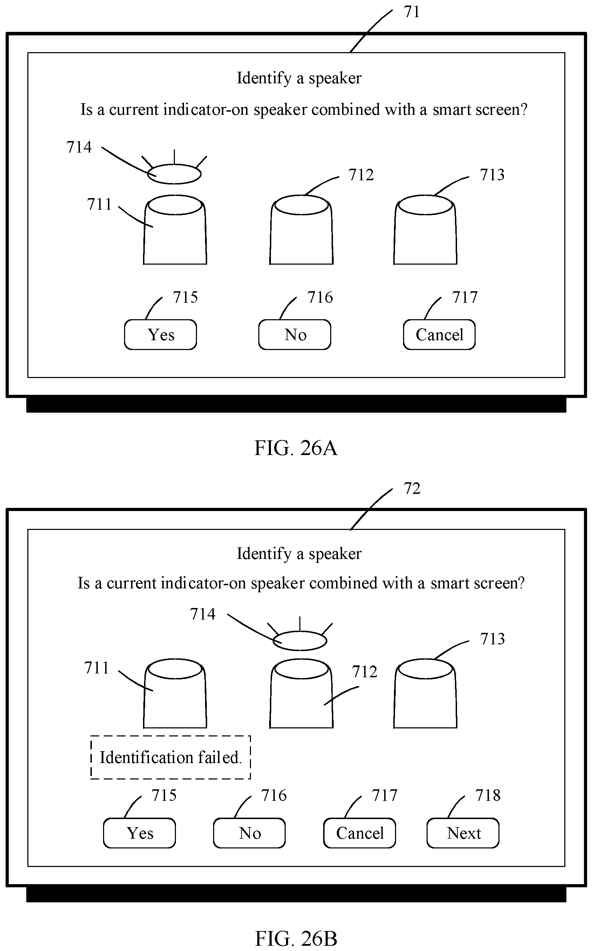

As shown in FIG. 26A, an audio device identification screen 71 includes a speaker pattern 711 to a speaker pattern 713, a pattern 714, a yes button 715, a no button 716, a cancel button 717, and guide information. For example, the guide information includes: "Identify a speaker" and "Is a current indicator-on speaker combined with a smart screen?". The speaker pattern 711 to the speaker pattern 713 indicate that there are three third audio devices in an environment. The pattern 714 indicates that one speaker is currently lit on. The pattern 714 and the guide information may be used to guide the user to determine whether the current indicator-on speaker is the target audio device.

Optionally, the user may perform an operation on the cancel button 717 to input a device identification cancel instruction. Correspondingly, the smart screen ends the self-networking process in response to the device identification cancel instruction.

It is assumed that the current indicator-on speaker is the speaker c, and the user determines not to establish stereo with the smart screen. The user may tap the no button 716 to input a feedback instruction, indicating that the current indicator-on speaker is not the target audio device. Correspondingly, the smart screen determines, according to the feedback instruction, that the current indicator-on speaker is not the target audio device. The audio device identification screen 71 is changed to an audio device identification screen 72, as shown in FIG. 26B. The user continues to be guided to determine whether a 2^{nd} third audio device is the target audio device. Optionally, to clearly display a quantity of the target audio devices determined by the user, a third audio device that is determined by the user and that is not the target audio device may not be displayed on the audio device identification screen 72. For example, the speaker pattern 711 is not displayed.

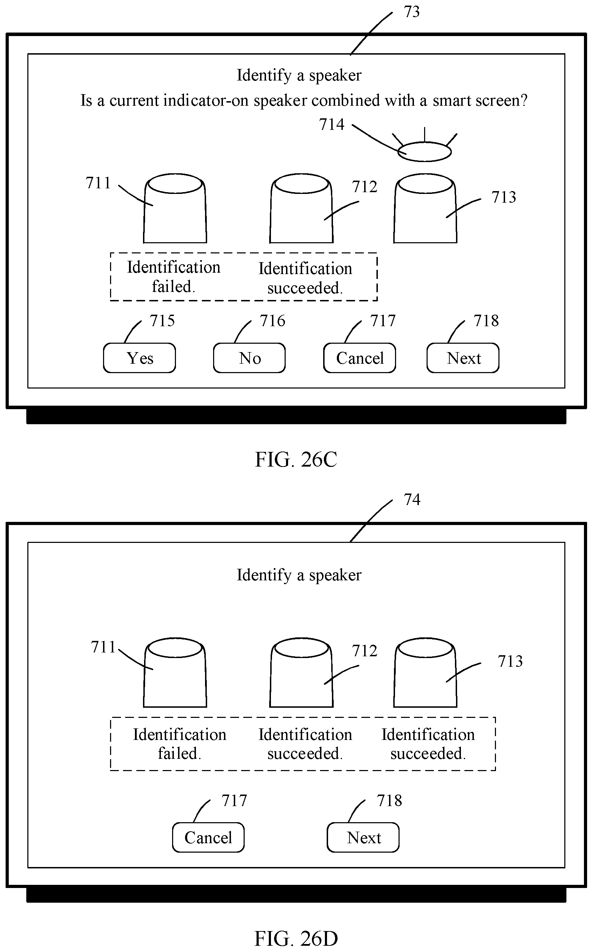

It is assumed that the current indicator-on speaker is changed to the speaker a, and the user determines to establish stereo with the smart screen. The user may tap the yes button 715 to input a feedback instruction, indicating that the current indicator-on speaker is the target audio device. Correspondingly, the smart screen determines a 1^{st} target audio device according to the feedback instruction. The audio device identification screen 72 is changed to an audio device identification screen 73, as shown in FIG. 26C. The user continues to be guided to determine whether a 3^{rd} third audio device is the target audio device.

Optionally, the audio device identification screen 72 includes a next button 718. The user may perform an operation on the next button 718 to input a device identification determining instruction. Correspondingly, the smart screen determines the quantity of target audio devices in response to the device identification determining instruction, and continues the self-networking process.

As shown in FIG. 26C, it is assumed that the current indicator-on speaker is changed to the speaker b, and the user determines to establish stereo with the smart screen. The user may tap the yes button 715 to input a feedback instruction, indicating that the current indicator-on speaker is the target audio device. Correspondingly, the smart screen determines a 2^{nd} target audio device according to the feedback instruction. The audio device identification screen 73 is changed to an audio device identification screen 74, as shown in FIG. 26D.

In the foregoing process, if there is one third audio device, the electronic device sends indicator-on indication information to the third audio device. If there are a plurality of third audio devices, the electronic device sequentially sends indicator-on indication information to the third audio devices. A sequence of sending the indicator-on indication information to the plurality of third audio devices is not limited in this embodiment. The indicator-on indication information indicates the third audio device to turn on an indicator. Optionally, the indicator-on indication information may be sent by using the Bluetooth broadcast message or the BLE connection.

Optionally, after the electronic device determines each target audio device, the method may further include:
The electronic device outputs prompt information, where the prompt information indicates whether the electronic device successfully determines the target audio device.

For example, for the prompt information, refer to the text in dashed boxes in FIG. 26B to FIG. 26D.

Optionally, in another example, because the electronic device may learn of a location of the third audio device by using the same-room detection mechanism, the audio device identification screen may display the location relationship between the third audio device and the electronic device. The electronic device controls the third audio devices to turn on the indicators. For a non-target audio device in the third audio device, the user may perform an operation on the audio device identification screen to light off the non-target audio device, to determine whether the third audio device is the target audio device.

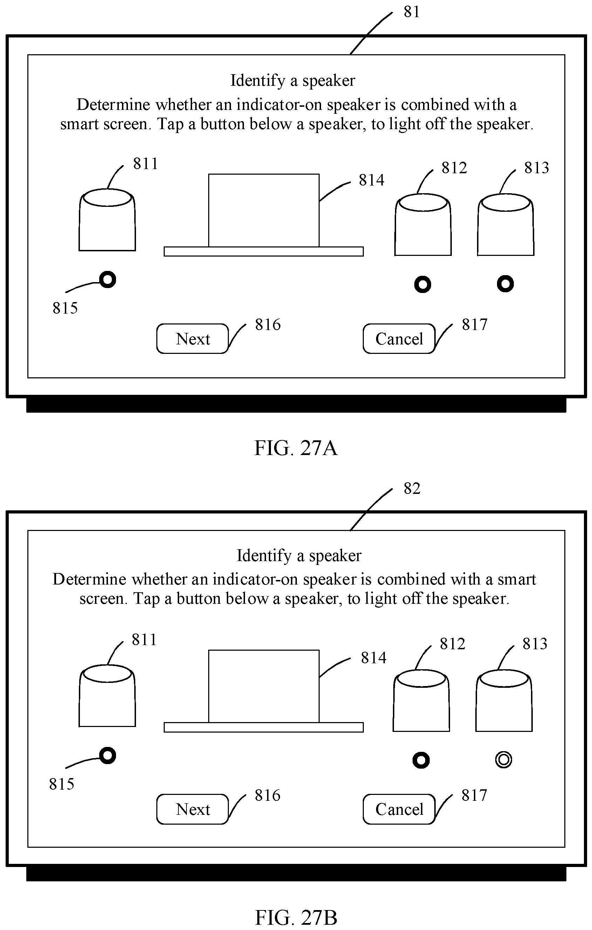

As shown in FIG. 27A, an audio device identification screen 81 includes a speaker pattern 811 to a speaker pattern 813, a smart screen pattern 814, a next button 816, a cancel button 817, and guide information. For example, the guide information includes: "Identify a speaker" and "Determine whether an indicator-on speaker is combined with a smart screen. Tap a button below a speaker, to light off the speaker". It may be learned that there is one speaker on the left side of the smart screen and there are two speakers on the right side. With reference to the scenario shown in FIG. 6, it may be learned that the speaker pattern 811 corresponds to the speaker a, the speaker pattern 812 corresponds to the speaker b, and the speaker pattern 813 corresponds to the speaker c. A control 815 is correspondingly located below each speaker pattern. The user may perform an operation on the control 815 to input a feedback instruction. Correspondingly, the electronic device receives the feedback instruction input by the user, controls a display status of the control 815, and indicates whether to light off the speaker. According to the location relationship between the speaker and the smart screen and the guide information, the user may be guided to light off an unnetworked third audio device, to determine the target audio device.

In the scenario shown in FIG. 6, the user networks the speaker a and the speaker b with the smart screen. The user may tap a control below the speaker pattern 813, input a feedback instruction, and light off the speaker c. The feedback instruction indicates that the third audio device is not the target audio device. Correspondingly, the smart screen changes the display status of the control below the speaker pattern 813 in response to the operation of the user, and the audio device identification screen 81 changes to an audio device identification screen 82, as shown in FIG. 27B.

It may be understood that, in the foregoing process, before displaying the audio device identification screen, the electronic device sends the indicator-on indication information to the third audio device, to light on the third audio device. After receiving the feedback instruction input by the user, the electronic device sends indicator-off indication information to the third audio device corresponding to the feedback instruction, to light off the third audio device. Optionally, the indicator-on indication information or the indicator-off indication information may be sent by using the Bluetooth broadcast message or the BLE connection.

Optionally, the user may perform an operation on the cancel button 817 to input a device identification cancel instruction. Correspondingly, the smart screen ends the self-networking process in response to the device identification cancel instruction.

Optionally, the user may perform an operation on the next button 816 to input a device identification determining instruction. Correspondingly, the smart screen determines the quantity of target audio devices in response to the device identification determining instruction, and continues the self-networking process.

S2503: If the quantity of target audio devices is one, the electronic device determines the sound channel corresponding to the target audio device.

S2504: If the quantity of target audio devices is greater than one, the electronic device obtains the location relationship between the plurality of target audio devices and the electronic device, and determines, based on the location relationship, a sound channel corresponding to each target audio device.

Optionally, in an implementation, the electronic device may determine a location relationship between each third audio device and the electronic device in the same-room detection mechanism, to further obtain the location relationship between the target audio device and the electronic device. For example, refer to S2403.

Optionally, in another implementation, in S2106, the electronic device determines the location relationship between the plurality of target audio devices and the electronic device by using a positioning technology. Principles are similar, and details are not described herein again.

It should be noted that, in this embodiment, when the electronic device guides the user to determine whether the third audio device is the target audio device, the electronic device may control the third audio device to perform another action. This is not limited in this embodiment. For example, the third audio device may be controlled to play a sound.

Optionally, after S2504, the stereo networking method provided in this embodiment may further include:
The electronic device displays a sound channel determining screen, where the sound channel determining screen is used to guide the user to determine the sound channel corresponding to the target audio device.

The electronic device receives a sound channel determining instruction input by the user, where the sound channel determining instruction is used to determine whether the sound channel corresponding to the target audio device is correct.

Refer to S2107 and S2108 in the embodiment shown in FIG. 21. Principles are similar, and details are not described herein again.

For an implementation in which the electronic device determines the target networking mode in S1603, refer to the related descriptions in the embodiment shown in FIG. 21. Details are not described herein again.

It may be understood that, to implement the foregoing functions, the electronic device and the audio device include corresponding hardware and/or software modules for performing each function. Algorithm steps in the examples described with reference to embodiments disclosed in this specification can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application with reference to embodiments, but it should not be considered that the implementation goes beyond the scope of this application.

In embodiments of this application, the electronic device and the audio device may be divided into functional modules based on the foregoing method examples. For example, each functional module may be obtained through division based on each corresponding function, or two or more functions may be integrated into one module. It should be noted that, in embodiments of this application, division into the modules is an example and is merely for logical functions, and may be division otherwise in practice. It should be noted that names of the modules in embodiments of this application are examples, and the modules can be named without limitation in practice.

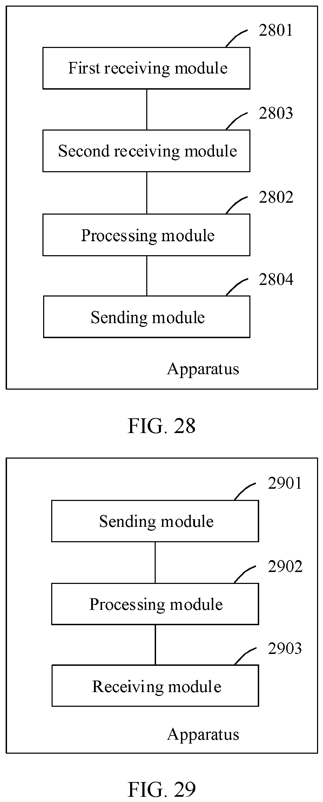

FIG. 28 is a schematic diagram of a structure of an apparatus according to an embodiment of this application. The apparatus may be applied to an electronic device. As shown in FIG. 28, the apparatus includes:
a first receiving module 2801, configured to receive a Bluetooth broadcast message separately sent by at least one audio device, where the Bluetooth broadcast message indicates whether the audio device has established stereo and whether the audio device is allowed to establish stereo; and
a processing module 2802, configured to: when determining, based on the at least one Bluetooth broadcast message, that a second audio device available for establishing stereo exists in the at least one audio device, display a stereo establishment pop-up box, where the stereo establishment pop-up box is used to ask a user whether to allow the electronic device to establish stereo or re-establish stereo.

Optionally, the apparatus further includes a second receiving module 2803.

The second receiving module 2803 is configured to receive a stereo establishment instruction input by the user, where the stereo establishment instruction instructs the electronic device to establish stereo or re-establish stereo.

The processing module 2802 is further configured to determine a target networking mode, at least one target audio device, and a sound channel corresponding to each target audio device, where the target audio device is an audio device that is determined by the user in the second audio device and that establishes stereo with the electronic device, and the target networking mode is a networking mode in which the electronic device and the at least one target audio device establish stereo.

The processing module 2802 is further configured to establish a Wi-Fi connection to each target audio device.

Optionally, the networking mode includes:
a first networking mode, where in the first networking mode, the electronic device establishes stereo with one target audio device, and a sound channel of the one target audio device is a heavy bass sound channel;
a second networking mode, where in the second networking mode, the electronic device establishes stereo with two target audio devices, and sound channels of the two target audio devices are a left sound channel and a right sound channel respectively;
a third networking mode, where in the third networking mode, the electronic device establishes stereo with two target audio devices, and sound channels of the two target audio devices are a left surround sound channel and a right surround sound channel respectively; and
a fourth networking mode, where in the fourth networking mode, the electronic device establishes stereo with four target audio devices, and sound channels of the four target audio devices are a left sound channel, a right sound channel, a left surround sound channel, and a right surround sound channel respectively.

Optionally, the processing module 2802 is configured to:
obtain the target networking mode input by the user;
determine a quantity of the target audio devices and a preset determining sequence of the at least one target audio device based on the target networking mode;
send to-be-networked notification information to the second audio device, where the to-be-networked notification information indicates the second audio device to detect whether the user performs a preset operation on a target button on the second audio device;
display a first audio device identification screen, where the first audio device identification screen is used to guide the user to sequentially perform, according to the preset determining sequence, the preset operation on the target button on the at least one target audio device;
receive device identification information sequentially sent by the at least one second audio device according to the preset determining sequence, where the device identification information indicates that the second audio device is the target audio device; and
determine the at least one target audio device based on the device identification information, and determine, according to the preset determining sequence, the sound channel corresponding to each target audio device.

Optionally, the preset determining sequence includes any one of the following:
when there are two target audio devices, sequentially determining the target audio devices of the left sound channel and the right sound channel;
when there are two target audio devices, sequentially determining the target audio devices of the left surround sound channel and the right surround sound channel; or
when there are four target audio devices, sequentially determining the target audio devices of the left sound channel, the right sound channel, the left surround sound channel, and the right surround sound channel.

Optionally, the processing module 2802 is further configured to:
output first prompt information, where the first prompt information indicates that the electronic device successfully determines the at least one target audio device.

Optionally, the processing module 2802 is configured to:
send to-be-networked notification information to the second audio device, where the to-be-networked notification information indicates the second audio device to detect whether the user performs a preset operation on a target button on the second audio device;
display a second audio device identification screen, where the second audio device identification screen is used to guide the user to perform the preset operation on the target button on the second audio device;
receive device identification information separately sent by the at least one second audio device, where the device identification information indicates that the second audio device is the target audio device; and
determine the at least one target audio device based on the device identification information, and determine the sound channel corresponding to each target audio device.

Optionally, the processing module 2802 is configured to:
if the quantity of the target audio devices is one, determine that the target audio device corresponds to a heavy bass sound channel; or
if the quantity of the target audio devices is greater than one, determine a location relationship between each target audio device and the electronic device by using a positioning technology, and determine, based on the location relationship, the sound channel corresponding to each target audio device.

Optionally, the processing module 2802 is configured to:
send ultrasonic detection information to the target audio device;
receive an ultrasonic signal sent by the target audio device; and
determine the location relationship between the target audio device and the electronic device based on the ultrasonic signal.

Optionally, after the determining the at least one target audio device based on the device identification information, the processing module 2802 is further configured to:
output second prompt information, where the second prompt information indicates that the electronic device successfully determines the at least one target audio device.

Optionally, the apparatus further includes a sending module 2804. The sending module 2804 is configured to:
send a BLE broadcast message to the second audio device, where the BLE broadcast message includes the to-be-networked notification information.

Optionally, the target button is any one of the following: a mute button, a play button, or a pause button.

Optionally, the apparatus further includes a sending module 2804.

The sending module 2804 is configured to: before the displaying a stereo establishment pop-up box, send a first ultrasonic signal to the second audio device.

The first receiving module 2801 is further configured to receive a second ultrasonic signal sent by at least one third audio device in the second audio device.

Optionally, the processing module 2802 is further configured to:
determine a location relationship between the third audio device and the electronic device based on the second ultrasonic signal.

Optionally, the processing module 2802 is configured to:
display a third audio device identification screen, where the third audio device identification screen includes the at least one third audio device, and the third audio device identification screen is used to guide the user to determine whether the third audio device is the target audio device;
receive a feedback instruction input by the user, where the feedback instruction is used to determine whether the third audio device is the target audio device; and
determine the at least one target audio device according to the feedback instruction, and determine the sound channel corresponding to each target audio device.

Optionally, the third audio device identification screen further indicates the location relationship between the at least one third audio device and the electronic device.

Optionally, the processing module 2802 is configured to:
if the quantity of the target audio devices is one, determine that the target audio device corresponds to a heavy bass sound channel; or
if the quantity of the target audio devices is greater than one, obtain a location relationship between each target audio device and the electronic device, and determine, based on the location relationship, the sound channel corresponding to each target audio device.

Optionally, the processing module 2802 is configured to:
obtain the target networking mode input by the user.

Optionally, the processing module 2802 is configured to:
if the quantity of the target audio devices is one, determine that the target networking mode is the first networking mode, where in the first networking mode, the sound channel of the target audio device is the heavy bass sound channel; or
if the quantity of the target audio devices is greater than one, determine the target networking mode based on the location relationship between each target audio device and the electronic device.

Optionally, the processing module 2802 is further configured to display a sound channel determining screen, where the sound channel determining screen is used to guide the user to determine whether the sound channel corresponding to the target audio device is correct.

The second receiving module 2803 is further configured to receive a sound channel determining instruction input by the user, where the sound channel determining instruction is used to determine whether the sound channel corresponding to the target audio device is correct.

Optionally, the processing module 2802 is further configured to: before the establishing a Wi-Fi connection to each target audio device, when determining that no WLAN is configured for the target audio device, configure a target WLAN for the target audio device, where the target WLAN is a WLAN that has been configured for the electronic device.

Optionally, the processing module 2802 is configured to:
display an audio device network configuration screen, where the audio device network configuration screen is used to configure the target WLAN for the target audio device;
receive a network connection operation of the user; and
control, in response to the network connection operation, the target audio device to access the target WLAN.

Optionally, the Bluetooth broadcast message includes networking identification information, networking indication information, and a product model of the audio device, the networking identification information indicates whether the audio device has established stereo, and the networking indication information indicates whether the audio device is allowed to establish stereo.

Optionally, the processing module 2802 is configured to:
if the networking indication information in the Bluetooth broadcast message indicates that the audio device is allowed to establish stereo, determine that the second audio device exists.

Optionally, the processing module 2802 is further configured to: before the determining that the second audio device exists, determine that a signal strength of the Bluetooth broadcast message is greater than a preset threshold.

Optionally, the processing module 2802 is further configured to: before the determining that the second audio device exists, determine that the electronic device does not currently perform a projection service.

Optionally, the Bluetooth broadcast message further includes network configuration information, and the network configuration information indicates whether a WLAN has been configured for the audio device.

The apparatus provided in this embodiment is configured to implement operations performed by the electronic device in the stereo networking method provided in the foregoing method embodiment. Technical principles and technical effects are similar, and details are not described herein again.

FIG. 29 is a schematic diagram of another structure of an apparatus according to an embodiment of this application. The apparatus may be applied to an audio device. As shown in FIG. 29, the apparatus includes:
a processing module 2902, configured to generate a Bluetooth broadcast message, where the Bluetooth broadcast message indicates whether the audio device has established stereo and whether the audio device is allowed to establish stereo; and
a sending module 2901, configured to send the Bluetooth broadcast message to an electronic device.

Optionally, the processing module 2902 is further configured to establish a Wi-Fi connection to the electronic device.

Optionally, the apparatus further includes a receiving module 2903.

The receiving module 2903 is configured to: before establishing the Wi-Fi connection to the electronic device, receive to-be-networked notification information sent by the electronic device, where the to-be-networked notification information indicates to detect whether a user performs a preset operation on a target button.

The sending module 2901 is configured to: if detecting that the user performs the preset operation on the target button, send device identification information to the electronic device, where the device identification information indicates that the audio device is a target audio device that establishes stereo with the electronic device.

Optionally, the sending module 2901 is configured to: receive a BLE broadcast message sent by the electronic device, where the BLE broadcast message includes the to-be-networked notification information.

Optionally, the target button is any one of the following: a mute button, a play button, or a pause button.

Optionally, the apparatus further includes a receiving module 2903.

The receiving module 2903 is configured to: before establishing the Wi-Fi connection to the electronic device, receive ultrasonic detection information sent by the electronic device.

The sending module 2901 is further configured to send an ultrasonic signal to the electronic device.

Optionally, the apparatus further includes a receiving module 2903.

The receiving module 2903 is configured to: before establishing the Wi-Fi connection to the electronic device, receive a first ultrasonic signal sent by the electronic device.

The sending module 2901 is further configured to send a second ultrasonic signal to the electronic device.

Optionally, the Bluetooth broadcast message includes networking identification information, networking indication information, and a product model of the audio device, the networking identification information indicates whether the audio device has established stereo, and the networking indication information indicates whether the audio device is allowed to establish stereo.

Optionally, the Bluetooth broadcast message further includes network configuration information, and the network configuration information indicates whether a WLAN has been configured for the audio device.

The apparatus provided in this embodiment is configured to implement operations performed by the audio device in the stereo networking method provided in the foregoing method embodiment. Technical principles and technical effects are similar, and details are not described herein again.

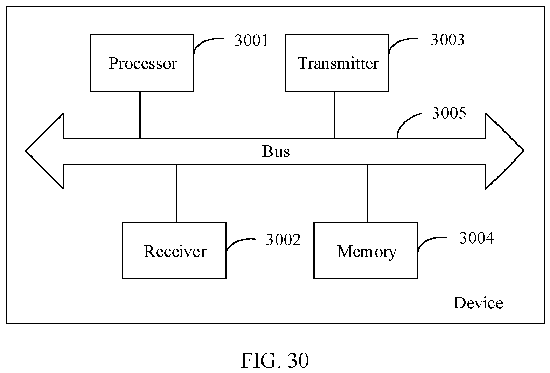

FIG. 30 shows a structure of a device according to an embodiment of this application. The device may be an electronic device or an audio device. The device includes a processor 3001, a receiver 3002, a transmitter 3003, a memory 3004, and a bus 3005. The processor 3001 includes one or more processing cores. The processor 3001 runs a software program and a module, to perform various function applications and process information. The receiver 3002 and the transmitter 3003 may be implemented as a communication component, and the communication component may be a baseband chip. The memory 3004 is connected to the processor 3001 through the bus 3005. The memory 3004 may be configured to store at least one program instruction. The processor 3001 is configured to execute the at least one program instruction, to implement the technical solution in the foregoing embodiment. Implementation principles and technical effects thereof are similar to those of the foregoing method embodiments, and details are not described herein again.

After the device is powered on, the processor may read the software program in the memory, interpret and execute instructions of the software program, and process the data of the software program. When the processor needs to send data through the antenna, after performing baseband processing on the to-be-sent data, the processor outputs a baseband signal to a control circuit in the control circuit. The control circuit performs radio frequency processing on the baseband signal and then sends a radio frequency signal to the outside in the form of electromagnetic wave by using the antenna. When data is sent to the device, the control circuit receives a radio frequency signal by using the antenna, converts the radio frequency signal into a baseband signal, and outputs the baseband signal to the processor. The processor converts the baseband signal into data, and processes the data.

A person skilled in the art may understand that for ease of description, FIG. 30 shows only one memory and one processor. In an actual device, there may be a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process communication data, and the central processing unit is mainly configured to execute a software program and process data of the software program. A person skilled in the art may understand that the baseband processor and the central processing unit may be integrated into one processor, or may be independent processors, and are connected through a bus or the like. A person skilled in the art may understand that the device may include a plurality of baseband processors to adapt to different network standards, and the device may include a plurality of central processing units to enhance processing capabilities of the device, and components of the device may be connected through various buses. The baseband processor may alternatively be expressed as a baseband processing circuit or a baseband processing chip. The central processing unit may alternatively be expressed as a central processing circuit or a central processing chip. The function of processing the communication protocol and the communication data may be built in the processor, or may be stored in the memory in a form of software program, and the processor executes the software program to implement a baseband processing function. The memory may be integrated into the processor, or may be independent of the processor. The memory includes a cache Cache, and may store frequently accessed data/instructions.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by a combination of hardware and software modules in the processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be configured to carry or store expected program code in a form of instruction or data structure and that can be accessed by a computer, but is not limited thereto.

The memory in embodiments of this application may alternatively be a circuit or any other apparatus that can implement a storage function, and is configured to store program instructions and/or data. All or some of the methods provided in embodiments of this application may be performed by using software, hardware, firmware, or any combination thereof. When software is used to implement the embodiments, all or some of embodiments may be implemented in a form of computer program product. The computer program product includes one or more computer instructions. When the computer program instructions are loaded and executed on a computer, all or some procedures or functions in embodiments of this application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave). The computer-readable storage medium may be any usable medium accessible by the computer, or a data storage device like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, the SSD), or the like.

An embodiment of this application provides a computer program product. When the computer program product runs on a device, the device is enabled to perform the technical solutions in the foregoing embodiments. Implementation principles and technical effects thereof are similar to those of the foregoing related embodiments, and details are not described herein again. The device may be an electronic device or an audio device.

An embodiment of this application provides a computer-readable storage medium. The computer-readable storage medium stores program instructions. When the program instructions are executed by a device, the device is enabled to perform the technical solutions in the foregoing embodiments. Implementation principles and technical effects thereof are similar to those of the foregoing related embodiments, and details are not described herein again. The device may be an electronic device or an audio device.

In conclusion, the foregoing embodiments are merely intended for describing the technical solutions of this application instead of limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A stereo networking method, applied to an electronic device, comprising:
receiving a Bluetooth broadcast message separately sent by at least one audio device, wherein the Bluetooth broadcast message indicates whether the audio device has established stereo and whether the audio device is allowed to establish stereo; and
when determining, based on the at least one Bluetooth broadcast message, that a second audio device available for establishing stereo exists in the at least one audio device, displaying a stereo establishment pop-up box, wherein the stereo establishment pop-up box is used to ask a user whether to allow the electronic device to establish stereo or re-establish stereo.

2. The method according to claim 1, further comprising:
receiving a stereo establishment instruction input by the user, wherein the stereo establishment instruction instructs the electronic device to establish stereo or re-establish stereo;
determining a target networking mode, at least one target audio device, and a sound channel corresponding to each target audio device, wherein the target audio device is an audio device that is determined by the user in the second audio device and that establishes stereo with the electronic device, and the target networking mode is a networking mode in which the electronic device and the at least one target audio device establish stereo; and
establishing a Wireless Fidelity Wi-Fi connection to each target audio device.

3. The method according to claim 2, wherein the networking mode comprises:
a first networking mode, wherein in the first networking mode, the electronic device establishes stereo with one target audio device, and a sound channel of the one target audio device is a heavy bass sound channel;
a second networking mode, wherein in the second networking mode, the electronic device establishes stereo with two target audio devices, and sound channels of the two target audio devices are a left sound channel and a right sound channel respectively;
a third networking mode, wherein in the third networking mode, the electronic device establishes stereo with two target audio devices, and sound channels of the two target audio devices are a left surround sound channel and a right surround sound channel respectively; and
a fourth networking mode, wherein in the fourth networking mode, the electronic device establishes stereo with four target audio devices, and sound channels of the four target audio devices are a left sound channel, a right sound channel, a left surround sound channel, and a right surround sound channel respectively.

4. The method according to claim 2 or 3, wherein the determining a target networking mode, at least one target audio device, and a sound channel corresponding to each target audio device comprises:
obtaining the target networking mode input by the user;
determining a quantity of the target audio devices and a preset determining sequence of the at least one target audio device based on the target networking mode;
sending to-be-networked notification information to the second audio device, wherein the to-be-networked notification information indicates the second audio device to detect whether the user performs a preset operation on a target button on the second audio device;
displaying a first audio device identification screen, wherein the first audio device identification screen is used to guide the user to sequentially perform, according to the preset determining sequence, the preset operation on the target button on the at least one target audio device;
receiving device identification information sequentially sent by the at least one second audio device according to the preset determining sequence, wherein the device identification information indicates that the second audio device is the target audio device; and
determining the at least one target audio device based on the device identification information, and determining, according to the preset determining sequence, the sound channel corresponding to each target audio device.

5. The method according to claim 4, wherein the preset determining sequence comprises any one of the following:
when there are two target audio devices, sequentially determining the target audio devices of the left sound channel and the right sound channel;
when there are two target audio devices, sequentially determining the target audio devices of the left surround sound channel and the right surround sound channel; or
when there are four target audio devices, sequentially determining the target audio devices of the left sound channel, the right sound channel, the left surround sound channel, and the right surround sound channel.

6. The method according to claim 4, further comprising:
outputting first prompt information, wherein the first prompt information indicates that the electronic device successfully determines the at least one target audio device.

7. The method according to claim 2 or 3, wherein the determining at least one target audio device and a sound channel corresponding to each target audio device comprises:
sending to-be-networked notification information to the second audio device, wherein the to-be-networked notification information indicates the second audio device to detect whether the user performs a preset operation on a target button on the second audio device;
displaying a second audio device identification screen, wherein the second audio device identification screen is used to guide the user to perform the preset operation on the target button on the second audio device;
receiving device identification information separately sent by the at least one second audio device, wherein the device identification information indicates that the second audio device is the target audio device; and
determining the at least one target audio device based on the device identification information, and determining the sound channel corresponding to each target audio device.

8. The method according to claim 7, wherein the determining a sound channel corresponding to each target audio device comprises:
if the quantity of the target audio devices is one, determining that the target audio device corresponds to a heavy bass sound channel; or
if the quantity of the target audio devices is greater than one, determining a location relationship between each target audio device and the electronic device by using a positioning technology, and determining, based on the location relationship, the sound channel corresponding to each target audio device.

9. The method according to claim 8, wherein the determining a location relationship between each target audio device and the electronic device by using a positioning technology comprises:
sending ultrasonic detection information to the target audio device;
receiving an ultrasonic signal sent by the target audio device; and
determining the location relationship between the target audio device and the electronic device based on the ultrasonic signal.

10. The method according to claim 7, wherein after the determining the at least one target audio device based on the device identification information, the method further comprises:
outputting second prompt information, wherein the second prompt information indicates that the electronic device successfully determines the at least one target audio device.

11. The method according to any one of claims 4 to 10, wherein the sending to-be-networked notification information to the second audio device comprises:
sending a Bluetooth low energy BLE broadcast message to the second audio device, wherein the BLE broadcast message comprises the to-be-networked notification information.

12. The method according to any one of claims 4 to 10, wherein the target button is any one of the following: a mute button, a play button, or a pause button.

13. The method according to claim 2 or 3, wherein before the displaying a stereo establishment pop-up box, the method further comprises:
sending a first ultrasonic signal to the second audio device; and
receiving a second ultrasonic signal sent by at least one third audio device in the second audio device.

14. The method according to claim 13, further comprising:
determining a location relationship between the third audio device and the electronic device based on the second ultrasonic signal.

15. The method according to claim 13 or 14, wherein the determining at least one target audio device and a sound channel corresponding to each target audio device comprises:
displaying a third audio device identification screen, wherein the third audio device identification screen comprises the at least one third audio device, and the third audio device identification screen is used to guide the user to determine whether the third audio device is the target audio device;
receiving a feedback instruction input by the user, wherein the feedback instruction is used to determine whether the third audio device is the target audio device; and
determining the at least one target audio device according to the feedback instruction, and determining the sound channel corresponding to each target audio device.

16. The method according to claim 15, wherein the third audio device identification screen further indicates the location relationship between the at least one third audio device and the electronic device.

17. The method according to claim 15, wherein the determining a sound channel corresponding to each target audio device comprises:
if the quantity of the target audio devices is one, determining that the target audio device corresponds to a heavy bass sound channel; or
if the quantity of the target audio devices is greater than one, obtaining a location relationship between each target audio device and the electronic device, and determining, based on the location relationship, the sound channel corresponding to each target audio device.

18. The method according to any one of claims 7 to 17, wherein the determining a target networking mode comprises:
obtaining the target networking mode input by the user.

19. The method according to any one of claims 8, 9, and 17, wherein the determining a target networking mode comprises:
if the quantity of the target audio devices is one, determining that the target networking mode is the first networking mode, wherein in the first networking mode, the sound channel of the target audio device is the heavy bass sound channel; or
if the quantity of the target audio devices is greater than one, determining the target networking mode based on the location relationship between each target audio device and the electronic device.

20. The method according to any one of claims 7 to 19, further comprising:
displaying a sound channel determining screen, wherein the sound channel determining screen is used to guide the user to determine whether the sound channel corresponding to the target audio device is correct; and
receiving a sound channel determining instruction input by the user, wherein the sound channel determining instruction is used to determine whether the sound channel corresponding to the target audio device is correct.

21. The method according to any one of claims 2 to 20, wherein before the establishing a Wi-Fi connection to each target audio device, the method further comprises:
when determining that no wireless local area network WLAN is configured for the target audio device, configuring a target WLAN for the target audio device, wherein the target WLAN is a WLAN that has been configured for the electronic device.

22. The method according to claim 21, wherein the configuring a target WLAN for the target audio device comprises:
displaying an audio device network configuration screen, wherein the audio device network configuration screen is used to configure the target WLAN for the target audio device;
receiving a network connection operation of the user; and
controlling, in response to the network connection operation, the target audio device to access the target WLAN.

23. The method according to any one of claims 1 to 22, wherein the Bluetooth broadcast message comprises networking identification information, networking indication information, and a product model of the audio device, the networking identification information indicates whether the audio device has established stereo, and the networking indication information indicates whether the audio device is allowed to establish stereo.

24. The method according to claim 23, wherein the determining, based on the at least one Bluetooth broadcast message, that a second audio device available for establishing stereo exists in the at least one audio device comprises:
if the networking indication information in the Bluetooth broadcast message indicates that the audio device is allowed to establish stereo, determining that the second audio device exists.

25. The method according to claim 23, wherein before the determining that the second audio device exists, the method further comprises:
determining that a signal strength of the Bluetooth broadcast message is greater than a preset threshold.

26. The method according to claim 23, wherein before the determining that the second audio device exists, the method further comprises:
determining that the electronic device does not currently perform a projection service.

27. The method according to any one of claims 1 to 26, wherein the Bluetooth broadcast message further comprises network configuration information, and the network configuration information indicates whether a WLAN has been configured for the audio device.

28. A stereo networking method, applied to an audio device, comprising:
generating a Bluetooth broadcast message, wherein the Bluetooth broadcast message indicates whether the audio device has established stereo and whether the audio device is allowed to establish stereo; and
sending the Bluetooth broadcast message to an electronic device.

29. The method according to claim 28, further comprising:
establishing a Wireless Fidelity Wi-Fi connection to the electronic device.

30. The method according to claim 29, wherein before the establishing a Wi-Fi connection to the electronic device, the method further comprises:
receiving to-be-networked notification information sent by the electronic device, wherein the to-be-networked notification information indicates to detect whether a user performs a preset operation on a target button; and
if detecting that the user performs the preset operation on the target button, sending device identification information to the electronic device, wherein the device identification information indicates that the audio device is a target audio device that establishes stereo with the electronic device.

31. The method according to claim 30, wherein the receiving to-be-networked notification information sent by the electronic device comprises:
receiving a Bluetooth low energy BLE broadcast message sent by the electronic device, wherein the BLE broadcast message comprises the to-be-networked notification information.

32. The method according to claim 30 or 31, wherein the target button is any one of the following: a mute button, a play button, or a pause button.

33. The method according to claim 29, wherein before the establishing a Wi-Fi connection to the electronic device, the method further comprises:
receiving ultrasonic detection information sent by the electronic device; and
sending an ultrasonic signal to the electronic device.

34. The method according to claim 29, wherein before the establishing a Wi-Fi connection to the electronic device, the method further comprises:
receiving a first ultrasonic signal sent by the electronic device; and
sending a second ultrasonic signal to the electronic device.

35. The method according to any one of claims 28 to 34, wherein the Bluetooth broadcast message comprises networking identification information, networking indication information, and a product model of the audio device, the networking identification information indicates whether the audio device has established stereo, and the networking indication information indicates whether the audio device is allowed to establish stereo.

36. The method according to any one of claims 28 to 34, wherein the Bluetooth broadcast message further comprises network configuration information, and the network configuration information indicates whether a wireless local area network WLAN has been configured for the audio device.

37. An electronic device, wherein the electronic device comprises a processor, and the processor is configured to: couple to a memory, read instructions in the memory, and enable, according to the instructions, the electronic device to perform the method according to any one of claims 1 to 27.

38. An audio device, wherein the audio device comprises a processor, and the processor is configured to: couple to a memory, read instructions in the memory, and enable, according to the instructions, the audio device to perform the method according to any one of claims 28 to 36.

39. A computer-readable storage medium, wherein the computer-readable storage medium stores computer instructions, and when the computer instructions are run on a device, the device is enabled to perform the method according to any one of claims 1 to 27 or the method according to claims 28 to 36.
